(19) Europäisches Patentamt

European Patent Office

Office européen des brevets

(11) **EP 4 019 127 A1**

(12) **EUROPEAN PATENT APPLICATION**

(43) Date of publication:
**29.06.2022 Bulletin 2022/26**

(21) Application number: **20217455.3**

(22) Date of filing: **28.12.2020**

(51) International Patent Classification (IPC):
***B01J 23/72*** (2006.01)    ***B01J 27/12*** (2006.01)
***B01J 29/76*** (2006.01)    ***B01J 35/00*** (2006.01)
***B01J 37/00*** (2006.01)    ***B01J 37/03*** (2006.01)
***B01J 37/10*** (2006.01)

(52) Cooperative Patent Classification (CPC):
**B01J 37/031; B01J 23/72; B01J 27/12;**
**B01J 29/763; B01J 35/0013; B01J 35/002;**
**B01J 37/0018; B01J 37/10;** B01J 35/1014;
B01J 35/1019; B01J 35/1023; B01J 37/30

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **BASF CORPORATION
Florham Park, NJ 07932 (US)**

(72) Inventor: **The designation of the inventor has not
yet been filed**

(74) Representative: **Finnegan Europe LLP
1 London Bridge
London SE1 9BG (GB)**

(54) **FLOURIDE-CONTAINING SMALL-PORE ZEOLITE COMPOSITIONS**

(57)    Disclosed herein are small-pore zeolites comprising aluminum, silicon, and fluoride, methods of preparing the same, and methods of reducing nitrogen oxides using the same.

**Description**

Disclosed herein are small pore zeolites comprising aluminum, silicon, and fluoride, methods of preparing the same, and methods of reducing nitrogen oxides ($NO_x$) using the same.

Internal combustion engines, combustion installations, and nitric acid production plants emit nitrogen oxide ($NO_x$)-containing gas mixtures, generating atmospheric pollution that may contribute to environmental health hazards such as smog and acid rain. Various methods may be employed to reduce $NO_x$-associated atmospheric pollution, including the catalytic reduction of nitrogen oxides. For example, carbon monoxide, hydrogen, or a lower hydrocarbon may be used as a reducing agent in a nonselective $NO_x$ reduction process. Alternatively, ammonia or an ammonia precursor (such as, e.g., urea) may be used as a reducing agent in a selective $NO_x$ reduction process referred to as Selective Catalytic Reduction (SCR). In SCR, a high degree of nitrogen oxide removal can be achieved using a small amount of a reducing agent.

Molecular sieves (such as, e.g., zeolites) have been employed as catalysts for SCR and other reactions, including, e.g., methanol-to-olefins (MTO) reactions. Zeolites include aluminosilicate materials having substantially regular porous structures, with typical pore sizes ranging from 3 Å to 10 Å in diameter, that may be useful as catalysts. Illustratively, certain zeolites having 8-ring pore openings and double-six ring secondary building units (such as, e.g., small-pore zeolites) have been employed as SCR catalysts. One non-limiting example of a zeolite framework capable of selectively catalyzing nitrogen oxide reduction is chabazite (CHA), a small-pore zeolite structure with 8 membered-ring pore openings accessible through its 3-dimensional porosity. The connection of double 6-ring building units by 4 rings gives chabazite a cage-like structure. AEI and AFX type zeolites are alternative, non-limiting examples of small-pore caged zeolites that may be useful as catalysts, including catalysts for the selective reduction of nitrogen oxides.

Small-pore zeolites may be synthesized using various approaches known in the art such as, e.g., employing hydroxide as a mineralizing agent at an alkaline pH or fluoride as a mineralizing agent at an acidic or near-neutral pH. The use of fluoride at an acidic or near-neutral pH may present significant process safety risks and impose high capital costs, limiting its application in large-scale industrial zeolite production.

Novel synthesis pathways and zeolite morphologies may result in small-pore zeolites with improved performance in SCR and/or other applications. The choice of zeolite synthesis pathway may affect the resulting zeolite's structure, stability, and/or activity. Illustratively, the distribution of aluminum (Al) atoms in a zeolite framework may affect the zeolite's hydrothermal stability and/or catalytic activity. Accordingly, there is a need for novel small-pore zeolites with altered aluminum distributions, as well as novel methods of producing the same. Additionally, there is a need for novel methods of producing small-pore zeolites using fluoride-based raw materials with improved process safety and/or reduced costs.

Disclosed herein are methods of preparing a small-pore zeolite using at least one fluoride source at a pH of at least 8.5.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the at least one fluoride source is used as a mineralizing agent.

In some embodiments, the at least one fluoride source is chosen from inorganic fluoride salts and organic structure directing agent fluorides. In some embodiments, the at least one fluoride source is chosen from alkali metal fluorides. In some embodiments, the at least one fluoride source is chosen from sodium fluoride, trimethyl adamantammonium fluoride, and mixtures of any of the preceding.

In some embodiments, the small-pore zeolite is characterized by a caged structure. In some embodiments, the small-pore zeolite is characterized by a chabazite structure.

In some embodiments, the small-pore zeolite is characterized by an average crystallite size of less than 3 $\mu$m. In some embodiments, the small-pore zeolite is characterized by an average crystallite size of less than 2 $\mu$m. In some embodiments, the small-pore zeolite is characterized by an average crystallite size of less than 1 $\mu$m.

In some embodiments, the small-pore zeolite is characterized by a mole ratio of $SiO_2$ to $Al_2O_3$ of less than 32.5. In some embodiments, the small-pore zeolite is characterized by a mole ratio of $SiO_2$ to $Al_2O_3$ of less than 30. In some embodiments, the small-pore zeolite is characterized by a mole ratio of $SiO_2$ to $Al_2O_3$ of less than 27.5. In some embodiments, the small-pore zeolite is characterized by a mole ratio of $SiO_2$ to $Al_2O_3$ of less than 22.5. In some embodiments, the small-pore zeolite is characterized by a mole ratio of $SiO_2$ to $Al_2O_3$ of less than 20. In some embodiments, the small-pore zeolite is characterized by a mole ratio of $SiO_2$ to $Al_2O_3$ of less than 17.5.

Disclosed herein are methods of preparing a small-pore zeolite comprising subjecting a composition to a thermal treatment, wherein the composition comprises at least one aluminum source, at least one silica source, at least one fluoride source, and at least one organic structure directing agent, and further wherein the mole ratio of OH to Si in the composition is at least 0.1.

In some embodiments, the mole ratio of OH to Si in the composition ranges from 0.1 to 0.75. In some embodiments, the mole ratio of OH to Si in the composition ranges from 0.15 to 0.65. In some embodiments, the mole ratio of OH to Si in the composition ranges from 0.1 to 0.35. In some embodiments, the mole ratio of OH to Si in the composition ranges from 0.15 to 0.3.

In some embodiments, the thermal treatment is performed at a pH of at least 8.5.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the at least one aluminum source is chosen from aluminum isopropoxide, aluminum hydroxide, and mixtures of any of the preceding.

In some embodiments, the at least one silica source is chosen from Ludox AS-40, sodium silicate, and mixtures of any of the preceding.

In some embodiments, the at least one fluoride source is chosen from inorganic fluoride salts and organic structure directing agent fluorides. In some embodiments, the at least one fluoride source is chosen from alkali metal fluorides. In some embodiments, the at least one fluoride source is chosen from sodium fluoride, trimethyl adamantammonium fluoride, and mixtures of any of the preceding.

In some embodiments, the at least one organic structure directing agent is trimethyl adamantammonium.

In some embodiments, the mole ratio of $H_2O$ to Si in the composition ranges from 10 to 50. In some embodiments, the mole ratio of $H_2O$ to Si in the composition ranges from 10 to 25. In some embodiments, the mole ratio of $H_2O$ to Si in the composition ranges from 10 to 20. In some embodiments, the mole ratio of $H_2O$ to Si in the composition ranges from 10 to 15.

In some embodiments, the composition further comprises at least one copper source.

In some embodiments, the at least one copper source is chosen from copper salts and copper complexes. In some embodiments, the at least one copper source is copper-tetraethylenepentamine.

In some embodiments, the mole ratio of copper to silicon (Cu/Si) in the composition is less than 0.1. In some embodiments, the mole ratio of copper to silicon (Cu/Si) in the composition is less than 0.05. In some embodiments, the mole ratio of copper to silicon (Cu/Si) in the composition is 0.03.

In some embodiments, the composition is in the form of a synthesis gel.

In some embodiments, the composition is subjected to a thermal treatment at a pH of at least 8.5 until at least one zeolite crystal forms.

In some embodiments, the matrix surface area (MSA) is less than 35 m$^2$/g.

In some embodiments, the MSA ranges from 1 m$^2$/g to 50 m$^2$/g. In some embodiments, the MSA ranges from 7 m$^2$/g to 49 m$^2$/g. In some embodiments, the MSA ranges from 24 m$^2$/g to 43 m$^2$/g. In some embodiments, the MSA ranges from 20 m$^2$/g to 45 m$^2$/g. In some embodiments, the MSA ranges from 20 m$^2$/g to 35 m$^2$/g.

In some embodiments, the small-pore zeolite is characterized by a caged structure. In some embodiments, the small-pore zeolite is characterized by a chabazite structure.

In some embodiments, the small-pore zeolite is characterized by an average crystallite size of less than 3 $\mu$m. In some embodiments, the small-pore zeolite is characterized by an average crystallite size of less than 2 $\mu$m. In some embodiments, the small-pore zeolite is characterized by an average crystallite size of less than 1 $\mu$m.

In some embodiments, the small-pore zeolite is characterized by a mole ratio of $SiO_2$ to $Al_2O_3$ of less than 32.5. In some embodiments, the small-pore zeolite is characterized by a mole ratio of $SiO_2$ to $Al_2O_3$ of less than 30. In some embodiments, the small-pore zeolite is characterized by a mole ratio of $SiO_2$ to $Al_2O_3$ of less than 27.5. In some embodiments, the small-pore zeolite is characterized by a mole ratio of $SiO_2$ to $Al_2O_3$ of less than 22.5. In some embodiments, the small-pore zeolite is characterized by a mole ratio of $SiO_2$ to $Al_2O_3$ of less than 20. In some embodiments, the small-pore zeolite is characterized by a mole ratio of $SiO_2$ to $Al_2O_3$ of less than 17.5.

Disclosed herein are methods of preparing a small-pore zeolite comprising subjecting a composition to a thermal treatment at a pH of at least 8.5, wherein the composition comprises at least one aluminum source, at least one silica source, at least one fluoride source, and at least one organic structure directing agent.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the at least one aluminum source is chosen from aluminum isopropoxide, aluminum hydroxide, and mixtures of any of the preceding.

In some embodiments, the at least one silica source is chosen from Ludox AS-40, sodium silicate, and mixtures of any of the preceding.

In some embodiments, the at least one fluoride source is chosen from inorganic fluoride salts and organic structure directing agent fluorides. In some embodiments, the at least one fluoride source is chosen from alkali metal fluorides. In some embodiments, the at least one fluoride source is chosen from sodium fluoride, trimethyl adamantammonium fluoride, and mixtures of any of the preceding.

In some embodiments, the at least one organic structure directing agent is trimethyl adamantammonium.

In some embodiments, the mole ratio of OH to Si in the composition ranges from 0.1 to 0.75. In some embodiments, the mole ratio of OH to Si in the composition ranges from 0.15 to 0.65. In some embodiments, the mole ratio of OH to Si in the composition ranges from 0.1 to 0.35. In some embodiments, the mole ratio of OH to Si in the composition ranges from 0.15 to 0.3.

In some embodiments, the mole ratio of $H_2O$ to Si in the composition ranges from 10 to 50. In some embodiments, the mole ratio of $H_2O$ to Si in the composition ranges from 10 to 25. In some embodiments, the mole ratio of $H_2O$ to Si in the composition ranges from 10 to 20. In some embodiments, the mole ratio of $H_2O$ to Si in the composition ranges from 10 to 15.

In some embodiments, the composition further comprises at least one copper source.

In some embodiments, the at least one copper source is chosen from copper salts and copper complexes. In some embodiments, the at least one copper source is copper-tetraethylenepentamine.

In some embodiments, the mole ratio of copper to silicon (Cu/Si) in the composition is less than 0.1. In some embodiments, the mole ratio of copper to silicon (Cu/Si) in the composition is less than 0.05. In some embodiments, the mole ratio of copper to silicon (Cu/Si) in the composition is 0.03.

In some embodiments, the composition is in the form of a synthesis gel.

In some embodiments, the composition is subjected to a thermal treatment at a pH of at least 8.5 until at least one zeolite crystal forms.

In some embodiments, the methods comprise subjecting a composition to a thermal treatment at a pH of at least 8.5, wherein the composition comprises at least one aluminum source chosen from aluminum isopropoxide and aluminum hydroxide, at least one silica source chosen from Ludox AS-40 and sodium silicate, at least one fluoride source chosen from sodium fluoride and trimethylammonium fluoride, and at least one organic structure directing agent comprising trimethyl adamantammonium.

In some embodiments, the methods comprise subjecting a composition to a thermal treatment at a pH of at least 8.5, wherein the composition comprises at least one aluminum source, at least one silica source, at least one fluoride source, and at least one organic structure directing agent, wherein:

the mole ratio of fluoride to silicon (F/Si) in the composition is greater than 0 and less than or equal to 1; and
the mole ratio of the at least one organic structure directing agent to silicon in the composition is greater than 0 and less than or equal to 0.5.

In some embodiments, the mole ratio of fluoride to silicon in the composition is greater than 0 and less than 0.5. In some embodiments, the mole ratio of fluoride to silicon in the composition is greater than 0 and less than 0.4. In some embodiments, the mole ratio of fluoride to silicon in the composition ranges from 0.03 to 0.37.

In some embodiments, the mole ratio of fluoride to silicon in the composition ranges from 0.1 to 0.3. In some embodiments, the mole ratio of fluoride to silicon in the composition ranges from 75% to 125% of 0.13. In some embodiments, the mole ratio of fluoride to silicon in the composition ranges from 75% to 125% of 0.25.

In some embodiments, the mole ratio of the at least one organic structure directing agent to silicon in the composition is greater than 0 and less than or equal to 0.25. In some embodiments, the mole ratio of the at least one organic structure directing agent to silicon in the composition is greater than 0 and less than or equal to 0.2. In some embodiments, the mole ratio of the at least one organic structure directing agent to silicon in the composition is greater than 0 and less than or equal to 0.15. In some embodiments, the mole ratio of the at least organic structure directing agent to silicon in the composition ranges from 0.03 to 0.12.

In some embodiments, the mole ratio of the at least one organic structure directing agent to silicon in the composition ranges from 0.1 to 0.25. In some embodiments, the mole ratio of the at least one organic structure directing agent to silicon in the composition ranges from 75% to 125% of 0.12. In some embodiments, the mole ratio of the at least one organic structure directing agent to silicon in the composition ranges from 75% to 125% of 0.2.

In some embodiments, the methods comprise subjecting a composition to a thermal treatment at an pH of at least 8.5, wherein the composition comprises at least one aluminum source chosen from aluminum isopropoxide and aluminum hydroxide, at least one silica source chosen from Ludox AS-40 and sodium silicate, at least one fluoride source chosen from sodium fluoride and trimethylammonium fluoride, and at least one organic structure directing agent comprising trimethyl adamantammonium, wherein:

the mole ratio of fluoride to silicon in the composition is greater than 0 and less than or equal to 1; and
the mole ratio of the at least one organic structure directing agent to silicon in the composition is greater than 0 and less than or equal to 0.5.

In some embodiments, the mole ratio of fluoride to silicon in the composition is greater than 0 and less than 0.5. In some embodiments, the mole ratio of fluoride to silicon in the composition is greater than 0 and less than 0.4. In some embodiments, the mole ratio of fluoride to silicon in the composition ranges from 0.03 to 0.37.
In some embodiments, the mole ratio of fluoride to silicon in the composition ranges from 0.1 to 0.3. In some embodiments, the mole ratio of fluoride to silicon in the composition ranges from 75% to 125% of 0.13. In some embodiments, the mole ratio of fluoride to silicon in the composition ranges from 75% to 125% of 0.25.
In some embodiments, the mole ratio of the at least one organic structure directing agent to silicon in the composition is greater than 0 and less than or equal to 0.25. In some embodiments, the mole ratio of the at least one organic structure directing agent to silicon in the composition is greater than 0 and less than or equal to 0.2. In some embodiments, the mole ratio of the at least one organic structure directing agent to silicon in the composition is greater than 0 and less than or equal to 0.15. In some embodiments, the mole ratio of the at least organic structure directing agent to silicon in the composition ranges from 0.03 to 0.12.
In some embodiments, the mole ratio of the at least one organic structure directing agent to silicon in the composition ranges from 0.1 to 0.25. In some embodiments, the mole ratio of the at least one organic structure directing agent to silicon in the composition ranges from 75% to 125% of 0.12. In some embodiments, the mole ratio of the at least one organic structure directing agent to silicon in the composition ranges from 75% to 125% of 0.2.
In some embodiments, the methods comprise subjecting a composition to a thermal treatment at a pH of at least 8.5, wherein:

the composition comprises at least one aluminum source, at least one silica source, at least one fluoride source, and at least one organic structure directing agent, wherein:

the mole ratio of fluoride to silicon in the composition is greater than 0 and less than or equal to 1;
the mole ratio of the at least one organic structure directing agent to silicon in the composition is greater than 0 and less than or equal to 0.5; and
the small-pore zeolite is characterized by an average crystallite size of less than 3 $\mu$m.

In some embodiments, the mole ratio of fluoride to silicon in the composition is greater than 0 and less than 0.5. In some embodiments, the mole ratio of fluoride to silicon in the composition is greater than 0 and less than 0.4. In some embodiments, the mole ratio of fluoride to silicon in the composition ranges from 0.03 to 0.37.
In some embodiments, the mole ratio of fluoride to silicon in the composition ranges from 0.1 to 0.3. In some embodiments, the mole ratio of fluoride to silicon in the composition ranges from 75% to 125% of 0.13. In some embodiments, the mole ratio of fluoride to silicon in the composition ranges from 75% to 125% of 0.25.
In some embodiments, the mole ratio of the at least one organic structure directing agent to silicon in the composition is greater than 0 and less than or equal to 0.25. In some embodiments, the mole ratio of the at least one organic structure directing agent to silicon in the composition is greater than 0 and less than or equal to 0.2. In some embodiments, the mole ratio of the at least one organic structure directing agent to silicon in the composition is greater than 0 and less than or equal to 0.15. In some embodiments, the mole ratio of the at least organic structure directing agent to silicon in the composition ranges from 0.03 to 0.12.
In some embodiments, the mole ratio of the at least one organic structure directing agent to silicon in the composition ranges from 0.1 to 0.25. In some embodiments, the mole ratio of the at least one organic structure directing agent to silicon in the composition ranges from 75% to 125% of 0.12. In some embodiments, the mole ratio of the at least one organic structure directing agent to silicon in the composition ranges from 75% to 125% of 0.2.
In some embodiments, the methods comprise subjecting a composition to a thermal treatment at a pH of at least 8.5, wherein:
the composition comprises at least one aluminum source chosen from aluminum isopropoxide and aluminum hydroxide, at least one silica source chosen from Ludox AS-40 and sodium silicate, at least one fluoride source chosen from sodium fluoride and trimethylammonium fluoride, and at least one organic structure directing agent comprising trimethyl adamantammonium, wherein:

the mole ratio of fluoride to silicon in the composition is greater than 0 and less than or equal to 1; and
the mole ratio of the at least one organic structure directing agent to silicon in the composition is greater than 0 and less than or equal to 0.5; and
the small-pore zeolite is characterized by an average crystallite size of less than 3 $\mu$m.

In some embodiments, the mole ratio of fluoride to silicon in the composition is greater than 0 and less than 0.5. In some embodiments, the mole ratio of fluoride to silicon in the composition is greater than 0 and less than 0.4. In some embodiments, the mole ratio of fluoride to silicon in the composition ranges from 0.03 to 0.37.

In some embodiments, the mole ratio of fluoride to silicon in the composition ranges from 0.1 to 0.3. In some embodiments, the mole ratio of fluoride to silicon in the composition ranges from 75% to 125% of 0.13. In some embodiments, the mole ratio of fluoride to silicon in the composition ranges from 75% to 125% of 0.25.

In some embodiments, the mole ratio of the at least one organic structure directing agent to silicon in the composition is greater than 0 and less than or equal to 0.25. In some embodiments, the mole ratio of the at least one organic structure directing agent to silicon in the composition is greater than 0 and less than or equal to 0.2. In some embodiments, the mole ratio of the at least one organic structure directing agent to silicon in the composition is greater than 0 and less than or equal to 0.15. In some embodiments, the mole ratio of the at least one organic structure directing agent to silicon in the composition ranges from 0.03 to 0.12.

In some embodiments, the mole ratio of the at least one organic structure directing agent to silicon in the composition ranges from 0.1 to 0.25. In some embodiments, the mole ratio of the at least one organic structure directing agent to silicon in the composition ranges from 75% to 125% of 0.12. In some embodiments, the mole ratio of the at least one organic structure directing agent to silicon in the composition ranges from 75% to 125% of 0.2.

In some embodiments, the composition is subjected to a thermal treatment for at least 24 h. In some embodiments, the composition is subjected to a thermal treatment for at least 30 h. In some embodiments, the composition is subjected to a thermal treatment for at least 48 h. In some embodiments, the composition is subjected to a thermal treatment for at least 72 h.

In some embodiments, the thermal treatment comprises hydrothermal crystallization at a temperature of at least 140 °C. In some embodiments, the thermal treatment comprises hydrothermal crystallization at a temperature of at least 150 °C. In some embodiments, the thermal treatment comprises hydrothermal crystallization at a temperature of at least 160 °C. In some embodiments, the thermal treatment comprises hydrothermal crystallization at a temperature of at least 170 °C.

In some embodiments, the thermal treatment further comprises moderate agitation at an agitation rate of at least 100 rpm (revolutions per minute).

In some embodiments, the aluminum content in the mother liquor after the thermal treatment is greater than 100 ppm. In some embodiments, the aluminum content of the mother liquor after the thermal treatment ranges from 100 ppm to 200 ppm.

Also disclosed herein are small-pore zeolites prepared by subjecting a composition to a thermal treatment at a pH of at least 8.5, wherein the composition comprises at least one aluminum source, at least one silica source, at least one fluoride source, and at least one organic structure directing agent.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the composition further comprises at least one copper source.

In some embodiments, the at least one copper source is chosen from copper salts and copper complexes. In some embodiments, the at least one copper source is copper-tetraethylenepentamine.

In some embodiments, the mole ratio of copper to silicon (Cu/Si) in the composition is less than 0.1. In some embodiments, the mole ratio of copper to silicon in the composition is less than 0.05. In some embodiments, the mole ratio of copper to silicon in the composition is 0.03.

In some embodiments, the mole ratio of OH to Si in the composition ranges from 0.1 to 0.75. In some embodiments, the mole ratio of OH to Si in the composition ranges from 0.15 to 0.65. In some embodiments, the mole ratio of OH to Si in the composition ranges from 0.1 to 0.35. In some embodiments, the mole ratio of OH to Si in the composition ranges from 0.15 to 0.3.

In some embodiments, the matrix surface area (MSA) is less than 35 m$^2$/g.

In some embodiments, the MSA ranges from 1 m$^2$/g to 50 m$^2$/g. In some embodiments, the MSA ranges from 7 m$^2$/g to 49 m$^2$/g. In some embodiments, the MSA ranges from 24 m$^2$/g to 43 m$^2$/g. In some embodiments, the MSA ranges from 20 m$^2$/g to 45 m$^2$/g. In some embodiments, the MSA ranges from 20 m$^2$/g to 35 m$^2$/g.

In some embodiments, the small-pore zeolites are characterized by a mole ratio of $SiO_2$ to $Al_2O_3$ of less than 32.5. In some embodiments, the small-pore zeolites are characterized by a mole ratio of $SiO_2$ to $Al_2O_3$ of less than 30. In some embodiments, the small-pore zeolites are characterized by a mole ratio of $SiO_2$ to $Al_2O_3$ of less than 27.5. In some embodiments, the small-pore zeolites are characterized by a mole ratio of $SiO_2$ to $Al_2O_3$ of less than 22.5. In some embodiments, the small-pore zeolites are characterized by a mole ratio of $SiO_2$ to $Al_2O_3$ of less than 20. In some embodiments, the small-pore zeolites are characterized by a mole ratio of $SiO_2$ to $Al_2O_3$ of less than 17.5.

Also disclosed herein are small-pore zeolites prepared by subjecting a composition to a thermal treatment, wherein the composition comprises at least one aluminum source, at least one silica source, at least one fluoride source, and at least one organic structure directing agent, and further wherein the mole ratio of OH to Si in the composition is at least 0.1.

In some embodiments, the mole ratio of OH to Si in the composition ranges from 0.1 to 0.75. In some embodiments, the mole ratio of OH to Si in the composition ranges from 0.15 to 0.65. In some embodiments, the mole ratio of OH to Si in the composition ranges from 0.1 to 0.35. In some embodiments, the mole ratio of OH to Si in the composition ranges from 0.15 to 0.3.

In some embodiments, the thermal treatment is performed at a pH of at least 8.5.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the composition further comprises at least one copper source.

In some embodiments, the at least one copper source is chosen from copper salts and copper complexes. In some embodiments, the at least one copper source is copper-tetraethylenepentamine.

In some embodiments, the mole ratio of copper to silicon (Cu/Si) in the composition is less than 0.1. In some embodiments, the mole ratio of copper to silicon in the composition is less than 0.05. In some embodiments, the mole ratio of copper to silicon in the composition is 0.03.

In some embodiments, the matrix surface area (MSA) is less than 35 m$^2$/g.

In some embodiments, the MSA ranges from 1 m$^2$/g to 50 m$^2$/g. In some embodiments, the MSA ranges from 7 m$^2$/g to 49 m$^2$/g. In some embodiments, the MSA ranges from 24 m$^2$/g to 43 m$^2$/g. In some embodiments, the MSA ranges from 20 m$^2$/g to 45 m$^2$/g. In some embodiments, the MSA ranges from 20 m$^2$/g to 35 m$^2$/g.

In some embodiments, the small-pore zeolites are characterized by a mole ratio of $SiO_2$ to $Al_2O_3$ of less than 32.5. In some embodiments, the small-pore zeolites are characterized by a mole ratio of $SiO_2$ to $Al_2O_3$ of less than 30. In some embodiments, the small-pore zeolites are characterized by a mole ratio of $SiO_2$ to $Al_2O_3$ of less than 27.5. In some embodiments, the small-pore zeolites are characterized by a mole ratio of $SiO_2$ to $Al_2O_3$ of less than 22.5. In some embodiments, the small-pore zeolites are characterized by a mole ratio of $SiO_2$ to $Al_2O_3$ of less than 20. In some embodiments, the small-pore zeolites are characterized by a mole ratio of $SiO_2$ to $Al_2O_3$ of less than 17.5.

Further disclosed herein are small-pore zeolites comprising aluminum, silicon, and fluoride, wherein the small-pore zeolites are characterized by an average crystallite size of less than 3 μm.

In some embodiments, the small-pore zeolites are characterized by an average crystallite size of less than 2 μm. In some embodiments, the small-pore zeolites are characterized by an average crystallite size of less than 1 μm.

In some embodiments, the small-pore zeolites further comprise at least one organic structure directing agent.

In some embodiments, the at least one organic structure directing agent is chosen from ionic molecules comprising an adamantammonium group. In some embodiments, the at least one organic structure directing agent is trimethyl adamantammonium.

In some embodiments, the small-pore zeolites are substantially in the form of faceted crystallites.

In some embodiments, the small-pore zeolites are characterized by a degree of crystallinity greater than 50%. In some embodiments, the small-pore zeolites are characterized by a degree of crystallinity greater than 60%. In some embodiments, the small-pore zeolites are characterized by a degree of crystallinity greater than 70%. In some embodiments, the small-pore zeolites are characterized by a degree of crystallinity greater than 80%. In some embodiments, the small-pore zeolites are characterized by a degree of crystallinity greater than 90%.

In some embodiments, the small-pore zeolites are characterized by a fluoride content ranging from 10 ppm to 2000 ppm. In some embodiments, the small-pore zeolites are characterized by a fluoride content ranging from 40 ppm to 1000 ppm. In some embodiments, the small-pore zeolites are characterized by a fluoride content ranging from 40 ppm to 225 ppm.

In some embodiments, the small-pore zeolites are characterized by a caged structure. In some embodiments, the small-pore zeolites are characterized by a chabazite structure.

In some embodiments, the small-pore zeolites are characterized by a mole ratio of $SiO_2$ to $Al_2O_3$ of less than 32.5. In some embodiments, the small-pore zeolites are characterized by a mole ratio of $SiO_2$ to $Al_2O_3$ of less than 30. In some embodiments, the small-pore zeolites are characterized by a mole ratio of $SiO_2$ to $Al_2O_3$ of less than 27.5. In some embodiments, the small-pore zeolites are characterized by a mole ratio of $SiO_2$ to $Al_2O_3$ of less than 22.5. In some embodiments, the small-pore zeolites are characterized by a mole ratio of $SiO_2$ to $Al_2O_3$ of less than 20. In some embodiments, the small-pore zeolites are characterized by a mole ratio of $SiO_2$ to $Al_2O_3$ of less than 17.5.

In some embodiments, the small-pore zeolites are characterized by a mole ratio of $SiO_2$ to $Al_2O_3$ ranging from 10 to 40. In some embodiments, the small-pore zeolites are characterized by a mole ratio of $SiO_2$ to $Al_2O_3$ ranging from

14 to 31.

In some embodiments, the small-pore zeolites are characterized by a mole ratio of $SiO_2$ to $Al_2O_3$ ranging from 16 to 31. In some embodiments, the small-pore zeolites are characterized by a fluoride content ranging from 395 ppm to 680 ppm. In some embodiments, the small-pore zeolites are characterized by a mole ratio of $SiO_2$ to $Al_2O_3$ ranging from 16 to 31 and a fluoride content ranging from 395 ppm to 680 ppm.

In some embodiments, the small-pore zeolites are characterized by a mole ratio of $SiO_2$ to $Al_2O_3$ ranging from 75% to 125% of 16.9 and a fluoride content ranging from 75% to 125% of 678 ppm.

In some embodiments, the small-pore zeolites are characterized by a mole ratio of $SiO_2$ to $Al_2O_3$ ranging from 75% to 125% of 30.8 and a fluoride content ranging from 75% to 125% of 399 ppm.

In some embodiments, the small-pore zeolites are H-form zeolites.

In some embodiments, the small-pore zeolites are H-form zeolites characterized by a mole ratio of $SiO_2$ to $Al_2O_3$ ranging from 14 to 21. In some embodiments, the small-pore zeolites are H-form zeolites characterized by a fluoride content ranging from 65 ppm to 920 ppm. In some embodiments, the small-pore zeolites are H-form zeolites characterized by a mole ratio of $SiO_2$ to $Al_2O_3$ ranging from 14 to 21 and a fluoride content ranging from 65 ppm to 920 ppm.

In some embodiments, the small-pore zeolites are H-form zeolites characterized by a mole ratio of $SiO_2$ to $Al_2O_3$ ranging from 75% to 125% of 17.5 and a fluoride content ranging from 75% to 125% of 917 ppm.

In some embodiments, the small-pore zeolites are H-form zeolites characterized by a mole ratio of $SiO_2$ to $Al_2O_3$ ranging from 75% to 125% of 20.2 and a fluoride content ranging from 75% to 125% of 269 ppm.

In some embodiments, the small-pore zeolites are H-form zeolites characterized by a mole ratio of $SiO_2$ to $Al_2O_3$ ranging from 75% to 125% of 14.1 and a fluoride content ranging from 75% to 125% of 68 ppm.

In some embodiments, the small-pore zeolites are Na-form zeolites.

In some embodiments, the small-pore zeolites are Na-form zeolites characterized by a mole ratio of $SiO_2$ to $Al_2O_3$ ranging from 19 to 31. In some embodiments, the small-pore zeolites are Na-form zeolites characterized by a fluoride content ranging from 70 ppm to 500 ppm. In some embodiments, the small-pore zeolites are Na-form zeolites characterized by a mole ratio of $SiO_2$ to $Al_2O_3$ ranging from 19 to 31 and a fluoride content ranging from 70 ppm to 500 ppm.

In some embodiments, the small-pore zeolites are Na-form zeolites characterized by a mole ratio of $SiO_2$ to $Al_2O_3$ ranging from 75% to 125% of 19.7 and a fluoride content ranging from 75% to 125% of 72 ppm.

In some embodiments, the small-pore zeolites are Na-form zeolites characterized by a mole ratio of $SiO_2$ to $Al_2O_3$ ranging from 75% to 125% of 20.2 and a fluoride content ranging from 75% to 125% of 484 ppm.

In some embodiments, the small-pore zeolites are Na-form zeolites characterized by a mole ratio of $SiO_2$ to $Al_2O_3$ ranging from 75% to 125% of 30.8 and a fluoride content ranging from 75% to 125% of 277 ppm.

In some embodiments, the small-pore zeolites further comprise copper.

In some embodiments, the small-pore zeolites further comprise copper and are characterized by a mole ratio of $SiO_2$ to $Al_2O_3$ ranging from 16 to 21. In some embodiments, the small-pore zeolites further comprise copper and are characterized by a fluoride content ranging from 40 ppm to 210 ppm.

In some embodiments, the small-pore zeolites further comprise copper and are characterized by a mole ratio of $SiO_2$ to $Al_2O_3$ ranging from 75% to 125% of 16.9 and a fluoride content ranging from 75% to 125% of 41 ppm.

In some embodiments, the small-pore zeolites further comprise copper and are characterized by a mole ratio of $SiO_2$ to $Al_2O_3$ ranging from 75% to 125% of 20.2 and a fluoride content ranging from 75% to 125% of 208 ppm.

In some embodiments, the small-pore zeolites are characterized by a CuO content ranging from 1 wt% to 5 wt%. In some embodiments, the small-pore zeolites are characterized by a CuO content ranging from 1 wt% to 4 wt%.

In some embodiments, the small-pore zeolites further comprise copper and are characterized by a mole ratio of Cu to Al ranging from 0.05 to 0.35.

In some embodiments, the small-pore zeolites are characterized by a CuO content ranging from 1 wt% to 4 wt% and a mole ratio of Cu to Al ranging from 0.05 to 0.35.

In some embodiments, the small-pore zeolites are characterized by a CuO content ranging from 75% to 125% of 1.05 wt% and a mole ratio of Cu to Al of 75% to 125% of 0.09.

In some embodiments, the small-pore zeolites are characterized by a CuO content ranging from 75% to 125% of 2.13 wt% and a mole ratio of Cu to Al of 75% to 125% of 0.18.

In some embodiments, the small-pore zeolites are characterized by a CuO content ranging from 75% to 125% of 3.78 wt% and a mole ratio of Cu to Al of 75% to 125% of 0.32.

In some embodiments, the small-pore zeolites are characterized by a CuO content ranging from 75% to 125% of 1.05 wt%, a mole ratio of Cu to Al of 75% to 125% of 0.09, and a mole ratio of $SiO_2$ to $Al_2O_3$ ranging from 75% to 125% of 20.2.

In some embodiments, the small-pore zeolites are characterized by a CuO content ranging from 75% to 125% of 2.13 wt%, a mole ratio of Cu to Al of 75% to 125% of 0.18, and a mole ratio of $SiO_2$ to $Al_2O_3$ ranging from 75% to 125% of 20.2.

In some embodiments, the small-pore zeolites are characterized by a CuO content ranging from 75% to 125% of 3.78 wt%, a mole ratio of Cu to Al of 75% to 125% of 0.32, and a mole ratio of $SiO_2$ to $Al_2O_3$ ranging from 75% to 125% of 20.2.

In some embodiments, the small-pore zeolites are characterized by a CuO content ranging from 75% to 125% of 1.05 wt%, a mole ratio of Cu to Al of 75% to 125% of 0.09, and a fluoride content ranging from 75% to 125% of 208 ppm.

In some embodiments, the small-pore zeolites are characterized by a CuO content ranging from 75% to 125% of 2.13 wt%, a mole ratio of Cu to Al of 75% to 125% of 0.18, and a fluoride content ranging from 75% to 125% of 208 ppm.

In some embodiments, the small-pore zeolites are characterized by a CuO content ranging from 75% to 125% of 3.78 wt%, a mole ratio of Cu to Al of 75% to 125% of 0.32, and a fluoride content ranging from 75% to 125% of 208 ppm.

Further disclosed herein are small-pore zeolites comprising aluminum, silicon, and fluoride, wherein the small-pore zeolites are characterized by a fluoride content ranging from 10 ppm to 2000 ppm.

In some embodiments, the small-pore zeolites are characterized by a fluoride content ranging from 40 ppm to 1000 ppm. In some embodiments, the small-pore zeolites are characterized by a fluoride content ranging from 40 ppm to 225 ppm.

In some embodiments, the small-pore zeolites are characterized by an average crystallite size of less than 3 μm. In some embodiments, the small-pore zeolites are characterized by an average crystallite size of less than 2 μm. In some embodiments, the small-pore zeolites are characterized by an average crystallite size of less than 1 μm.

In some embodiments, the small-pore zeolites further comprise at least one organic structure directing agent.

In some embodiments, the at least one organic structure directing agent is chosen from ionic molecules comprising an adamantammonium group. In some embodiments, the at least one organic structure directing agent is trimethyl adamantammonium.

In some embodiments, the small-pore zeolites are substantially in the form of faceted crystallites.

In some embodiments, the small-pore zeolites are characterized by a degree of crystallinity greater than 50%. In some embodiments, the small-pore zeolites are characterized by a degree of crystallinity greater than 60%. In some embodiments, the small-pore zeolites are characterized by a degree of crystallinity greater than 70%. In some embodiments, the small-pore zeolites are characterized by a degree of crystallinity greater than 80%. In some embodiments, the small-pore zeolites are characterized by a degree of crystallinity greater than 90%.

In some embodiments, the small-pore zeolites are substantially in the form of faceted crystallites and are characterized by a degree of crystallinity greater than 90%.

In some embodiments, the small-pore zeolites are substantially in the form of faceted crystallites and are characterized by an average crystallite size of less than 3 μm. In some embodiments, the small-pore zeolites are substantially in the form of faceted crystallites and are characterized by an average crystallite size of less than 2 μm. In some embodiments, the small-pore zeolites are substantially in the form of faceted crystallites and are characterized by an average crystallite size of less than 1 μm.

In some embodiments, the small-pore zeolites are characterized by an average crystallite size of less than 3 μm and a degree of crystallinity greater than 90%. In some embodiments, the small-pore zeolites are characterized by an average crystallite size of less than 2 μm and a degree of crystallinity greater than 90%. In some embodiments, the small-pore zeolites are characterized by an average crystallite size of less than 1 μm and a degree of crystallinity greater than 90%.

In some embodiments, the small-pore zeolites are substantially in the form of faceted crystallites and are characterized by an average crystallite size of less than 3 μm and a degree of crystallinity greater than 90%. In some embodiments, the small-pore zeolites are substantially in the form of faceted crystallites and are characterized by an average crystallite size of less than 2 μm and a degree of crystallinity greater than 90%. In some embodiments, the small-pore zeolites are substantially in the form of faceted crystallites and are characterized by an average crystallite size of less than 1 μm and a degree of crystallinity greater than 90%.

In some embodiments, the small-pore zeolites are characterized by a caged structure. In some embodiments, the small-pore zeolites are characterized by a chabazite structure.

In some embodiments, the small-pore zeolites are characterized by a mole ratio of $SiO_2$ to $Al_2O_3$ of less than 32.5. In some embodiments, the small-pore zeolites are characterized by a mole ratio of $SiO_2$ to $Al_2O_3$ of less than 30. In some embodiments, the small-pore zeolites are characterized by a mole ratio of $SiO_2$ to $Al_2O_3$ of less than 27.5. In some embodiments, the small-pore zeolites are characterized by a mole ratio of $SiO_2$ to $Al_2O_3$ of less than 22.5. In some embodiments, the small-pore zeolites are characterized by a mole ratio of $SiO_2$ to $Al_2O_3$ of less than 20. In some embodiments, the small-pore zeolites are characterized by a mole ratio of $SiO_2$ to $Al_2O_3$ of less than 17.5.

In some embodiments, the small-pore zeolites are characterized by a mole ratio of $SiO_2$ to $Al_2O_3$ ranging from 10 to 40. In some embodiments, the small-pore zeolites are characterized by a mole ratio of $SiO_2$ to $Al_2O_3$ ranging from 14 to 31.

In some embodiments, the small-pore zeolites are H-form zeolites.

In some embodiments, the small-pore zeolites are Na-form zeolites.

In some embodiments, the small-pore zeolites further comprise copper.

Further disclosed herein are methods of reducing nitrogen oxides ($NO_x$) comprising contacting a gaseous stream containing nitrogen oxides with at least one zeolite of the present disclosure. In some embodiments, the methods comprise selectively reducing $NO_x$ using ammonia or an ammonia precursor at a temperature ranging from 200 °C to 550 °C.

In some embodiments, the overall conversion of $NO_x$ at 200 °C is greater than 60%. In some embodiments, the overall conversion of $NO_x$ at 200 °C is greater than 65%.

In some embodiments, the overall conversion of $NO_x$ at 300 °C is greater than 90%. In some embodiments, the overall conversion of $NO_x$ at 300 °C is greater than 95%.

In some embodiments, the overall conversion of $NO_x$ at 400 °C is greater than 90%. In some embodiments, the overall conversion of $NO_x$ at 400 °C is greater than 95%.

In some embodiments, the overall conversion of $NO_x$ at 550 °C is greater than 75%.

In some embodiments, the overall conversion of $NO_x$ at 200 °C is greater than 65% and the overall conversion of $NO_x$ at 550 °C is greater than 75%.

In some embodiments, the small-pore zeolites are substantially in the form of faceted crystallites and are characterized by a degree of crystallinity greater than 90%.

In some embodiments, the small-pore zeolites are substantially in the form of faceted crystallites and are characterized by an average crystallite size of less than 3 $\mu$m. In some embodiments, the small-pore zeolites are substantially in the form of faceted crystallites and are characterized by an average crystallite size of less than 2 $\mu$m. In some embodiments, the small-pore zeolites are substantially in the form of faceted crystallites and are characterized by an average crystallite size of less than 1 $\mu$m.

In some embodiments, the small-pore zeolites are characterized by an average crystallite size of less than 3 $\mu$m and a degree of crystallinity greater than 90%. In some embodiments, the small-pore zeolites are characterized by an average crystallite size of less than 2 $\mu$m and a degree of crystallinity greater than 90%. In some embodiments, the small-pore zeolites are characterized by an average crystallite size of less than 1 $\mu$m and a degree of crystallinity greater than 90%.

In some embodiments, the small-pore zeolites are substantially in the form of faceted crystallites and are characterized by an average crystallite size of less than 3 $\mu$m and a degree of crystallinity greater than 90%. In some embodiments, the small-pore zeolites are substantially in the form of faceted crystallites and are characterized by an average crystallite size of less than 2 $\mu$m and a degree of crystallinity greater than 90%. In some embodiments, the small-pore zeolites are substantially in the form of faceted crystallites and are characterized by an average crystallite size of less than 1 $\mu$m and a degree of crystallinity greater than 90%.

**BRIEF DESCRIPTION OF THE DRAWINGS**

FIGs. 1A and 1B depict scanning electron microscopy images of an example small-pore zeolite (sample F). FIG. 1A depicts a more magnified view, and FIG. 1B depicts a less magnified view.

FIG. 2 depicts scanning an electron microscopy image of an example small-pore zeolite (sample G).

FIG. 3 depicts copper uptake measured as Cu/Al ratio for example small-pore zeolites (samples G and B), with FIG. 3A depicting copper uptake measured as Cu/Al ratio vs. $Cu^{2+}$ solution concentration and FIG. 3B depicting copper uptake measured as Cu/Al ratio vs. CuO weight percent after copper exchange.

FIG. 4 depicts $X_{NO}$ (%) and $N_2O$ (ppm) for example small-pore zeolites (samples H and D), with FIG. 4A depicting $X_{NO}$ (%) and FIG. 4B depicting $N_2O$ (ppm).

FIG. 5 depicts $X_{NO}$ (%) for example small-pore zeolites (samples G and B).

FIG. 6 depicts $X_{NO}$ (%) for example small-pore zeolites (samples L and E).

Definitions:

As used herein, "a" or "an" entity refers to one or more of that entity, e.g., "a compound" refers to one or more compounds or at least one compound unless stated otherwise. As such, the terms "a" (or "an"), "one or more", and "at least one" are used interchangeably herein.

As used herein, "[X] ranges from [A] to [Z]" or "[X] ranging from [A] to [Z]" means that [X] can be any value in the range from [A] to [Z], including [A] or [Z].

As used herein, the term "material" refers to an element, constituent, or substance of which something is composed or can be made.

As used herein, the term "substantially" refers to a property having a statistical occurrence greater that 75%. For example, a zeolite may be substantially in the form of faceted crystallites if greater than 75% of a zeolite's crystallites have one or more facets.

As used herein, the term "calcination" refers to heating a solid to an elevated temperature (i.e., above-ambient temperature) in air or oxygen, such as, e.g., to remove impurities or volatile substances from the solid.

As used herein, the term "aluminum source" refers to a material comprising aluminum and/or aluminum ions, such as, e.g., aluminum salts, aluminum isopropoxide, and/or aluminum hydroxide.

As used herein, the term "catalyst" or "catalyst composition" refers to a molecule or a material that promotes a reaction.

As used herein, the term "copper source" refers to a material comprising copper and/or copper ions, such as, e.g., a copper salt and/or a copper complex, such as, e.g., copper-tetraethylenepentamine.

As used herein, the term "crystallite size" refers to the diameter of the smallest sphere which completely encloses the crystallite. Crystallite size may be determined by routine techniques in the art, such as, e.g., electron microscopy, such as, e.g., scanning electron microscopy.

As used herein, the term "fluoride source" refers to a material comprising fluoride ions, such as, e.g., inorganic fluoride salts, metal fluorides, fluoride salts, fluoride complexes with an organic structure directing agent, organic fluoride salts, sodium fluoride, and/or trimethyl adamantammonium fluoride.

As used herein, the term "ion exchange treatment" refers to a process by which one or more ions are incorporated into and/or removed from a zeolite. As a non-limiting example, a small-pore zeolite may be subjected to a copper ion-exchange treatment by, e.g., mixing the small-pore zeolite with a material comprising copper such as, e.g., CuO, and a solution, such as, e.g., an aqueous zirconium acetate solution.

As used herein, the term "molecular sieve" refers to a material possessing a substantially regular porous structure. In some embodiments, molecular sieves are capable of selectively sorting molecules based on size exclusion.

As used herein, the term "organic structure directing agent" refers to an organic compound capable of affecting the morphology and/or structure of a zeolite. For example, an organic structure directing agent may be an ionic organic molecule capable of being incorporated into the zeolite's structure. An organic structure directing agent may, e.g., comprise a large and/or sterically bulky organic group. An organic structure directing agent may, e.g., comprise an adamantammonium group. Trimethyl adamantammonium is a non-limiting example of an organic structure directing agent.

As used herein, the term "reducing agent" refers to a molecule or a material capable of reducing $NO_x$ at an elevated (i.e., above-ambient) temperature. Non-limiting examples of reducing agents include ammonia, urea, and fuel.

As used herein, the term "selective catalytic reduction" (SCR) refers to a catalytic process of reducing nitrogen oxides using a reducing agent.

As used herein, the term "silica source" refers to a material comprising silicon and/or silicon oxides, such as, e.g., colloidal silica, silicates, sodium silicate, and/or Ludox AS-40.

As used herein, the term "small pore" or "small-pore," in reference to the dimensions of a material, refers to a material with pore openings smaller than 5 Å (such as, e.g., pore openings ranging from 3 Å to 5 Å). Non-limiting examples of small-pore zeolites include zeolites with 8-membered ring structures (8MR), such as, e.g., zeolites with CHA, EDI, ERI, GIS, LTA, MER, and RHO topologies.

As used herein, the term "thermal treatment" refers to a process whereby a composition is subjected to an elevated temperature (i.e., an above-ambient temperature) for a duration of time.

As used herein, the term "zeolite" refers to an aluminosilicate material possessing a substantially regular porous structure. Zeolites of the present disclosure may possess many different framework structures with substantially regular porous structures of molecular dimensions. In some embodiments, zeolites of the present disclosure possess open 3D framework structures composed of corner-sharing $TO_4$ tetrahedra, wherein T is Al or Si. In some embodiments, non-framework cations balancing the charge of the anionic framework are loosely associated with the framework oxygens, and the remaining pore volume is filled with water molecules. In some embodiments, the non-framework cations are exchangeable. In some embodiments, the water molecules are removable.

The structures of zeolites of the present disclosure may be analyzed using routine techniques in the art, such as, e.g., x-ray diffraction (XRD). As a non-limiting example, the degree of crystallinity of a zeolite of the present disclosure may be determined by XRD analysis.

**Example Embodiments 1:**

Without limitation, some embodiments of the disclosure include:

1. A method of preparing a small-pore zeolite comprising subjecting a composition to a thermal treatment at a pH of at least 8.5, wherein the composition comprises at least one aluminum source, at least one silica source, at least one fluoride source, and at least one organic structure directing agent.

2. The method of Embodiment 1, wherein the pH ranges from 10.5 to 13.5.

3. The method of Embodiment 1, wherein the pH is at least 9.5.

4. The method of Embodiment 1, wherein the pH is at least 10.5.

5. The method of any one of Embodiments 1 to 4, wherein the mole ratio of $H_2O$ to Si in the composition ranges from 10 to 50.

6. The method of any one of Embodiments 1 to 4, wherein the mole ratio of $H_2O$ to Si in the composition ranges from 10 to 25.

7. The method of any one of Embodiments 1 to 4, wherein the mole ratio of $H_2O$ to Si in the composition ranges from 10 to 20.

8. The method of any one of Embodiments 1 to 4, wherein the mole ratio of $H_2O$ to Si in the composition ranges from 10 to 15.

9. The method of any one of Embodiments 1 to 4, wherein the mole ratio of $H_2O$ to Si in the composition ranges from 10.6 to 44.1.

10. The method of any one of Embodiments 1 to 9, wherein the mole ratio of F to Si in the composition is greater than 0 and less than or equal to 1.

11. The method of any one of Embodiments 1 to 9, wherein the mole ratio of F to Si in the composition ranges from 0.01 to 0.5.

12. The method of any one of Embodiments 1 to 9, wherein the mole ratio of F to Si in the composition ranges from 0.03 to 0.37.

13. The method of any one of Embodiments 1 to 9, wherein the mole ratio of F to Si in the composition ranges from 0.1 to 0.3.

14. The method of any one of Embodiments 1 to 9, wherein the mole ratio of F to Si in the composition ranges from 75% to 125% of 0.13.

15. The method of any one of Embodiments 1 to 9, wherein the mole ratio of F to Si in the composition ranges from 75% to 125% of 0.25.

16. The method of any one of Embodiments 1 to 15, wherein the mole ratio of OH to Si in the composition is at least 0.1.

17. The method of any one of Embodiments 1 to 15, wherein the mole ratio of OH to Si in the composition is greater than 0.1.

18. The method of any one of Embodiments 1 to 15, wherein the mole ratio of OH to Si in the composition ranges from 0.1 to 0.75.

19. The method of any one of Embodiments 1 to 15, wherein the mole ratio of OH to Si in the composition ranges from 0.15 to 0.65.

20. The method of any one of Embodiments 1 to 15, wherein the mole ratio of OH to Si in the composition ranges from 0.1 to 0.35.

21. The method of any one of Embodiments 1 to 15, wherein the mole ratio of OH to Si in the composition ranges from 0.15 to 0.3.

22. The method of any one of Embodiments 1 to 21, wherein the mole ratio of Cu to Si in the composition is 0.03.

23. The method of any one of Embodiments 1 to 22, wherein the mole ratio of the at least one organic structure directing agent to Si in the composition ranges from 0.01 to 0.25.

24. The method of any one of Embodiments 1 to 22, wherein the mole ratio of the at least one organic structure directing agent to Si in the composition ranges from 0.03 to 0.20.

25. The method of any one of Embodiments 1 to 22, wherein the mole ratio of the at least one organic structure directing agent to Si in the composition ranges from 0.1 to 0.25.

26. The method of any one of Embodiments 1 to 22, wherein the mole ratio of the at least one organic structure directing agent to Si in the composition ranges from 75% to 125% of 0.12.

27. The method of any one of Embodiments 1 to 22, wherein the mole ratio of the at least one organic structure directing agent to Si in the composition ranges from 75% to 125% of 0.2.

28. The method of any one of Embodiments 1 to 27, wherein the mole ratio of Na to Si in the composition ranges from 0.1 to 1.

29. The method of any one of Embodiments 1 to 27, wherein the mole ratio of Na to Si in the composition ranges from 0.2 to 0.84.

30. The method of any one of Embodiments 1 to 27, wherein the mole ratio of Na to Si in the composition ranges from 0.15 to 0.4.

31. The method of any one of Embodiments 1 to 27, wherein the mole ratio of Na to Si in the composition ranges from 0.2 to 0.35.

32. The method of any one of Embodiments 1 to 31, wherein the mole ratio of $SiO_2$ to $Al_2O_3$ in the composition ranges from 15 to 45.

33. The method of any one of Embodiments 1 to 31, wherein the mole ratio of $SiO_2$ to $Al_2O_3$ in the composition ranges from 19.8 to 39.9.

34. The method of any one of Embodiments 1 to 31, wherein the mole ratio of $SiO_2$ to $Al_2O_3$ in the composition ranges from 90% to 110% of 19.9.

35. The method of any one of Embodiments 1 to 31, wherein the mole ratio of $SiO_2$ to $Al_2O_3$ in the composition ranges from 90% to 110% of 30.0.

36. The method of any one of Embodiments 1 to 35, wherein the at least one aluminum source is chosen from aluminum isopropoxide and aluminum hydroxide.

37. The method of any one of Embodiments 1 to 36, wherein the at least one silica source is chosen from Ludox AS-40 and sodium silicate.

38. The method of any one of Embodiments 1 to 37, wherein the at least one fluoride source is chosen from sodium fluoride and trimethylammonium fluoride.

39. The method of any one of Embodiments 1 to 38, wherein the at least one organic structure directing agent comprises an adamantammonium group.

40. The method of any one of Embodiments 1 to 39, wherein the at least one organic structure directing agent comprises trimethyl adamantammonium.

41. The method of any one of Embodiments 1 to 40, wherein the thermal treatment comprises maintaining the composition at a temperature of at least 140 °C for at least 30 h.

42. The method of Embodiment 41, wherein the thermal treatment comprises maintaining the composition at a temperature ranging from 140 °C to 180 °C for a time ranging from 30 h to 80 h.

43. The method of Embodiment 42, wherein the thermal treatment comprises maintaining the composition at a temperature ranging from 140 °C to 170 °C for a time ranging from 30 h to 72 h.

44. The method of any one of Embodiments 1 to 40, wherein the thermal treatment comprises maintaining the composition at a temperature ranging from 90% to 110% of 140 °C for a time ranging from 90% to 110% of 72 h.

45. The method of any one of Embodiments 1 to 40, wherein the thermal treatment comprises maintaining the composition at a temperature of 140 °C for 72 h.

46. The method of any one of Embodiments 1 to 40, wherein the thermal treatment comprises maintaining the composition at a temperature of 170 °C for a time ranging from 30 h to 72 h.

47. The method of any one of Embodiments 1 to 40, wherein the thermal treatment comprises maintaining the composition at a temperature of 170 °C for a time ranging from 30 h to 72 h.

48. The method of any one of Embodiments 1 to 40, wherein the thermal treatment comprises maintaining the composition at a temperature ranging from 90% to 110% of 170 °C for a time ranging from 90% to 110% of 30 h.

49. The method of any one of Embodiments 1 to 40, wherein the thermal treatment comprises maintaining the composition at a temperature of 170 °C for 30 h.

50. The method of any one of Embodiments 1 to 40, wherein the thermal treatment comprises maintaining the composition at a temperature ranging from 90% to 110% of 170 °C for a time ranging from 90% to 110% of 72 h.

51. The method of any one of Embodiments 1 to 40, wherein the thermal treatment comprises maintaining the composition at a temperature of 170 °C for 72 h.

52. The method of any one of Embodiments 1 to 51, wherein the zeolite surface area (ZSA) is between 500 $m^2$/g and 600 $m^2$/g.

53. The method of any one of Embodiments 1 to 51, wherein the zeolite surface area (ZSA) is between 529 $m^2$/g and 592 $m^2$/g.

54. The method of any one of Embodiments 1 to 53, wherein the matrix surface area (MSA) ranges from 1 $m^2$/g to 50 $m^2$/g.

55. The method of any one of Embodiments 1 to 53, wherein the matrix surface area (MSA) ranges from 7 $m^2$/g to 49 $m^2$/g.

56. The method of any one of Embodiments 1 to 53, wherein the matrix surface area (MSA) ranges from 24 $m^2$/g to 43 $m^2$/g.

57. The method of any one of Embodiments 1 to 53, wherein the matrix surface area (MSA) is less than 35 $m^2$/g.

58. The method of any one of Embodiments 1 to 57, wherein the composition further comprises at least one copper source.

59. The method of Embodiment 58, wherein the copper source is copper-tetraethylenepentamine.

60. The method of Embodiment 58 or 59, wherein the small-pore zeolite comprises copper.

61. The method of any one of Embodiments 1 to 60, wherein the small-pore zeolite is characterized by a chabazite structure.

Example Embodiments 2:

Without limitation, some embodiments of the disclosure include:

1. A method of preparing a small-pore zeolite comprising subjecting a composition to a thermal treatment, wherein the composition comprises at least one aluminum source, at least one silica source, at least one fluoride source, and at least one organic structure directing agent, and further wherein the mole ratio of OH to Si in the composition is at least 0.1.

2. The method of Embodiment 1, wherein the mole ratio of OH to Si in the composition is greater than 0.1.

3. The method of Embodiment 1, wherein the mole ratio of OH to Si in the composition ranges from 0.1 to 0.75.

4. The method of Embodiment 1, wherein the mole ratio of OH to Si in the composition ranges from 0.15 to 0.65.

5. The method of Embodiment 1, wherein the mole ratio of OH to Si in the composition ranges from 0.1 to 0.35.

6. The method of Embodiment 1, wherein the mole ratio of OH to Si in the composition ranges from 0.15 to 0.3.

7. The method of any one of Embodiments 1 to 6, wherein the thermal treatment is performed at a pH of at least 8.5.

8. The method of Embodiment 7, wherein the pH ranges from 10.5 to 13.5.

9. The method of Embodiment 7, wherein the pH is at least 9.5.

10. The method of Embodiment 7, wherein the pH is at least 10.5.

11. The method of any one of Embodiments 1 to 10, wherein the mole ratio of $H_2O$ to Si in the composition ranges from 10 to 50.

12. The method of any one of Embodiments 1 to 10, wherein the mole ratio of $H_2O$ to Si in the composition ranges from 10 to 25.

13. The method of any one of Embodiments 1 to 10, wherein the mole ratio of $H_2O$ to Si in the composition ranges from 10 to 20.

14. The method of any one of Embodiments 1 to 10, wherein the mole ratio of $H_2O$ to Si in the composition ranges from 10 to 15.

15. The method of any one of Embodiments 1 to 10, wherein the mole ratio of $H_2O$ to Si in the composition ranges from 10.6 to 44.1.

16. The method of any one of Embodiments 1 to 15, wherein the mole ratio of F to Si in the composition is greater than 0 and less than or equal to 1.

17. The method of any one of Embodiments 1 to 15, wherein the mole ratio of F to Si in the composition ranges from 0.01 to 0.5.

18. The method of any one of Embodiments 1 to 15, wherein the mole ratio of F to Si in the composition ranges from 0.03 to 0.37.

19. The method of any one of Embodiments 1 to 15, wherein the mole ratio of F to Si in the composition ranges from 0.1 to 0.3.

20. The method of any one of Embodiments 1 to 15, wherein the mole ratio of F to Si in the composition ranges from 75% to 125% of 0.13.

21. The method of any one of Embodiments 1 to 15, wherein the mole ratio of F to Si in the composition ranges from 75% to 125% of 0.25.

22. The method of any one of Embodiments 1 to 21, wherein the mole ratio of Cu to Si in the composition is 0.03.

23. The method of any one of Embodiments 1 to 22, wherein the mole ratio of the at least one organic structure directing agent to Si in the composition ranges from 0.01 to 0.25.

24. The method of any one of Embodiments 1 to 22, wherein the mole ratio of the at least one organic structure directing agent to Si in the composition ranges from 0.03 to 0.20.

25. The method of any one of Embodiments 1 to 22, wherein the mole ratio of the at least one organic structure directing agent to Si in the composition ranges from 0.1 to 0.25.

26. The method of any one of Embodiments 1 to 22, wherein the mole ratio of the at least one organic structure directing agent to Si in the composition ranges from 75% to 125% of 0.12.

27. The method of any one of Embodiments 1 to 22, wherein the mole ratio of the at least one organic structure directing agent to Si in the composition ranges from 75% to 125% of 0.2.

28. The method of any one of Embodiments 1 to 27, wherein the mole ratio of Na to Si in the composition ranges from 0.1 to 1.

29. The method of any one of Embodiments 1 to 27, wherein the mole ratio of Na to Si in the composition ranges from 0.2 to 0.84.

30. The method of any one of Embodiments 1 to 27, wherein the mole ratio of Na to Si in the composition ranges from 0.15 to 0.4.

31. The method of any one of Embodiments 1 to 27, wherein the mole ratio of Na to Si in the composition ranges from 0.2 to 0.35.

32. The method of any one of Embodiments 1 to 31, wherein the mole ratio of $SiO_2$ to $Al_2O_3$ in the composition ranges from 15 to 45.

33. The method of any one of Embodiments 1 to 31, wherein the mole ratio of $SiO_2$ to $Al_2O_3$ in the composition ranges from 19.8 to 39.9.

34. The method of any one of Embodiments 1 to 31, wherein the mole ratio of $SiO_2$ to $Al_2O_3$ in the composition ranges from 90% to 110% of 19.9.

35. The method of any one of Embodiments 1 to 31, wherein the mole ratio of $SiO_2$ to $Al_2O_3$ in the composition ranges from 90% to 110% of 30.0.

36. The method of any one of Embodiments 1 to 35, wherein the at least one aluminum source is chosen from aluminum isopropoxide and aluminum hydroxide.

37. The method of any one of Embodiments 1 to 36, wherein the at least one silica source is chosen from Ludox AS-40 and sodium silicate.

38. The method of any one of Embodiments 1 to 37, wherein the at least one fluoride source is chosen from sodium fluoride and trimethylammonium fluoride.

39. The method of any one of Embodiments 1 to 38, wherein the at least one organic structure directing agent comprises an adamantammonium group.

40. The method of any one of Embodiments 1 to 39, wherein the at least one organic structure directing agent comprises trimethyl adamantammonium.

41. The method of any one of Embodiments 1 to 40, wherein the thermal treatment comprises maintaining the composition at a temperature of at least 140 °C for at least 30 h.

42. The method of Embodiment 41, wherein the thermal treatment comprises maintaining the composition at a temperature ranging from 140 °C to 180 °C for a time ranging from 30 h to 80 h.

43. The method of Embodiment 42, wherein the thermal treatment comprises maintaining the composition at a temperature ranging from 140 °C to 170 °C for a time ranging from 30 h to 72 h.

44. The method of any one of Embodiments 1 to 40, wherein the thermal treatment comprises maintaining the composition at a temperature ranging from 90% to 110% of 140 °C for a time ranging from 90% to 110% of 72 h.

45. The method of any one of Embodiments 1 to 40, wherein the thermal treatment comprises maintaining the composition at a temperature of 140 °C for 72 h.

46. The method of any one of Embodiments 1 to 40, wherein the thermal treatment comprises maintaining the composition at a temperature of 170 °C for a time ranging from 30 h to 72 h.

47. The method of any one of Embodiments 1 to 40, wherein the thermal treatment comprises maintaining the composition at a temperature of 170 °C for a time ranging from 30 h to 72 h.

48. The method of any one of Embodiments 1 to 40, wherein the thermal treatment comprises maintaining the composition at a temperature ranging from 90% to 110% of 170 °C for a time ranging from 90% to 110% of 30 h.

49. The method of any one of Embodiments 1 to 40, wherein the thermal treatment comprises maintaining the composition at a temperature of 170 °C for 30 h.

50. The method of any one of Embodiments 1 to 40, wherein the thermal treatment comprises maintaining the composition at a temperature ranging from 90% to 110% of 170 °C for a time ranging from 90% to 110% of 72 h.

51. The method of any one of Embodiments 1 to 40, wherein the thermal treatment comprises maintaining the composition at a temperature of 170 °C for 72 h.

52. The method of any one of Embodiments 1 to 51, wherein the zeolite surface area (ZSA) is between 500 $m^2$/g and 600 $m^2$/g.

53. The method of any one of Embodiments 1 to 51, wherein the zeolite surface area (ZSA) is between 529 $m^2$/g and 592 $m^2$/g.

54. The method of any one of Embodiments 1 to 53, wherein the matrix surface area (MSA) ranges from 1 $m^2$/g to 50 $m^2$/g.

55. The method of any one of Embodiments 1 to 53, wherein the matrix surface area (MSA) ranges from 7 $m^2$/g to 49 $m^2$/g.

56. The method of any one of Embodiments 1 to 53, wherein the matrix surface area (MSA) ranges from 24 $m^2$/g to 43 $m^2$/g.

57. The method of any one of Embodiments 1 to 53, wherein the matrix surface area (MSA) is less than 35 $m^2$/g.

58. The method of any one of Embodiments 1 to 57, wherein the composition further comprises at least one copper source.

59. The method of Embodiment 58, wherein the copper source is copper-tetraethylenepentamine.

60. The method of Embodiment 58 or 59, wherein the small-pore zeolite comprises copper.

61. The method of any one of Embodiments 1 to 60, wherein the small-pore zeolite is characterized by a chabazite structure.

**Example Embodiments 3:**

Without limitation, some embodiments of the disclosure include:

1. A small-pore zeolite comprising aluminum, silicon, and fluoride, wherein the small-pore zeolite is characterized by an average crystallite size of less than 3 $\mu$m.

2. The small-pore zeolite of Embodiment 1, wherein the small-pore zeolite is characterized by an average crystallite size of less than 2 $\mu$m.

3. The small-pore zeolite of Embodiment 1 or 2, wherein the small-pore zeolite is characterized by an average crystallite size of less than 1 $\mu$m.

4. The small-pore zeolite of any one of Embodiments 1 to 3, wherein the small-pore zeolite is substantially in the form of faceted crystallites.

5. The small-pore zeolite of any one of Embodiments 1 to 4, wherein the small-pore zeolite further comprises at least one organic structure directing agent.

6. The small-pore zeolite of any one of Embodiments 1 to 5, where the small-pore zeolite is characterized by a chabazite structure.

7. The small-pore zeolite of any one of Embodiments 1 to 6, wherein the small-pore zeolite is characterized by a fluoride content ranging from 10 ppm to 2000 ppm.

8. The small-pore zeolite of any one of Embodiments 1 to 7, wherein the small-pore zeolite is characterized by a fluoride content ranging from 40 ppm to 1000 ppm.

9. The small-pore zeolite of any one of Embodiments 1 to 8, wherein the small-pore zeolite is characterized by a fluoride content ranging from 40 ppm to 225 ppm.

10. The small-pore zeolite of any one of Embodiments 1 to 8, wherein the small-pore zeolite is characterized by a fluoride content ranging from 395 ppm to 680 ppm.

11. The small-pore zeolite of any one of Embodiments 1 to 10, wherein the small-pore zeolite is characterized by a mole ratio of $SiO_2$ to $Al_2O_3$ of less than 32.5.

12. The small-pore zeolite of any one of Embodiments 1 to 10, wherein the small-pore zeolite is characterized by a mole ratio of $SiO_2$ to $Al_2O_3$ of less than 22.5.

13. The small-pore zeolite of any one of Embodiments 1 to 10, wherein the small-pore zeolite is characterized by a mole ratio of $SiO_2$ to $Al_2O_3$ of less than 20.

14. The small-pore zeolite of any one of Embodiments 1 to 10, wherein the small-pore zeolite is characterized by a mole ratio of $SiO_2$ to $Al_2O_3$ of less than 17.5.

15. The small-pore zeolite of any one of Embodiments 1 to 10, wherein the small-pore zeolite is characterized by a mole ratio of $SiO_2$ to $Al_2O_3$ ranging from 16 to 31.

16. The small-pore zeolite of any one of Embodiments 1 to 6, wherein the small-pore zeolite is characterized by a mole ratio of $SiO_2$ to $Al_2O_3$ ranging from 16 to 31 and a fluoride content ranging from 395 ppm to 680 ppm.

17. The small-pore zeolite of any one of Embodiments 1 to 6, wherein the small-pore zeolite is characterized by a mole ratio of $SiO_2$ to $Al_2O_3$ ranging from 90% to 110% of 16.9.

18. The small-pore zeolite of any one of Embodiments 1 to 6, wherein the small-pore zeolite is characterized by a fluoride content ranging from 90% to 110% of 678 ppm.

19. The small-pore zeolite of any one of Embodiments 1 to 6, wherein the small-pore zeolite is characterized by a mole ratio of $SiO_2$ to $Al_2O_3$ ranging from 90% to 110% of 16.9 and a fluoride content ranging from 90% to 110% of 678 ppm.

20. The small-pore zeolite of any one of Embodiments 1 to 6, wherein the small-pore zeolite is characterized by a mole ratio of $SiO_2$ to $Al_2O_3$ ranging from 90% to 110% of 30.8.

21. The small-pore zeolite of any one of Embodiments 1 to 6, wherein the small-pore zeolite is characterized by a fluoride content ranging from 90% to 110% of 399 ppm.

22. The small-pore zeolite of any one of Embodiments 1 to 6, wherein the small-pore zeolite is characterized by a mole ratio of $SiO_2$ to $Al_2O_3$ ranging from 90% to 110% of 30.8 and a fluoride content ranging from 90% to 110% of 399 ppm.

23. The small-pore zeolite of any one of Embodiments 1 to 22, wherein the small-pore zeolite is characterized by a matrix surface area ranging from 1 m$^2$/g to 50 m$^2$/g.

24. The small-pore zeolite of any one of Embodiments 1 to 22, wherein the small-pore zeolite is characterized by a matrix surface area ranging from 7 m$^2$/g to 49 m$^2$/g.

25. The small-pore zeolite of any one of Embodiments 1 to 22, wherein the small-pore zeolite is characterized by a matrix surface area ranging from 24 m$^2$/g to 43 m$^2$/g.

26. The small-pore zeolite of any one of Embodiments 1 to 22, wherein the small-pore zeolite is characterized by a matrix surface area ranging from 20 m$^2$/g to 45 m$^2$/g.

27. The small-pore zeolite of any one of Embodiments 1 to 22, wherein the small-pore zeolite is characterized by a matrix surface area ranging from 20 m$^2$/g to 35 m$^2$/g.

28. The small-pore zeolite of any one of Embodiments 1 to 6, wherein the small-pore zeolite is an H-form zeolite.

29. The small-pore zeolite of Embodiment 28, wherein the small-pore zeolite is an H-form zeolite characterized by a fluoride content ranging from 65 ppm to 920 ppm.

30. The small-pore zeolite of Embodiment 28 or 29, wherein the small-pore zeolite is an H-form zeolite characterized by a mole ratio of $SiO_2$ to $Al_2O_3$ ranging from 14 to 21.

31. The small-pore zeolite of Embodiment 28, wherein the small-pore zeolite is an H-form zeolite characterized by a mole ratio of $SiO_2$ to $Al_2O_3$ ranging from 90% to 110% of 17.5.

32. The small-pore zeolite of Embodiment 28, wherein the small-pore zeolite is an H-form zeolite characterized by a fluoride content ranging from 90% to 110% of 917 ppm.

33. The small-pore zeolite of Embodiment 28, wherein the small-pore zeolite is an H-form zeolite characterized by a mole ratio of $SiO_2$ to $Al_2O_3$ ranging from 90% to 110% of 17.5 and a fluoride content ranging from 90% to 110% of 917 ppm.

34. The small-pore zeolite of Embodiment 28, wherein the small-pore zeolite is an H-form zeolite characterized by a mole ratio of $SiO_2$ to $Al_2O_3$ ranging from 90% to 110% of 20.2.

35. The small-pore zeolite of Embodiment 28, wherein the small-pore zeolite is an H-form zeolite characterized by a fluoride content ranging from 90% to 110% of 269 ppm.

36. The small-pore zeolite of Embodiment 28, wherein the small-pore zeolite is an H-form zeolite characterized by a mole ratio of $SiO_2$ to $Al_2O_3$ ranging from 90% to 110% of 20.2 and a fluoride content ranging from 90% to 110% of 269 ppm.

37. The small-pore zeolite of Embodiment 28, wherein the small-pore zeolite is an H-form zeolite characterized by a mole ratio of $SiO_2$ to $Al_2O_3$ ranging from 90% to 110% of 14.1.

38. The small-pore zeolite of Embodiment 28, wherein the small-pore zeolite is an H-form zeolite characterized by a fluoride content ranging from 90% to 110% of 68 ppm.

39. The small-pore zeolite of Embodiment 28, wherein the small-pore zeolite is an H-form zeolite characterized by a mole ratio of $SiO_2$ to $Al_2O_3$ ranging from 90% to 110% of 14.1 and a fluoride content ranging from 90% to 110% of 68 ppm.

40. The small-pore zeolite of any one of Embodiments 1 to 6, wherein the small-pore zeolite is a Na-form zeolite.

41. The small-pore zeolite of any one of Embodiments 1 to 6, wherein the small-pore zeolite is an Na-form zeolite characterized by a fluoride content ranging from 70 ppm to 500 ppm.

42. The small-pore zeolite of any one of Embodiments 1 to 6, wherein the small-pore zeolite is an Na-form zeolite characterized by a mole ratio of $SiO_2$ to $Al_2O_3$ ranging from 19 to 31.

43. The small-pore zeolite of any one of Embodiments 1 to 6, wherein the small-pore zeolite is an Na-form zeolite characterized by a fluoride content ranging from 70 ppm to 500 ppm and a mole ratio of $SiO_2$ to $Al_2O_3$ ranging from 19 to 31.

44. The small-pore zeolite of any one of Embodiments 1 to 6, wherein the small-pore zeolite is an Na-form zeolite characterized by a mole ratio of $SiO_2$ to $Al_2O_3$ ranging from 90% to 110% of 19.7.

45. The small-pore zeolite of any one of Embodiments 1 to 6, wherein the small-pore zeolite is an Na-form zeolite characterized by a fluoride content ranging from 90% to 110% of 72 ppm.

46. The small-pore zeolite of any one of Embodiments 1 to 6, wherein the small-pore zeolite is an Na-form zeolite characterized by a mole ratio of $SiO_2$ to $Al_2O_3$ ranging from 90% to 110% of 19.7 and a fluoride content ranging from 90% to 110% of 72 ppm.

47. The small-pore zeolite of any one of Embodiments 1 to 6, wherein the small-pore zeolite is an Na-form zeolite characterized by a mole ratio of $SiO_2$ to $Al_2O_3$ ranging from 90% to 110% of 20.2.

48. The small-pore zeolite of any one of Embodiments 1 to 6, wherein the small-pore zeolite is an Na-form zeolite characterized by a fluoride content ranging from 90% to 110% of 484 ppm.

49. The small-pore zeolite of any one of Embodiments 1 to 6, wherein the small-pore zeolite is an Na-form zeolite characterized by a mole ratio of $SiO_2$ to $Al_2O_3$ ranging from 90% to 110% of 20.2 and a fluoride content ranging from 90% to 110% of 484 ppm.

50. The small-pore zeolite of any one of Embodiments 1 to 6, wherein the small-pore zeolite is an Na-form zeolite characterized by a mole ratio of $SiO_2$ to $Al_2O_3$ ranging from 90% to 110% of 30.8.

51. The small-pore zeolite of any one of Embodiments 1 to 6, wherein the small-pore zeolite is an Na-form zeolite characterized by a fluoride content ranging from 90% to 110% of 277 ppm.

52. The small-pore zeolite of any one of Embodiments 1 to 6, wherein the small-pore zeolite is an Na-form zeolite characterized by a mole ratio of $SiO_2$ to $Al_2O_3$ ranging from 90% to 110% of 30.8 and a fluoride content ranging from 90% to 110% of 277 ppm.

53. The small-pore zeolite of any one of Embodiments 1 to 6, wherein the small-pore zeolite further comprises copper.

54. The small-pore zeolite of Embodiment 53, wherein the small-pore zeolite is characterized by a mole ratio of $SiO_2$ to $Al_2O_3$ ranging from 16 to 21.

55. The small-pore zeolite of Embodiment 53 or 54, wherein the small-pore zeolite is characterized by a fluoride content ranging from 40 ppm to 210 ppm.

56. The small-pore zeolite of Embodiment 53, wherein the small-pore zeolite is characterized by a mole ratio of $SiO_2$ to $Al_2O_3$ ranging from 90% to 110% of 16.9.

57. The small-pore zeolite of Embodiment 53 or 56, wherein the small-pore zeolite is characterized by a fluoride content ranging from 90% to 110% of 41 ppm.

58. The small-pore zeolite of Embodiment 53, wherein the small-pore zeolite is characterized by a mole ratio of $SiO_2$ to $Al_2O_3$ ranging from 90% to 110% of 20.2.

59. The small-pore zeolite of Embodiment 53 or 58, wherein the small-pore zeolite is characterized by a fluoride content ranging from 90% to 110% of 208 ppm.

60. The small-pore zeolite of Embodiment 58 or 59, wherein the small-pore zeolite is characterized by a CuO content ranging from 1 wt% to 4 wt%.

61. The small-pore zeolite of any one of Embodiments 58 to 60, wherein the small-pore zeolite is characterized by a mole ratio of Cu to Al ranging from 0.05 to 0.35.

62. The small-pore zeolite of Embodiment 58 or 59, wherein the small-pore zeolite is characterized by a CuO content ranging from 90% to 110% of 1.05 wt% and a mole ratio of Cu to Al of 90% to 110% of 0.09.

63. The small-pore zeolite of Embodiment 58 or 59, wherein the small-pore zeolite is characterized by a CuO content ranging from 90% to 110% of 2.13 wt% and a mole ratio of Cu to Al of 90% to 110% of 0.18.

64. The small-pore zeolite of Embodiment 58 or 59, wherein the small-pore zeolite is characterized by a CuO content ranging from 90% to 110% of 3.78 wt% and a mole ratio of Cu to Al of 90% to 110% of 0.32.

65. A small-pore zeolite comprising aluminum, silicon, and fluoride, wherein the small-pore zeolite is characterized by a fluoride content ranging from 10 ppm to 2000 ppm.

66. The small-pore zeolite of Embodiment 65, wherein the small-pore zeolite is characterized by a fluoride content ranging from 40 ppm to 1000 ppm.

67. The small-pore zeolite of Embodiment 65 or 66, wherein the small-pore zeolite is characterized by a fluoride content ranging from 40 ppm to 225 ppm.

68. The small-pore zeolite of any one of Embodiments 65 to 67, wherein the small-pore zeolite is characterized by a mole ratio of $SiO_2$ to $Al_2O_3$ of less than 32.5.

69. The small-pore zeolite of any one of Embodiments 65 to 67, wherein the small-pore zeolite is characterized by a mole ratio of $SiO_2$ to $Al_2O_3$ of less than 22.5.

70. The small-pore zeolite of any one of Embodiments 65 to 67, wherein the small-pore zeolite is characterized by a mole ratio of $SiO_2$ to $Al_2O_3$ of less than 20.

71. The small-pore zeolite of any one of Embodiments 65 to 67, wherein the small-pore zeolite is characterized by a mole ratio of $SiO_2$ to $Al_2O_3$ of less than 17.5.

72. The small-pore zeolite of any one of Embodiments 65 to 67, wherein the small-pore zeolite is characterized by a mole ratio of $SiO_2$ to $Al_2O_3$ ranging from 16 to 31.

73. The small-pore zeolite of any one of Embodiments 65 to 72, wherein the small-pore zeolite is characterized by a matrix surface area ranging from 1 $m^2$/g to 50 $m^2$/g.

74. The small-pore zeolite of any one of Embodiments 65 to 72, wherein the small-pore zeolite is characterized by a matrix surface area ranging from 7 $m^2$/g to 49 $m^2$/g.

75. The small-pore zeolite of any one of Embodiments 65 to 72, wherein the small-pore zeolite is characterized by a matrix surface area ranging from 24 $m^2$/g to 43 $m^2$/g.

76. The small-pore zeolite of any one of Embodiments 65 to 72, wherein the small-pore zeolite is characterized by a matrix surface area ranging from 20 $m^2$/g to 45 $m^2$/g.

77. The small-pore zeolite of any one of Embodiments 65 to 72, wherein the small-pore zeolite is characterized by a matrix surface area ranging from 20 $m^2$/g to 35 $m^2$/g.

78. The small-pore zeolite of any one of Embodiments 65 to 77, wherein the small-pore zeolite is characterized by an average crystallite size of less than 3 $\mu$m.

79. The small-pore zeolite of any one of Embodiments 65 to 77, wherein the small-pore zeolite is characterized by an average crystallite size of less than 2 $\mu$m.

80. The small-pore zeolite of any one of Embodiments 65 to 77, wherein the small-pore zeolite is characterized by an average crystallite size of less than 1 $\mu$m.

81. The small-pore zeolite of any one of Embodiments 65 to 80, wherein the small-pore zeolite is substantially in the form of faceted crystallites.

82. The small-pore zeolite of any one of Embodiments 65 to 81, where the small-pore zeolite is characterized by a chabazite structure.

83. The small-pore zeolite of any one of Embodiments 65 to 82, wherein the small-pore zeolite further comprises at least one organic structure directing agent.

84. The small-pore zeolite of any one of Embodiments 65 to 83, wherein the small-pore zeolite is an H-form zeolite.

85. The small-pore zeolite of any one of Embodiments 65 to 83, wherein the small-pore zeolite is a Na-form zeolite.

86. The small-pore zeolite of any one of Embodiments 65 to 83, wherein the small-pore zeolite further comprises copper.

87. A method of reducing nitrogen oxides ($NO_x$) comprising contacting a gaseous stream containing nitrogen oxides with at least one small-pore zeolite of any one of Embodiments 1 to 86 at a temperature ranging from 200 °C to 550 °C.

88. The method of Embodiment 87, wherein the overall conversion of $NO_x$ at 200 °C is greater than 60%.

89. The method of Embodiment 87 or 88, wherein the overall conversion of $NO_x$ at 550 °C is greater than 75%.

90. The method of any one of Embodiments 87 to 89, wherein the at least one small-pore zeolite comprises copper.

91. The method of any one of Embodiments 87 to 90, wherein the at least one small-pore zeolite is characterized by a chabazite structure.

## Methods of Preparing Zeolites:

Some embodiments of this disclosure relate to methods of preparing a small-pore zeolite using at least one fluoride source at a pH of at least 8.5.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the at least one fluoride source is chosen from inorganic fluoride salts and organic structure directing agent fluorides. In some embodiments, the at least one fluoride source is chosen from alkali metal fluorides. In some embodiments, the at least one fluoride source is chosen from sodium fluoride, trimethyl adamantammonium fluoride, and mixtures of any of the preceding.

In some embodiments, the small-pore zeolite is characterized by an average crystallite size of less than 3 $\mu$m. In some embodiments, the small-pore zeolite is characterized by an average crystallite size of less than 2 $\mu$m. In some embodiments, the small-pore zeolite is characterized by an average crystallite size of less than 1 $\mu$m.

In some embodiments, the small-pore zeolite is substantially in the form of faceted crystallites.

In some embodiments, the small-pore zeolite is substantially in the form of faceted crystallites and characterized by an average crystallite size of less than 3 $\mu$m. In some embodiments, the small-pore zeolite is substantially in the form of faceted crystallites and characterized by an average crystallite size of less than 2 $\mu$m. In some embodiments, the small-pore zeolite is substantially in the form of faceted crystallites and characterized by an average crystallite size of less than 1 $\mu$m.

In some embodiments, the small-pore zeolite is characterized by a degree of crystallinity greater than 50%. In some embodiments, the small-pore zeolite is characterized by a degree of crystallinity greater than 55%. In some embodiments, the small-pore zeolite is characterized by a degree of crystallinity greater than 60%. In some embodiments, the small-pore zeolite is characterized by a degree of crystallinity greater than 65%. In some embodiments, the small-pore zeolite is characterized by a degree of crystallinity greater than 70%. In some embodiments, the small-pore zeolite is characterized by a degree of crystallinity greater than 75%. In some embodiments, the small-pore zeolite is characterized by a degree of crystallinity greater than 80%. In some embodiments, the small-pore zeolite is characterized by a degree of crystallinity greater than 85%. In some embodiments, the small-pore zeolite is characterized by a degree of crystallinity greater than 90%.

In some embodiments, the small-pore zeolite is characterized by a fluoride content ranging from 10 ppm to 2000 ppm. In some embodiments, the small-pore zeolite is characterized by a fluoride content ranging from 40 ppm to 1000 ppm. In some embodiments, the small-pore zeolites are characterized by a fluoride content ranging from 40 ppm to 225 ppm.

In some embodiments, the small-pore zeolite is characterized by a mole ratio of $SiO_2$ to $Al_2O_3$ of less than 32.5. In some embodiments, the small-pore zeolite is characterized by a mole ratio of $SiO_2$ to $Al_2O_3$ of less than 30. In some embodiments, the small-pore zeolite is characterized by a mole ratio of $SiO_2$ to $Al_2O_3$ of less than 27.5. In some embodiments, the small-pore zeolite is characterized by a mole ratio of $SiO_2$ to $Al_2O_3$ of less than 22.5. In some embodiments, the small-pore zeolite is characterized by a mole ratio of $SiO_2$ to $Al_2O_3$ of less than 20. In some embodiments, the small-pore zeolite is characterized by a mole ratio of $SiO_2$ to $Al_2O_3$ of less than 17.5.

In some embodiments, the small-pore zeolite is characterized by a mole ratio of $SiO_2$ to $Al_2O_3$ ranging from 10 to 40. In some embodiments, the small-pore zeolite is characterized by a mole ratio of $SiO_2$ to $Al_2O_3$ ranging from 14 to 31.

In some embodiments, the small-pore zeolite is characterized by a fluoride content ranging from 10 ppm to 2000 ppm and a mole ratio of $SiO_2$ to $Al_2O_3$ ranging from 10 to 40. In some embodiments, the small-pore zeolite is characterized by a fluoride content ranging from 40 ppm to 1000 ppm and a mole ratio of $SiO_2$ to $Al_2O_3$ ranging from 14 to 31.

In some embodiments, the small-pore zeolite is characterized by a fluoride content ranging from 10 ppm to 2000 ppm and an average crystallite size of less than 3 $\mu$m. In some embodiments, the small-pore zeolite is characterized by a fluoride content ranging from 10 ppm to 2000 ppm and an average crystallite size of less than 2 $\mu$m. In some embodiments, the small-pore zeolite is characterized by a fluoride content ranging from 10 ppm to 2000 ppm and an average crystallite size of less than 1 $\mu$m.

In some embodiments, the small-pore zeolite is characterized by a caged structure. In some embodiments, the small-pore zeolite is characterized by a chabazite structure.

In some embodiments, the small-pore zeolite is a H-form zeolite.

In some embodiments, the small-pore zeolite is a Na-form zeolite.

In some embodiments, the small-pore zeolite further comprises copper ions.

Some embodiments of this disclosure relate methods of preparing a small-pore zeolite comprising subjecting a composition to a thermal treatment at a pH of at least 8.5, wherein the composition comprises at least one aluminum source, at least one silica source, at least one fluoride source, and at least one organic structure directing agent.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the composition further comprises at least one solvent. In some embodiments, the at least one solvent is water.

In some embodiments, the composition is in the form of a gel. In some embodiments, the composition is in the form of a hydrogel. In some embodiments, the composition is in the form of a synthesis gel.

In some embodiments, the at least one aluminum source is chosen from aluminum isopropoxide, aluminum hydroxide, and mixtures of any of the preceding.

In some embodiments, the at least one silica source is chosen from Ludox AS-40, sodium silicate, and mixtures of any of the preceding.

In some embodiments, the at least one fluoride source is chosen from inorganic fluoride salts and organic structure directing agent fluorides. In some embodiments, the at least one fluoride source is chosen from alkali metal fluorides. In some embodiments, the at least one fluoride source is chosen from sodium fluoride, trimethyl adamantammonium fluoride, and mixtures of any of the preceding.

In some embodiments, the at least one organic structure directing agent is trimethyl adamantammonium.

In some embodiments, the composition further comprises at least one copper source.

In some embodiments, the at least one copper source is chosen from copper salts and copper complexes. In some embodiments, the at least one copper source is copper-tetraethylenepentamine.

In some embodiments, the mole ratio of $H_2O$ to Si ($H_2O$/Si) in the composition ranges from 1 to 50. In some embodiments, the mole ratio of $H_2O$ to Si ($H_2O$/Si) in the composition ranges from 10 to 50. In some embodiments, the mole ratio of $H_2O$ to Si ($H_2O$/Si) in the composition ranges from 10 to 40.

In some embodiments, the mole ratio of $H_2O$ to Si in the composition ranges from 10 to 50. In some embodiments, the mole ratio of $H_2O$ to Si in the composition ranges from 10 to 25. In some embodiments, the mole ratio of $H_2O$ to Si in the composition ranges from 10 to 20. In some embodiments, the mole ratio of $H_2O$ to Si in the composition ranges from 10 to 15.

In some embodiments, the mole ratio of fluoride to silicon (F/Si) in the composition is greater than 0 and less than or equal to 1. In some embodiments, the mole ratio of fluoride to silicon (F/Si) in the composition is greater than 0 and less than or equal to 0.8. In some embodiments, the mole ratio of fluoride to silicon (F/Si) in the composition is greater than 0 and less than or equal to 0.6. In some embodiments, the mole ratio of fluoride to silicon (F/Si) in the composition is greater than 0 and less than or equal to 0.4. In some embodiments, the mole ratio of fluoride to silicon (F/Si) in the composition ranges from 0.01 to 0.4.

In some embodiments, the mole ratio of fluoride to silicon in the composition ranges from 0.1 to 0.3. In some embodiments, the mole ratio of fluoride to silicon in the composition ranges from 75% to 125% (such as, e.g., 80% to 120%, 85% to 115%, 90% to 110%, 95% to 105%) of 0.13. In some embodiments, the mole ratio of fluoride to silicon in the composition ranges from 75% to 125% (such as, e.g., 80% to 120%, 85% to 115%, 90% to 110%, 95% to 105%) of 0.25.

In some embodiments, the mole ratio of sodium to silicon (Na/Si) in the composition is greater than 0 and less than or equal to 1. In some embodiments, the mole ratio of sodium to silicon (Na/Si) in the composition is greater than 0.1 and less than or equal to 1. In some embodiments, the mole ratio of sodium to silicon (Na/Si) in the composition ranging from 0.15 to 0.9. In some embodiments, the mole ratio of sodium to silicon (Na/Si) in the composition ranging from 0.2 to 0.85. In some embodiments, the mole ratio of sodium to silicon (Na/Si) in the composition ranging from 0.15 to 0.4. In some embodiments, the mole ratio of sodium to silicon (Na/Si) in the composition ranging from 0.2 to 0.35.

In some embodiments, the mole ratio of at least one organic structure directing agent such as, e.g., trimethyl adamantammonium, to silicon in the composition is greater than 0 and less than or equal to 0.5. In some embodiments, the mole ratio of at least one organic structure directing agent such as, e.g., trimethyl adamantammonium, to silicon in the composition is greater than 0 and less than or equal to 0.25. In some embodiments, the mole ratio of at least one organic structure directing agent such as, e.g., trimethyl adamantammonium, to silicon in the composition ranges from 0.01 to 0.25.

In some embodiments, the mole ratio of hydroxide to silicon (OH/Si) in the composition is greater than 0 and less than or equal to 1. In some embodiments, the mole ratio of hydroxide to silicon (OH/Si) in the composition ranges from 0.1 to 0.9.

In some embodiments, the mole ratio of OH to Si in the composition ranges from 0.1 to 0.75. In some embodiments, the mole ratio of OH to Si in the composition ranges from 0.15 to 0.65. In some embodiments, the mole ratio of OH to Si in the composition ranges from 0.1 to 0.35. In some embodiments, the mole ratio of OH to Si in the composition ranges from 0.15 to 0.3.

In some embodiments, the mole ratio of copper to silicon (Cu/Si) in the composition is less than 0.1. In some embodiments, the mole ratio of copper to silicon (Cu/Si) in the composition is less than 0.075. In some embodiments, the mole ratio of copper to silicon (Cu/Si) in the composition is less than 0.05. In some embodiments, the mole ratio of copper to silicon in the composition is 0.03.

In some embodiments, the matrix surface area (MSA) is less than 35 m$^2$/g.

In some embodiments, the MSA ranges from 1 m$^2$/g to 50 m$^2$/g. In some embodiments, the MSA ranges from 7 m$^2$/g to 49 m$^2$/g. In some embodiments, the MSA ranges from 24 m$^2$/g to 43 m$^2$/g. In some embodiments, the MSA ranges from 20 m$^2$/g to 45 m$^2$/g. In some embodiments, the MSA ranges from 20 m$^2$/g to 35 m$^2$/g.

In some embodiments, the composition is subjected to a thermal treatment at a pH of at least 8.5 until at least one zeolite crystal forms.

In some embodiments, the composition is subjected to a thermal treatment for at least 1 h. In some embodiments, the composition is subjected to a thermal treatment for at least 10 h. In some embodiments, the composition is subjected to a thermal treatment for at least 20 h. In some embodiments, the composition is subjected to a thermal treatment for at least 24 h. In some embodiments, the composition is subjected to a thermal treatment for at least 30 h. In some embodiments, the composition is subjected to a thermal treatment for at least 36 h. In some embodiments, the composition is subjected to a thermal treatment for at least 48 h. In some embodiments, the composition is subjected to a thermal treatment for at least 50 h. In some embodiments, the composition is subjected to a thermal treatment for at least 60 h. In some embodiments, the composition is subjected to a thermal treatment for at least 70 h. In some embodiments, the composition is subjected to a thermal treatment for at least 72 h.

In some embodiments, the thermal treatment comprises hydrothermal crystallization at a temperature of at least 100 °C. In some embodiments, the thermal treatment comprises hydrothermal crystallization at a temperature of at least 120 °C. In some embodiments, the thermal treatment comprises hydrothermal crystallization at a temperature of at least 140 °C. In some embodiments, the thermal treatment comprises hydrothermal crystallization at a temperature of at least 150 °C. In some embodiments, the thermal treatment comprises hydrothermal crystallization at a temperature of at least 160 °C. In some embodiments, the thermal treatment comprises hydrothermal crystallization at a temperature of at least 170 °C. In some embodiments, the thermal treatment comprises hydrothermal crystallization at a temperature of at least 200 °C.

In some embodiments, the thermal treatment comprises hydrothermal crystallization at a temperature ranging from 75% to 125% (such as, e.g., 80% to 120%, 85% to 115%, 90% to 110%, 95% to 105%) of 140 °C. In some embodiments, the thermal treatment comprises hydrothermal crystallization at a temperature ranging from 75% to 125% (such as, e.g., 80% to 120%, 85% to 115%, 90% to 110%, 95% to 105%) of 170 °C.

The temperature and/or duration of time of a thermal treatment may be adjusted such that the composition forms zeolites with specific properties.

In some embodiments, the thermal treatment further comprises moderate agitation at an agitation rate of at least 100 rpm (revolutions per minute).

In some embodiments, the aluminum content in the mother liquor after the thermal treatment is greater than 100 ppm. In some embodiments, the aluminum content of the mother liquor after the thermal treatment ranges from 100 ppm to 200 ppm.

In some embodiments, the small-pore zeolite is characterized by a mole ratio of SiO$_2$ to Al$_2$O$_3$ ranging from 16 to 31. In some embodiments, the small-pore zeolite is characterized by a fluoride content ranging from 395 ppm to 680 ppm. In some embodiments, the small-pore zeolite is characterized by a mole ratio of SiO$_2$ to Al$_2$O$_3$ ranging from 16 to 31 and a fluoride content ranging from 395 ppm to 680 ppm.

In some embodiments, the small-pore zeolite is characterized by a mole ratio of SiO$_2$ to Al$_2$O$_3$ ranging from 50% to 150% (such as, e.g., 50% to 150%, 75% to 125%, 80% to 120%, 85% to 115%, 90% to 110%, or 95% to 105%) of 16.9 and a fluoride content ranging from 50% to 150% (such as, e.g., 50% to 150%, 75% to 125%, 80% to 120%, 85% to 115%, 90% to 110%, or 95% to 105%) of 678 ppm. In some embodiments, the small-pore zeolite is characterized by a mole ratio of $SiO_2$ to $Al_2O_3$ ranging from 75% to 125% of 16.9 and a fluoride content ranging from 75% to 125% of 678 ppm. In some embodiments, the small-pore zeolite is characterized by a mole ratio of $SiO_2$ to $Al_2O_3$ ranging from 80% to 120% of 16.9 and a fluoride content ranging from 80% to 120% of 678 ppm. In some embodiments, the small-pore zeolite is characterized by a mole ratio of $SiO_2$ to $Al_2O_3$ ranging from 85% to 115% of 16.9 and a fluoride content ranging from 85% to 115% of 678 ppm. In some embodiments, the small-pore zeolite is characterized by a mole ratio of $SiO_2$ to $Al_2O_3$ ranging from 90% to 110% of 16.9 and a fluoride content ranging from 90% to 110% of 678 ppm. In some embodiments, the small-pore zeolite is characterized by a mole ratio of $SiO_2$ to $Al_2O_3$ ranging from 95% to 105% of 16.9 and a fluoride content ranging from 95% to 105% of 678 ppm.

In some embodiments, the small-pore zeolite is characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 30.8 and a fluoride content ranging from 50% to 150% (such as, e.g., 50% to 150%, 75% to 125%, 80% to 120%, 85% to 115%, 90% to 110%, or 95% to 105%) of 399 ppm. In some embodiments, the small-pore zeolite is characterized by a mole ratio of $SiO_2$ to $Al_2O_3$ ranging from 75% to 125% of 30.8 and a fluoride content ranging from 75% to 125% of 399 ppm. In some embodiments, the small-pore zeolite is characterized by a mole ratio of $SiO_2$ to $Al_2O_3$ ranging from 80% to 120% of 30.8 and a fluoride content ranging from 80% to 120% of 399 ppm. In some embodiments, the small-pore zeolite is characterized by a mole ratio of $SiO_2$ to $Al_2O_3$ ranging from 85% to 115% of 30.8 and a fluoride content ranging from 85% to 115% of 399 ppm. In some embodiments, the small-pore zeolite is characterized by a mole ratio of $SiO_2$ to $Al_2O_3$ ranging from 90% to 110% of 30.8 and a fluoride content ranging from 90% to 110% of 399 ppm. In some embodiments, the small-pore zeolite is characterized by a mole ratio of $SiO_2$ to $Al_2O_3$ ranging from 95% to 105% of 30.8 and a fluoride content ranging from 95% to 105% of 399 ppm.

In some embodiments, the methods further comprise an ion exchange treatment. In some embodiments, the methods further comprise an ion exchange treatment producing a H-form zeolite, a Na-form zeolite, or a copper-ion exchanged zeolite. In some embodiments, the methods further comprise an ion exchange treatment producing a H-form zeolite. In some embodiments, the methods further comprise ion exchange treatment producing a Na-form zeolite. In some embodiments, the methods further comprise an ion exchange treatment producing a copper-ion exchanged zeolite.

In some embodiments, the small-pore zeolite is a H-form zeolite.

In some embodiments, the small-pore zeolite is a H-form zeolite characterized by a mole ratio of $SiO_2$ to $Al_2O_3$ ranging from 14 to 21. In some embodiments, the small-pore zeolite is a H-form zeolite characterized by a fluoride content ranging from 65 ppm to 920 ppm. In some embodiments, the small-pore zeolite is a H-form zeolite characterized by a mole ratio of $SiO_2$ to $Al_2O_3$ ranging from 14 to 21 and a fluoride content ranging from 65 ppm to 920 ppm.

In some embodiments, the small-pore zeolite is a H-form zeolite characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 17.5 and a fluoride content ranging from 50% to 150% (such as, e.g., 50% to 150%, 75% to 125%, 80% to 120%, 85% to 115%, 90% to 110%, or 95% to 105%) of 917 ppm. In some embodiments, the small-pore zeolite is a H-form zeolite characterized by a mole ratio of $SiO_2$ to $Al_2O_3$ ranging from 75% to 125% of 17.5 and a fluoride content ranging from 75% to 125% of 917 ppm. In some embodiments, the small-pore zeolite is a H-form zeolite characterized by a mole ratio of $SiO_2$ to $Al_2O_3$ ranging from 80% to 120% of 17.5 and a fluoride content ranging from 80% to 120% of 917 ppm. In some embodiments, the small-pore zeolite is a H-form zeolite characterized by a mole ratio of $SiO_2$ to $Al_2O_3$ ranging from 85% to 115% of 17.5 and a fluoride content ranging from 85% to 115% of 917 ppm. In some embodiments, the small-pore zeolite is a H-form zeolite characterized by a mole ratio of $SiO_2$ to $Al_2O_3$ ranging from 90% to 110% of 17.5 and a fluoride content ranging from 90% to 110% of 917 ppm. In some embodiments, the small-pore zeolite is a H-form zeolite characterized by a mole ratio of $SiO_2$ to $Al_2O_3$ ranging from 95% to 105% of 17.5 and a fluoride content ranging from 95% to 105% of 917 ppm.

In some embodiments, the small-pore zeolite is a H-form zeolite characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 20.2 and a fluoride content ranging from 50% to 150% (such as, e.g., 50% to 150%, 75% to 125%, 80% to 120%, 85% to 115%, 90% to 110%, or 95% to 105%) of 269 ppm. In some embodiments, the small-pore zeolite is a H-form zeolite characterized by a mole ratio of $SiO_2$ to $Al_2O_3$ ranging from 75% to 125% of 20.2 and a fluoride content ranging from 75% to 125% of 269 ppm. In some embodiments, the small-pore zeolite is a H-form zeolite characterized by a mole ratio of $SiO_2$ to $Al_2O_3$ ranging from 80% to 120% of 20.2 and a fluoride content ranging from 80% to 120% of 269 ppm. In some embodiments, the small-pore zeolite is a H-form zeolite characterized by a mole ratio of $SiO_2$ to $Al_2O_3$ ranging from 85% to 115% of 20.2 and a fluoride content ranging from 85% to 115% of 269 ppm. In some embodiments, the small-pore zeolite is a H-form zeolite characterized by a mole ratio of $SiO_2$ to $Al_2O_3$ ranging from 90% to 110% of 20.2 and a fluoride content ranging from 90% to 110% of 269 ppm. In some embodiments, the small-pore zeolite is a H-form zeolite characterized by a mole ratio of $SiO_2$ to $Al_2O_3$ ranging from 95% to 105% of 20.2 and a fluoride content ranging from 95% to 105% of 269 ppm.

In some embodiments, the small-pore zeolite is a H-form zeolite characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 14.1 and a fluoride content ranging from 50% to 150% (such as, e.g., 50% to 150%, 75% to 125%, 80% to 120%, 85% to 115%, 90% to 110%, or 95% to 105%) of 68 ppm. In some embodiments, the small-pore zeolite is a H-form zeolite characterized by a mole ratio of $SiO_2$ to $Al_2O_3$ ranging from 75% to 125% of 14.1 and a fluoride content ranging from 75% to 125% of 68 ppm. In some embodiments, the small-pore zeolite is a H-form zeolite characterized by a mole ratio of $SiO_2$ to $Al_2O_3$ ranging from 80% to 120% of 14.1 and a fluoride content ranging from 80% to 120% of 68 ppm. In some embodiments, the small-pore zeolite is a H-form zeolite characterized by a mole ratio of $SiO_2$ to $Al_2O_3$ ranging from 85% to 115% of 14.1 and a fluoride content ranging from 85% to 115% of 68 ppm. In some embodiments, the small-pore zeolite is a H-form zeolite characterized by a mole ratio of $SiO_2$ to $Al_2O_3$ ranging from 90% to 110% of 14.1 and a fluoride content ranging from 90% to 110% of 68 ppm. In some embodiments, the small-pore zeolite is a H-form zeolite characterized by a mole ratio of $SiO_2$ to $Al_2O_3$ ranging from 95% to 105% of 14.1 and a fluoride content ranging from 95% to 105% of 68 ppm.

In some embodiments, the small-pore zeolite is a Na-form zeolite.

In some embodiments, the small-pore zeolite is a Na-form zeolite characterized by a mole ratio of $SiO_2$ to $Al_2O_3$ ranging from 19 to 31. In some embodiments, the small-pore zeolite is a Na-form zeolite characterized by a fluoride content ranging from 70 ppm to 500 ppm. In some embodiments, the small-pore zeolite is a Na-form zeolite characterized by a mole ratio of $SiO_2$ to $Al_2O_3$ ranging from 19 to 31 and a fluoride content ranging from 70 ppm to 500 ppm.

In some embodiments, the small-pore zeolite is a Na-form zeolite characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 19.7 and a fluoride content ranging from 50% to 150% (such as, e.g., 50% to 150%, 75% to 125%, 80% to 120%, 85% to 115%, 90% to 110%, or 95% to 105%) of 72 ppm. In some embodiments, the small-pore zeolite is a Na-form zeolite characterized by a mole ratio of $SiO_2$ to $Al_2O_3$ ranging from 75% to 125% of 19.7 and a fluoride content ranging from 75% to 125% of 72 ppm. In some embodiments, the small-pore zeolite is a Na-form zeolite characterized by a mole ratio of $SiO_2$ to $Al_2O_3$ ranging from 80% to 120% of 19.7 and a fluoride content ranging from 80% to 120% of 72 ppm. In some embodiments, the small-pore zeolite is a Na-form zeolite characterized by a mole ratio of $SiO_2$ to $Al_2O_3$ ranging from 85% to 115% of 19.7 and a fluoride content ranging from 85% to 115% of 72 ppm. In some embodiments, the small-pore zeolite is a Na-form zeolite characterized by a mole ratio of $SiO_2$ to $Al_2O_3$ ranging from 90% to 110% of 19.7 and a fluoride content ranging from 90% to 110% of 72 ppm. In some embodiments, the small-pore zeolite is a Na-form zeolite characterized by a mole ratio of $SiO_2$ to $Al_2O_3$ ranging from 95% to 105% of 19.7 and a fluoride content ranging from 95% to 105% of 72 ppm.

In some embodiments, the small-pore zeolite is a Na-form zeolite characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 20.2 and a fluoride content ranging from 50% to 150% (such as, e.g., 50% to 150%, 75% to 125%, 80% to 120%, 85% to 115%, 90% to 110%, or 95% to 105%) of 484 ppm. In some embodiments, the small-pore zeolite is a Na-form zeolite characterized by a mole ratio of $SiO_2$ to $Al_2O_3$ ranging from 75% to 125% of 20.2 and a fluoride content ranging from 75% to 125% of 484 ppm. In some embodiments, the small-pore zeolite is a Na-form zeolite characterized by a mole ratio of $SiO_2$ to $Al_2O_3$ ranging from 80% to 120% of 20.2 and a fluoride content ranging from 80% to 120% of 484 ppm. In some embodiments, the small-pore zeolite is a Na-form zeolite characterized by a mole ratio of $SiO_2$ to $Al_2O_3$ ranging from 85% to 115% of 20.2 and a fluoride content ranging from 85% to 115% of 484 ppm. In some embodiments, the small-pore zeolite is a Na-form zeolite characterized by a mole ratio of $SiO_2$ to $Al_2O_3$ ranging from 90% to 110% of 20.2 and a fluoride content ranging from 90% to 110% of 484 ppm. In some embodiments, the small-pore zeolite is a Na-form zeolite characterized by a mole ratio of $SiO_2$ to $Al_2O_3$ ranging from 95% to 105% of 20.2 and a fluoride content ranging from 95% to 105% of 484 ppm.

In some embodiments, the small-pore zeolite is a Na-form zeolite characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 30.8 and a fluoride content ranging from 50% to 150% (such as, e.g., 50% to 150%, 75% to 125%, 80% to 120%, 85% to 115%, 90% to 110%, or 95% to 105%) of 277 ppm. In some embodiments, the small-pore zeolite is a Na-form zeolite characterized by a mole ratio of $SiO_2$ to $Al_2O_3$ ranging from 75% to 125% of 30.8 and a fluoride content ranging from 75% to 125% of 277 ppm. In some embodiments, the small-pore zeolite is a Na-form zeolite characterized by a mole ratio of $SiO_2$ to $Al_2O_3$ ranging from 80% to 120% of 30.8 and a fluoride content ranging from 80% to 120% of 277 ppm. In some embodiments, the small-pore zeolite is a Na-form zeolite characterized by a mole ratio of $SiO_2$ to $Al_2O_3$ ranging from 85% to 115% of 30.8 and a fluoride content ranging from 85% to 115% of 277 ppm. In some embodiments, the small-pore zeolite is a Na-form zeolite characterized by a mole ratio of $SiO_2$ to $Al_2O_3$ ranging from 90% to 110% of 30.8 and a fluoride content ranging from 90% to 110% of 277 ppm. In some embodiments, the small-pore zeolite is a Na-form zeolite characterized by a mole ratio of $SiO_2$ to $Al_2O_3$ ranging from 95% to 105% of 30.8 and a fluoride content ranging from 95% to 105% of 277 ppm.

In some embodiments, the small-pore zeolite further comprises copper.

In some embodiments, the small-pore zeolite further comprises copper and is characterized by a mole ratio of $SiO_2$ to $Al_2O_3$ ranging from 16 to 21. In some embodiments, the small-pore zeolite further comprises copper and is characterized by a fluoride content ranging from 40 ppm to 210 ppm.

In some embodiments, the small-pore zeolite further comprises copper and is characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 16.9 and a fluoride content ranging from 50% to 150% (such as, e.g., 50% to 150%, 75% to 125%, 80% to 120%, 85% to 115%, 90% to 110%, or 95% to 105%) of 41 ppm. In some embodiments, the small-pore zeolite further comprises copper and is characterized by a mole ratio of $SiO_2$ to $Al_2O_3$ ranging from 75% to 125% of 16.9 and a fluoride content ranging from 75% to 125% of 41 ppm. In some embodiments, the small-pore zeolite further comprises copper and is characterized by a mole ratio of $SiO_2$ to $Al_2O_3$ ranging from 80% to 120% of 16.9 and a fluoride content ranging from 80% to 120% of 41 ppm. In some embodiments, the small-pore zeolite further comprises copper and is characterized by a mole ratio of $SiO_2$ to $Al_2O_3$ ranging from 85% to 115% of 16.9 and a fluoride content ranging from 85% to 115% of 41 ppm. In some embodiments, the small-pore zeolite further comprises copper and is characterized by a mole ratio of $SiO_2$ to $Al_2O_3$ ranging from 90% to 110% of 16.9 and a fluoride content ranging from 90% to 110% of 41 ppm. In some embodiments, the small-pore zeolite further comprises copper and is characterized by a mole ratio of $SiO_2$ to $Al_2O_3$ ranging from 95% to 105% of 16.9 and a fluoride content ranging from 95% to 105% of 41 ppm.

In some embodiments, the small-pore zeolite further comprises copper and is characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 20.2 and a fluoride content ranging from 50% to 150% (such as, e.g., 50% to 150%, 75% to 125%, 80% to 120%, 85% to 115%, 90% to 110%, or 95% to 105%) of 208 ppm. In some embodiments, the small-pore zeolite further comprises copper and is characterized by a mole ratio of $SiO_2$ to $Al_2O_3$ ranging from 75% to 125% of 20.2 and a fluoride content ranging from 75% to 125% of 208 ppm. In some embodiments, the small-pore zeolite further comprises copper and is characterized by a mole ratio of $SiO_2$ to $Al_2O_3$ ranging from 80% to 120% of 20.2 and a fluoride content ranging from 80% to 120% of 208 ppm. In some embodiments, the small-pore zeolite further comprises copper and is characterized by a mole ratio of $SiO_2$ to $Al_2O_3$ ranging from 85% to 115% of 20.2 and a fluoride content ranging from 85% to 115% of 208 ppm. In some embodiments, the small-pore zeolite further comprises copper and is characterized by a mole ratio of $SiO_2$ to $Al_2O_3$ ranging from 90% to 110% of 20.2 and a fluoride content ranging from 90% to 110% of 208 ppm. In some embodiments, the small-pore zeolite further comprises copper and is characterized by a mole ratio of $SiO_2$ to $Al_2O_3$ ranging from 95% to 105% of 20.2 and a fluoride content ranging from 95% to 105% of 208 ppm.

In some embodiments, the small-pore zeolite is characterized by a CuO content ranging from 1 wt% to 5 wt%. In some embodiments, the small-pore zeolite is characterized by a CuO content ranging from 1 wt% to 4 wt%.

In some embodiments, the small-pore zeolite is characterized by a CuO content ranging from 50% to 150% (such as, e.g., 50% to 150%, 75% to 125%, 80% to 120%, 85% to 115%, 90% to 110%, or 95% to 105%) of 1.05 wt% and a mole ratio of Cu to Al ranging from 50% to 150% (such as, e.g., 50% to 150%, 75% to 125%, 80% to 120%, 85% to 115%, 90% to 110%, or 95% to 105%) of 0.09.

In some embodiments, the small-pore zeolite is characterized by a CuO content ranging from 50% to 150% (such as, e.g., 50% to 150%, 75% to 125%, 80% to 120%, 85% to 115%, 90% to 110%, or 95% to 105%) of 2.13 wt% and a mole ratio of Cu to Al ranging from 50% to 150% (such as, e.g., 50% to 150%, 75% to 125%, 80% to 120%, 85% to 115%, 90% to 110%, or 95% to 105%) of 0.18.

In some embodiments, the small-pore zeolite is characterized by a CuO content ranging from 50% to 150% (such as, e.g., 50% to 150%, 75% to 125%, 80% to 120%, 85% to 115%, 90% to 110%, or 95% to 105%) of 3.78 wt% and a mole ratio of Cu to Al ranging from 50% to 150% (such as, e.g., 50% to 150%, 75% to 125%, 80% to 120%, 85% to 115%, 90% to 110%, or 95% to 105%) of 0.32.

In some embodiments, the small-pore zeolite is characterized by a CuO content ranging from 50% to 150% (such as, e.g., 50% to 150%, 75% to 125%, 80% to 120%, 85% to 115%, 90% to 110%, or 95% to 105%) of 1.05 wt%, a mole ratio of Cu to Al ranging from 50% to 150% (such as, e.g., 50% to 150%, 75% to 125%, 80% to 120%, 85% to 115%, 90% to 110%, or 95% to 105%) of 0.09, and a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 20.2.

In some embodiments, the small-pore zeolite is characterized by a CuO content ranging from 50% to 150% (such as, e.g., 50% to 150%, 75% to 125%, 80% to 120%, 85% to 115%, 90% to 110%, or 95% to 105%) of 2.13 wt%, a mole ratio of Cu to Al ranging from 50% to 150% (such as, e.g., 50% to 150%, 75% to 125%, 80% to 120%, 85% to 115%, 90% to 110%, or 95% to 105%) of 0.18, and a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 20.2.

In some embodiments, the small-pore zeolite is characterized by a CuO content ranging from 50% to 150% (such as, e.g., 50% to 150%, 75% to 125%, 80% to 120%, 85% to 115%, 90% to 110%, or 95% to 105%) of 3.78 wt%, a mole ratio of Cu to Al ranging from 50% to 150% (such as, e.g., 50% to 150%, 75% to 125%, 80% to 120%, 85% to 115%, 90% to 110%, or 95% to 105%) of 0.32, and a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 20.2.

In some embodiments, the small-pore zeolite is characterized by a CuO content ranging from 50% to 150% (such as, e.g., 50% to 150%, 75% to 125%, 80% to 120%, 85% to 115%, 90% to 110%, or 95% to 105%) of 1.05 wt%, a mole ratio of Cu to Al ranging from 50% to 150% (such as, e.g., 50% to 150%, 75% to 125%, 80% to 120%, 85% to 115%, 90% to 110%, or 95% to 105%) of 0.09, and a fluoride content ranging from 50% to 150% (such as, e.g., 50% to 150%, 75% to 125%, 80% to 120%, 85% to 115%, 90% to 110%, or 95% to 105%) of 208 ppm.

In some embodiments, the small-pore zeolite is characterized by a CuO content ranging from 50% to 150% (such as, e.g., 50% to 150%, 75% to 125%, 80% to 120%, 85% to 115%, 90% to 110%, or 95% to 105%) of 2.13 wt%, a mole ratio of Cu to Al ranging from 50% to 150% (such as, e.g., 50% to 150%, 75% to 125%, 80% to 120%, 85% to 115%, 90% to 110%, or 95% to 105%) of 0.18, and a fluoride content ranging from 50% to 150% (such as, e.g., 50% to 150%, 75% to 125%, 80% to 120%, 85% to 115%, 90% to 110%, or 95% to 105%) of 208 ppm.

In some embodiments, the small-pore zeolite is characterized by a CuO content ranging from 50% to 150% (such as, e.g., 50% to 150%, 75% to 125%, 80% to 120%, 85% to 115%, 90% to 110%, or 95% to 105%) of 3.78 wt%, a mole ratio of Cu to Al ranging from 50% to 150% (such as, e.g., 50% to 150%, 75% to 125%, 80% to 120%, 85% to 115%, 90% to 110%, or 95% to 105%) of 0.32, and a fluoride content ranging from 50% to 150% (such as, e.g., 50% to 150%, 75% to 125%, 80% to 120%, 85% to 115%, 90% to 110%, or 95% to 105%) of 208 ppm.

In some embodiments, the methods comprise subjecting a composition to a thermal treatment at a pH of at least 8.5, wherein the composition comprises at least one aluminum source chosen from aluminum isopropoxide and aluminum hydroxide, at least one silica source chosen from Ludox AS-40 and sodium silicate, at least one fluoride source chosen from sodium fluoride and trimethylammonium fluoride, and at least one organic structure directing agent comprising trimethyl adamantammonium.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the composition further comprises at least one copper source.

In some embodiments, the at least one copper source is chosen from copper salts and copper complexes. In some embodiments, the at least one copper source is copper-tetraethylenepentamine.

In some embodiments, the mole ratio of copper to silicon (Cu/Si) in the composition is less than 0.1. In some embodiments, the mole ratio of copper to silicon (Cu/Si) in the composition is less than 0.075. In some embodiments, the mole ratio of copper to silicon (Cu/Si) in the composition is less than 0.05. In some embodiments, the mole ratio of copper to silicon in the composition is 0.03.

In some embodiments, the methods comprise subjecting a composition to a thermal treatment at a pH of at least 8.5, wherein the composition comprises at least one aluminum source, at least one silica source, at least one fluoride source, and at least one organic structure directing agent, wherein:

the mole ratio of fluoride to silicon in the composition is greater than 0 and less than or equal to 1;
the mole ratio of the at least one organic structure directing agent to silicon in the composition is greater than 0 and less than or equal to 0.5; and
the mole ratio of $H_2O$ to Si in the composition ranges from 10 to 50.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the mole ratio of fluoride to silicon in the composition is greater than 0 and less than 0.5. In some embodiments, the mole ratio of fluoride to silicon in the composition is greater than 0 and less than 0.4. In some embodiments, the mole ratio of fluoride to silicon in the composition ranges from 0.03 to 0.37.

In some embodiments, the mole ratio of fluoride to silicon in the composition ranges from 0.1 to 0.3. In some embodiments, the mole ratio of fluoride to silicon in the composition ranges from 75% to 125% (such as, e.g., 80% to 120%, 85% to 115%, 90% to 110%, 95% to 105%) of 0.13. In some embodiments, the mole ratio of fluoride to silicon in the composition ranges from 75% to 125% (such as, e.g., 80% to 120%, 85% to 115%, 90% to 110%, 95% to 105%) of 0.25.

In some embodiments, the mole ratio of the at least one organic structure directing agent to silicon in the composition is greater than 0 and less than or equal to 0.25. In some embodiments, the mole ratio of the at least one organic structure directing agent to silicon in the composition is greater than 0 and less than or equal to 0.2. In some embodiments, the mole ratio of the at least one organic structure directing agent to silicon in the composition is greater than 0 and less than or equal to 0.15. In some embodiments, the mole ratio of the at least one organic structure directing agent to silicon in the composition ranges from 0.03 to 0.12.

In some embodiments, the mole ratio of the at least one organic structure directing agent to silicon in the composition ranges from 0.1 to 0.25. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.12. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.2.

In some embodiments, the mole ratio of $H_2O$ to Si in the composition ranges from 10 to 50. In some embodiments, the mole ratio of $H_2O$ to Si in the composition ranges from 10 to 45. In some embodiments, the mole ratio of $H_2O$ to Si in the composition ranges from 10 to 25. In some embodiments, the mole ratio of $H_2O$ to Si in the composition ranges from 10 to 20. In some embodiments, the mole ratio of $H_2O$ to Si in the composition ranges from 10 to 15.

In some embodiments, the composition further comprises at least one copper source.

In some embodiments, the at least one copper source is chosen from copper salts and copper complexes. In some embodiments, the at least one copper source is copper-tetraethylenepentamine.

In some embodiments, the mole ratio of copper to silicon (Cu/Si) in the composition is less than 0.1. In some embodiments, the mole ratio of copper to silicon (Cu/Si) in the composition is less than 0.075. In some embodiments, the mole ratio of copper to silicon (Cu/Si) in the composition is less than 0.05. In some embodiments, the mole ratio of copper to silicon in the composition is 0.03.

In some embodiments, the methods comprise subjecting a composition to a thermal treatment at a pH of at least 8.5, wherein the composition comprises at least one aluminum source chosen from aluminum isopropoxide and aluminum hydroxide, at least one silica source chosen from Ludox AS-40 and sodium silicate, at least one fluoride source chosen from sodium fluoride and trimethylammonium fluoride, and at least one organic structure directing agent comprising trimethyl adamantammonium, wherein:

the mole ratio of fluoride to silicon in the composition is greater than 0 and less than or equal to 1; and
the mole ratio of the at least one organic structure directing agent to silicon in the composition is greater than 0 and less than or equal to 0.5.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the mole ratio of fluoride to silicon in the composition is greater than 0 and less than 0.5. In some embodiments, the mole ratio of fluoride to silicon in the composition is greater than 0 and less than 0.4. In some embodiments, the mole ratio of fluoride to silicon in the composition ranges from 0.03 to 0.37.

In some embodiments, the mole ratio of fluoride to silicon in the composition ranges from 0.1 to 0.3. In some embodiments, the mole ratio of fluoride to silicon in the composition ranges from 75% to 125% (such as, e.g., 80% to 120%, 85% to 115%, 90% to 110%, 95% to 105%) of 0.13. In some embodiments, the mole ratio of fluoride to silicon in the composition ranges from 75% to 125% (such as, e.g., 80% to 120%, 85% to 115%, 90% to 110%, 95% to 105%) of 0.25.

In some embodiments, the mole ratio of the at least one organic structure directing agent to silicon in the composition is greater than 0 and less than or equal to 0.25. In some embodiments, the mole ratio of the at least one organic structure directing agent to silicon in the composition is greater than 0 and less than or equal to 0.2. In some embodiments, the mole ratio of the at least one organic structure directing agent to silicon in the composition is greater than 0 and less than or equal to 0.15. In some embodiments, the mole ratio of the at least one organic structure directing agent to silicon in the composition ranges from 0.03 to 0.12.

In some embodiments, the mole ratio of the at least one organic structure directing agent to silicon in the composition ranges from 0.1 to 0.25. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.12. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.2.

In some embodiments, the composition further comprises at least one copper source.

In some embodiments, the at least one copper source is chosen from copper salts and copper complexes. In some embodiments, the at least one copper source is copper-tetraethylenepentamine.

In some embodiments, the mole ratio of copper to silicon (Cu/Si) in the composition is less than 0.1. In some embodiments, the mole ratio of copper to silicon (Cu/Si) in the composition is less than 0.075. In some embodiments, the mole ratio of copper to silicon (Cu/Si) in the composition is less than 0.05. In some embodiments, the mole ratio of copper to silicon in the composition is 0.03.

In some embodiments, the methods comprise subjecting a composition to a thermal treatment at a pH of at least 8.5, wherein the composition comprises at least one aluminum source, at least one silica source, at least one fluoride source, and at least one organic structure directing agent comprising trimethyl adamantammonium, wherein:

the mole ratio of fluoride to silicon in the composition is greater than 0 and less than or equal to 1; and
the mole ratio of the at least one organic structure directing agent to silicon in the composition is greater than 0 and less than or equal to 0.5.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the mole ratio of fluoride to silicon in the composition is greater than 0 and less than 0.5. In some embodiments, the mole ratio of fluoride to silicon in the composition is greater than 0 and less than 0.4. In some embodiments, the mole ratio of fluoride to silicon in the composition ranges from 0.03 to 0.37.

In some embodiments, the mole ratio of fluoride to silicon in the composition ranges from 0.1 to 0.3. In some embodiments, the mole ratio of fluoride to silicon in the composition ranges from 75% to 125% (such as, e.g., 80% to 120%, 85% to 115%, 90% to 110%, 95% to 105%) of 0.13. In some embodiments, the mole ratio of fluoride to silicon in the composition ranges from 75% to 125% (such as, e.g., 80% to 120%, 85% to 115%, 90% to 110%, 95% to 105%) of 0.25.

In some embodiments, the mole ratio of the at least one organic structure directing agent to silicon in the composition is greater than 0 and less than or equal to 0.25. In some embodiments, the mole ratio of the at least one organic structure directing agent to silicon in the composition is greater than 0 and less than or equal to 0.2. In some embodiments, the mole ratio of the at least one organic structure directing agent to silicon in the composition is greater than 0 and less than or equal to 0.15. In some embodiments, the mole ratio of the at least one organic structure directing agent to silicon in the composition ranges from 0.03 to 0.12.

In some embodiments, the mole ratio of the at least one organic structure directing agent to silicon in the composition ranges from 0.1 to 0.25. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.12. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.2.

In some embodiments, the composition further comprises at least one copper source.

In some embodiments, the at least one copper source is chosen from copper salts and copper complexes. In some embodiments, the at least one copper source is copper-tetraethylenepentamine.

In some embodiments, the mole ratio of copper to silicon (Cu/Si) in the composition is less than 0.1. In some embodiments, the mole ratio of copper to silicon (Cu/Si) in the composition is less than 0.075. In some embodiments, the mole ratio of copper to silicon (Cu/Si) in the composition is less than 0.05. In some embodiments, the mole ratio of copper to silicon in the composition is 0.03.

In some embodiments, the methods comprise subjecting a composition to a thermal treatment at a pH of at least 8.5, wherein the composition comprises at least one aluminum source chosen from aluminum isopropoxide and aluminum hydroxide, at least one silica source chosen from Ludox AS-40 and sodium silicate, at least one fluoride source chosen from sodium fluoride and trimethylammonium fluoride, and at least one organic structure directing agent comprising trimethyl adamantammonium, wherein:

the mole ratio of fluoride to silicon in the composition is greater than 0 and less than or equal to 1;
the mole ratio of the at least one organic structure directing agent to silicon in the composition is greater than 0 and less than or equal to 0.5; and
the mole ratio of $H_2O$ to Si in the composition ranges from 10 to 50.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the mole ratio of fluoride to silicon in the composition is greater than 0 and less than 0.5. In some embodiments, the mole ratio of fluoride to silicon in the composition is greater than 0 and less than 0.4. In some embodiments, the mole ratio of fluoride to silicon in the composition ranges from 0.03 to 0.37.

In some embodiments, the mole ratio of fluoride to silicon in the composition ranges from 0.1 to 0.3. In some embodiments, the mole ratio of fluoride to silicon in the composition ranges from 75% to 125% (such as, e.g., 80% to 120%, 85% to 115%, 90% to 110%, 95% to 105%) of 0.13. In some embodiments, the mole ratio of fluoride to silicon in the composition ranges from 75% to 125% (such as, e.g., 80% to 120%, 85% to 115%, 90% to 110%, 95% to 105%) of 0.25.

In some embodiments, the mole ratio of the at least one organic structure directing agent to silicon in the composition is greater than 0 and less than or equal to 0.25. In some embodiments, the mole ratio of the at least one organic structure directing agent to silicon in the composition is greater than 0 and less than or equal to 0.2. In some embodiments, the mole ratio of the at least one organic structure directing agent to silicon in the composition is greater than 0 and less than or equal to 0.15. In some embodiments, the mole ratio of the at least one organic structure directing agent to silicon in the composition ranges from 0.03 to 0.12.

In some embodiments, the mole ratio of the at least one organic structure directing agent to silicon in the composition ranges from 0.1 to 0.25. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.12. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.2.

In some embodiments, the mole ratio of $H_2O$ to Si in the composition ranges from 10 to 50. In some embodiments, the mole ratio of $H_2O$ to Si in the composition ranges from 10 to 45. In some embodiments, the mole ratio of $H_2O$ to Si in the composition ranges from 10 to 25. In some embodiments, the mole ratio of $H_2O$ to Si in the composition ranges from 10 to 20. In some embodiments, the mole ratio of $H_2O$ to Si in the composition ranges from 10 to 15.

In some embodiments, the composition further comprises at least one copper source.

In some embodiments, the at least one copper source is chosen from copper salts and copper complexes. In some embodiments, the at least one copper source is copper-tetraethylenepentamine.

In some embodiments, the mole ratio of copper to silicon (Cu/Si) in the composition is less than 0.1. In some embodiments, the mole ratio of copper to silicon (Cu/Si) in the composition is less than 0.075. In some embodiments, the mole ratio of copper to silicon (Cu/Si) in the composition is less than 0.05. In some embodiments, the mole ratio of copper to silicon in the composition is 0.03.

In some embodiments, the methods comprise subjecting a composition to a thermal treatment at a pH of at least 8.5, wherein the composition comprises at least one aluminum source chosen from aluminum isopropoxide and aluminum hydroxide, at least one silica source chosen from Ludox AS-40 and sodium silicate, at least one fluoride source chosen from sodium fluoride and trimethylammonium fluoride, at least one copper source chosen from copper tetraethylenepentamine, and at least one organic structure directing agent comprising trimethyl adamantammonium, wherein:

> the mole ratio of fluoride to silicon in the composition is greater than 0 and less than or equal to 1;
> the mole ratio of the at least one organic structure directing agent to silicon in the composition is greater than 0 and less than or equal to 0.5;
> the mole ratio of $H_2O$ to Si in the composition ranges from 10 to 50; and
> the mole ratio of copper to silicon in the composition is greater than 0 and less than or equal to 0.1.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the mole ratio of fluoride to silicon in the composition is greater than 0 and less than 0.5. In some embodiments, the mole ratio of fluoride to silicon in the composition is greater than 0 and less than 0.4. In some embodiments, the mole ratio of fluoride to silicon in the composition ranges from 0.03 to 0.37.

In some embodiments, the mole ratio of the at least one organic structure directing agent to silicon in the composition is greater than 0 and less than or equal to 0.25. In some embodiments, the mole ratio of the at least one organic structure directing agent to silicon in the composition is greater than 0 and less than or equal to 0.2. In some embodiments, the mole ratio of the at least one organic structure directing agent to silicon in the composition is greater than 0 and less than or equal to 0.15. In some embodiments, the mole ratio of the at least one organic structure directing agent to silicon in the composition ranges from 0.03 to 0.12.

In some embodiments, the mole ratio of $H_2O$ to Si in the composition ranges from 10 to 50. In some embodiments, the mole ratio of $H_2O$ to Si in the composition ranges from 10 to 45. In some embodiments, the mole ratio of $H_2O$ to Si in the composition ranges from 10 to 25. In some embodiments, the mole ratio of $H_2O$ to Si in the composition ranges from 10 to 20. In some embodiments, the mole ratio of $H_2O$ to Si in the composition ranges from 10 to 15.

In some embodiments, the mole ratio of copper to silicon (Cu/Si) in the composition is greater than 0 and less than 0.1. In some embodiments, the mole ratio of copper to silicon in the composition is greater than 0 and less than 0.05. In some embodiments, the mole ratio of copper to silicon in the composition is 0.03.

In some embodiments, the methods comprise subjecting a composition to a thermal treatment at a pH of at least 8.5, wherein:

the composition comprises at least one aluminum source chosen from aluminum isopropoxide and aluminum hydroxide, at least one silica source chosen from Ludox AS-40 and sodium silicate, at least one fluoride source chosen from sodium fluoride and trimethylammonium fluoride, at least one copper source chosen from copper tetraethylenepentamine, and at least one organic structure directing agent comprising trimethyl adamantammonium, wherein:

the mole ratio of fluoride to silicon in the composition is greater than 0 and less than or equal to 1;
the mole ratio of the at least one organic structure directing agent to silicon in the composition is greater than 0 and less than or equal to 0.5;
the mole ratio of $H_2O$ to Si in the composition ranges from 10 to 50; and
the mole ratio of copper to silicon in the composition is greater than 0 and less than or equal to 0.1; and

the small-pore zeolite is characterized by an average crystallite size of less than 3 $\mu$m.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the mole ratio of fluoride to silicon in the composition is greater than 0 and less than 0.5. In some embodiments, the mole ratio of fluoride to silicon in the composition is greater than 0 and less than 0.4. In some embodiments, the mole ratio of fluoride to silicon in the composition ranges from 0.03 to 0.37.

In some embodiments, the mole ratio of fluoride to silicon in the composition ranges from 0.1 to 0.3. In some embodiments, the mole ratio of fluoride to silicon in the composition ranges from 75% to 125% (such as, e.g., 80% to 120%, 85% to 115%, 90% to 110%, 95% to 105%) of 0.13. In some embodiments, the mole ratio of fluoride to silicon in the composition ranges from 75% to 125% (such as, e.g., 80% to 120%, 85% to 115%, 90% to 110%, 95% to 105%) of 0.25.

In some embodiments, the mole ratio of the at least one organic structure directing agent to silicon in the composition is greater than 0 and less than or equal to 0.25. In some embodiments, the mole ratio of the at least one organic structure directing agent to silicon in the composition is greater than 0 and less than or equal to 0.2. In some embodiments, the mole ratio of the at least one organic structure directing agent to silicon in the composition is greater than 0 and less than or equal to 0.15. In some embodiments, the mole ratio of the at least one organic structure directing agent to silicon in the composition ranges from 0.03 to 0.12.

In some embodiments, the mole ratio of the at least one organic structure directing agent to silicon in the composition ranges from 0.1 to 0.25. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.12. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.2.

In some embodiments, the mole ratio of $H_2O$ to Si in the composition ranges from 10 to 50. In some embodiments, the mole ratio of $H_2O$ to Si in the composition ranges from 10 to 45. In some embodiments, the mole ratio of $H_2O$ to Si in the composition ranges from 10 to 25. In some embodiments, the mole ratio of $H_2O$ to Si in the composition ranges from 10 to 20. In some embodiments, the mole ratio of $H_2O$ to Si in the composition ranges from 10 to 15.

In some embodiments, the mole ratio of copper to silicon (Cu/Si) in the composition is greater than 0 and less than 0.1. In some embodiments, the mole ratio of copper to silicon in the composition is greater than 0 and less than 0.05. In some embodiments, the mole ratio of copper to silicon in the composition is 0.03.

In some embodiments, the small-pore zeolite is characterized by an average crystallite size of less than 2 $\mu$m. In some embodiments, the small-pore zeolite is characterized by an average crystallite size of less than 1 $\mu$m.

In some embodiments, the methods comprise subjecting a composition to a thermal treatment at a pH of at least 8.5, wherein:

the composition comprises at least one aluminum source, at least one silica source, at least one fluoride source, and at least one organic structure directing agent, wherein:

the mole ratio of fluoride to silicon in the composition is greater than 0 and less than or equal to 1;
the mole ratio of the at least one organic structure directing agent to silicon in the composition is greater than 0 and less than or equal to 0.5; and
the mole ratio of $H_2O$ to Si in the composition ranges from 10 to 50; and

the small-pore zeolite is characterized by an average crystallite size of less than 3 $\mu$m.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the mole ratio of fluoride to silicon in the composition is greater than 0 and less than 0.5. In some embodiments, the mole ratio of fluoride to silicon in the composition is greater than 0 and less than 0.4. In some embodiments, the mole ratio of fluoride to silicon in the composition ranges from 0.03 to 0.37.

In some embodiments, the mole ratio of fluoride to silicon in the composition ranges from 0.1 to 0.3. In some embodiments, the mole ratio of fluoride to silicon in the composition ranges from 75% to 125% (such as, e.g., 80% to 120%, 85% to 115%, 90% to 110%, 95% to 105%) of 0.13. In some embodiments, the mole ratio of fluoride to silicon in the composition ranges from 75% to 125% (such as, e.g., 80% to 120%, 85% to 115%, 90% to 110%, 95% to 105%) of 0.25.

In some embodiments, the mole ratio of the at least one organic structure directing agent to silicon in the composition is greater than 0 and less than or equal to 0.25. In some embodiments, the mole ratio of the at least one organic structure directing agent to silicon in the composition is greater than 0 and less than or equal to 0.2. In some embodiments, the mole ratio of the at least one organic structure directing agent to silicon in the composition is greater than 0 and less than or equal to 0.15. In some embodiments, the mole ratio of the at least one organic structure directing agent to silicon in the composition ranges from 0.03 to 0.12.

In some embodiments, the mole ratio of the at least one organic structure directing agent to silicon in the composition ranges from 0.1 to 0.25. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.12. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.2.

In some embodiments, the mole ratio of $H_2O$ to Si in the composition ranges from 10 to 50. In some embodiments, the mole ratio of $H_2O$ to Si in the composition ranges from 10 to 45. In some embodiments, the mole ratio of $H_2O$ to Si in the composition ranges from 10 to 25. In some embodiments, the mole ratio of $H_2O$ to Si in the composition ranges from 10 to 20. In some embodiments, the mole ratio of $H_2O$ to Si in the composition ranges from 10 to 15.

In some embodiments, the composition further comprises at least one copper source.

In some embodiments, the at least one copper source is chosen from copper salts and copper complexes. In some embodiments, the at least one copper source is copper-tetraethylenepentamine.

In some embodiments, the mole ratio of copper to silicon (Cu/Si) in the composition is less than 0.1. In some embodiments, the mole ratio of copper to silicon (Cu/Si) in the composition is less than 0.075. In some embodiments, the mole ratio of copper to silicon (Cu/Si) in the composition is less than 0.05. In some embodiments, the mole ratio of copper to silicon in the composition is 0.03.

In some embodiments, the small-pore zeolite is characterized by an average crystallite size of less than 2 $\mu$m. In some embodiments, the small-pore zeolite is characterized by an average crystallite size of less than 1 $\mu$m.

In some embodiments, the methods comprise subjecting a composition to a thermal treatment at a pH of at least 8.5, wherein:

the composition comprises at least one aluminum source, at least one silica source, at least one fluoride source, and at least one organic structure directing agent, wherein:

the mole ratio of fluoride to silicon in the composition is greater than 0 and less than or equal to 1; and
the mole ratio of the at least one organic structure directing agent to silicon in the composition is greater than 0 and less than or equal to 0.5; and

the small-pore zeolite is characterized by an average crystallite size of less than 3 μm.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the mole ratio of fluoride to silicon in the composition is greater than 0 and less than 0.5. In some embodiments, the mole ratio of fluoride to silicon in the composition is greater than 0 and less than 0.4. In some embodiments, the mole ratio of fluoride to silicon in the composition ranges from 0.03 to 0.37.

In some embodiments, the mole ratio of fluoride to silicon in the composition ranges from 0.1 to 0.3. In some embodiments, the mole ratio of fluoride to silicon in the composition ranges from 75% to 125% (such as, e.g., 80% to 120%, 85% to 115%, 90% to 110%, 95% to 105%) of 0.13. In some embodiments, the mole ratio of fluoride to silicon in the composition ranges from 75% to 125% (such as, e.g., 80% to 120%, 85% to 115%, 90% to 110%, 95% to 105%) of 0.25.

In some embodiments, the mole ratio of the at least one organic structure directing agent to silicon in the composition is greater than 0 and less than or equal to 0.25. In some embodiments, the mole ratio of the at least one organic structure directing agent to silicon in the composition is greater than 0 and less than or equal to 0.2. In some embodiments, the mole ratio of the at least one organic structure directing agent to silicon in the composition is greater than 0 and less than or equal to 0.15. In some embodiments, the mole ratio of the at least one organic structure directing agent to silicon in the composition ranges from 0.03 to 0.12.

In some embodiments, the mole ratio of the at least one organic structure directing agent to silicon in the composition ranges from 0.1 to 0.25. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.12. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.2.

In some embodiments, the composition further comprises at least one copper source.

In some embodiments, the at least one copper source is chosen from copper salts and copper complexes. In some embodiments, the at least one copper source is copper-tetraethylenepentamine.

In some embodiments, the mole ratio of copper to silicon (Cu/Si) in the composition is less than 0.1. In some embodiments, the mole ratio of copper to silicon (Cu/Si) in the composition is less than 0.075. In some embodiments, the mole ratio of copper to silicon (Cu/Si) in the composition is less than 0.05. In some embodiments, the mole ratio of copper to silicon in the composition is 0.03.

In some embodiments, the small-pore zeolite is characterized by an average crystallite size of less than 2 μm. In some embodiments, the small-pore zeolite is characterized by an average crystallite size of less than 1 μm.

In some embodiments, the methods comprise subjecting a composition to a thermal treatment at a pH of at least 8.5, wherein:

the composition comprises at least one aluminum source, at least one silica source, at least one fluoride source, and at least one organic structure directing agent, wherein:

the mole ratio of fluoride to silicon in the composition is greater than 0 and less than or equal to 1; and
the mole ratio of the at least one organic structure directing agent to silicon in the composition is greater than 0 and less than or equal to 0.5; and

the small-pore zeolite is characterized by an average crystallite size of less than 2 μm.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the mole ratio of fluoride to silicon in the composition is greater than 0 and less than 0.5. In some embodiments, the mole ratio of fluoride to silicon in the composition is greater than 0 and less than 0.4. In some embodiments, the mole ratio of fluoride to silicon in the composition ranges from 0.03 to 0.37.

In some embodiments, the mole ratio of fluoride to silicon in the composition ranges from 0.1 to 0.3. In some embodiments, the mole ratio of fluoride to silicon in the composition ranges from 75% to 125% (such as, e.g., 80% to 120%, 85% to 115%, 90% to 110%, 95% to 105%) of 0.13. In some embodiments, the mole ratio of fluoride to silicon in the composition ranges from 75% to 125% (such as, e.g., 80% to 120%, 85% to 115%, 90% to 110%, 95% to 105%) of 0.25.

In some embodiments, the mole ratio of the at least one organic structure directing agent to silicon in the composition is greater than 0 and less than or equal to 0.25. In some embodiments, the mole ratio of the at least one organic structure directing agent to silicon in the composition is greater than 0 and less than or equal to 0.2. In some embodiments, the mole ratio of the at least one organic structure directing agent to silicon in the composition is greater than 0 and less than or equal to 0.15. In some embodiments, the mole ratio of the at least one organic structure directing agent to silicon in the composition ranges from 0.03 to 0.12.

In some embodiments, the mole ratio of the at least one organic structure directing agent to silicon in the composition ranges from 0.1 to 0.25. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.12. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.2.

In some embodiments, the composition further comprises at least one copper source.

In some embodiments, the at least one copper source is chosen from copper salts and copper complexes. In some embodiments, the at least one copper source is copper- tetraethylenepentamine.

In some embodiments, the mole ratio of copper to silicon (Cu/Si) in the composition is less than 0.1. In some embodiments, the mole ratio of copper to silicon (Cu/Si) in the composition is less than 0.075. In some embodiments, the mole ratio of copper to silicon (Cu/Si) in the composition is less than 0.05. In some embodiments, the mole ratio of copper to silicon in the composition is 0.03.

In some embodiments, the small-pore zeolite is characterized by an average crystallite size of less than 1 $\mu$m.

In some embodiments, the methods comprise subjecting a composition to a thermal treatment at a pH of at least 8.5, wherein:

the composition comprises at least one aluminum source, at least one silica source, at least one fluoride source, and at least one organic structure directing agent, wherein:

the mole ratio of fluoride to silicon in the composition is greater than 0 and less than or equal to 1; and
the mole ratio of the at least one organic structure directing agent to silicon in the composition is greater than 0 and less than or equal to 0.5; and

the small-pore zeolite is characterized by an average crystallite size of less than 1 $\mu$m.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the mole ratio of fluoride to silicon in the composition is greater than 0 and less than 0.5. In some embodiments, the mole ratio of fluoride to silicon in the composition is greater than 0 and less than 0.4. In some embodiments, the mole ratio of fluoride to silicon in the composition ranges from 0.03 to 0.37.

In some embodiments, the mole ratio of fluoride to silicon in the composition ranges from 0.1 to 0.3. In some embodiments, the mole ratio of fluoride to silicon in the composition ranges from 75% to 125% (such as, e.g., 80% to 120%, 85% to 115%, 90% to 110%, 95% to 105%) of 0.13. In some embodiments, the mole ratio of fluoride to silicon in the composition ranges from 75% to 125% (such as, e.g., 80% to 120%, 85% to 115%, 90% to 110%, 95% to 105%) of 0.25.

In some embodiments, the mole ratio of the at least one organic structure directing agent to silicon in the composition is greater than 0 and less than or equal to 0.25. In some embodiments, the mole ratio of the at least one organic structure directing agent to silicon in the composition is greater than 0 and less than or equal to 0.2. In some embodiments, the mole ratio of the at least one organic structure directing agent to silicon in the composition is greater than 0 and less than or equal to 0.15. In some embodiments, the mole ratio of the at least one organic structure directing agent to silicon in the composition ranges from 0.03 to 0.12.

In some embodiments, the mole ratio of the at least one organic structure directing agent to silicon in the composition ranges from 0.1 to 0.25. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.12. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.2.

In some embodiments, the composition further comprises at least one copper source.

In some embodiments, the at least one copper source is chosen from copper salts and copper complexes. In some embodiments, the at least one copper source is copper-tetraethylenepentamine.

In some embodiments, the mole ratio of copper to silicon (Cu/Si) in the composition is less than 0.1. In some embodiments, the mole ratio of copper to silicon (Cu/Si) in the composition is less than 0.075. In some embodiments, the mole ratio of copper to silicon (Cu/Si) in the composition is less than 0.05. In some embodiments, the mole ratio of copper to silicon in the composition is 0.03.

In some embodiments, the methods comprise subjecting a composition to a thermal treatment at a pH of at least 8.5, wherein:

the composition comprises at least one aluminum source, at least one silica source, at least one fluoride source, and at least one organic structure directing agent, wherein:

the mole ratio of fluoride to silicon in the composition is greater than 0 and less than or equal to 1; and
the mole ratio of the at least one organic structure directing agent to silicon in the composition is greater than 0 and less than or equal to 0.5; and

the small-pore zeolite is characterized by a fluoride content from 10 ppm to 2000 ppm.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the mole ratio of fluoride to silicon in the composition is greater than 0 and less than 0.5. In some embodiments, the mole ratio of fluoride to silicon in the composition is greater than 0 and less than 0.4. In some embodiments, the mole ratio of fluoride to silicon in the composition ranges from 0.03 to 0.37.

In some embodiments, the mole ratio of fluoride to silicon in the composition ranges from 0.1 to 0.3. In some embodiments, the mole ratio of fluoride to silicon in the composition ranges from 75% to 125% (such as, e.g., 80% to 120%, 85% to 115%, 90% to 110%, 95% to 105%) of 0.13. In some embodiments, the mole ratio of fluoride to silicon in the composition ranges from 75% to 125% (such as, e.g., 80% to 120%, 85% to 115%, 90% to 110%, 95% to 105%) of 0.25.

In some embodiments, the mole ratio of the at least one organic structure directing agent to silicon in the composition is greater than 0 and less than or equal to 0.25. In some embodiments, the mole ratio of the at least one organic structure directing agent to silicon in the composition is greater than 0 and less than or equal to 0.2. In some embodiments, the mole ratio of the at least one organic structure directing agent to silicon in the composition is greater than 0 and less than or equal to 0.15. In some embodiments, the mole ratio of the at least one organic structure directing agent to silicon in the composition ranges from 0.03 to 0.12.

In some embodiments, the mole ratio of the at least one organic structure directing agent to silicon in the composition ranges from 0.1 to 0.25. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.12. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.2.

In some embodiments, the composition further comprises at least one copper source.

In some embodiments, the at least one copper source is chosen from copper salts and copper complexes. In some embodiments, the at least one copper source is copper-tetraethylenepentamine.

In some embodiments, the mole ratio of copper to silicon (Cu/Si) in the composition is less than 0.1. In some embodiments, the mole ratio of copper to silicon (Cu/Si) in the composition is less than 0.075. In some embodiments, the mole ratio of copper to silicon (Cu/Si) in the composition is less than 0.05. In some embodiments, the mole ratio of copper to silicon in the composition is 0.03.

In some embodiments, the methods comprise subjecting a composition to a thermal treatment at a pH of at least 8.5, wherein:

the composition comprises at least one aluminum source, at least one silica source, at least one fluoride source, and at least one organic structure directing agent, wherein:

the mole ratio of fluoride to silicon in the composition is greater than 0 and less than or equal to 1; and
the mole ratio of the at least one organic structure directing agent to silicon in the composition is greater than 0 and less than or equal to 0.5; and

the small-pore zeolite is characterized by a fluoride content from 40 ppm to 1000 ppm.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the mole ratio of fluoride to silicon in the composition is greater than 0 and less than 0.5. In some embodiments, the mole ratio of fluoride to silicon in the composition is greater than 0 and less than 0.4. In some embodiments, the mole ratio of fluoride to silicon in the composition ranges from 0.03 to 0.37.

In some embodiments, the mole ratio of fluoride to silicon in the composition ranges from 0.1 to 0.3. In some embodiments, the mole ratio of fluoride to silicon in the composition ranges from 75% to 125% (such as, e.g., 80% to 120%, 85% to 115%, 90% to 110%, 95% to 105%) of 0.13. In some embodiments, the mole ratio of fluoride to silicon in the composition ranges from 75% to 125% (such as, e.g., 80% to 120%, 85% to 115%, 90% to 110%, 95% to 105%) of 0.25.

In some embodiments, the mole ratio of the at least one organic structure directing agent to silicon in the composition is greater than 0 and less than or equal to 0.25. In some embodiments, the mole ratio of the at least one organic structure directing agent to silicon in the composition is greater than 0 and less than or equal to 0.2. In some embodiments, the mole ratio of the at least one organic structure directing agent to silicon in the composition is greater than 0 and less than or equal to 0.15. In some embodiments, the mole ratio of the at least one organic structure directing agent to silicon in the composition ranges from 0.03 to 0.12.

In some embodiments, the mole ratio of the at least one organic structure directing agent to silicon in the composition ranges from 0.1 to 0.25. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.12. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.2.

In some embodiments, the composition further comprises at least one copper source.

In some embodiments, the at least one copper source is chosen from copper salts and copper complexes. In some embodiments, the at least one copper source is copper-tetraethylenepentamine.

In some embodiments, the mole ratio of copper to silicon (Cu/Si) in the composition is less than 0.1. In some embodiments, the mole ratio of copper to silicon (Cu/Si) in the composition is less than 0.075. In some embodiments, the mole ratio of copper to silicon (Cu/Si) in the composition is less than 0.05. In some embodiments, the mole ratio of copper to silicon in the composition is 0.03.

In some embodiments, the methods comprise subjecting a composition to a thermal treatment at a pH of at least 8.5, wherein:

the composition comprises at least one aluminum source, at least one silica source, at least one fluoride source, and at least one organic structure directing agent, wherein:

the mole ratio of fluoride to silicon in the composition is greater than 0 and less than or equal to 1; and
the mole ratio of the at least one organic structure directing agent to silicon in the composition is greater than 0 and less than or equal to 0.5; and

the small-pore zeolite is characterized by a fluoride content from 40 ppm to 1000 ppm and an average crystallite size of less than 2 μm.

In some embodiments, the pH ranges from 10.5 to 13.5.

In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the mole ratio of fluoride to silicon in the composition is greater than 0 and less than 0.5. In some embodiments, the mole ratio of fluoride to silicon in the composition is greater than 0 and less than 0.4. In some embodiments, the mole ratio of fluoride to silicon in the composition ranges from 0.03 to 0.37.

In some embodiments, the mole ratio of fluoride to silicon in the composition ranges from 0.1 to 0.3. In some embodiments, the mole ratio of fluoride to silicon in the composition ranges from 75% to 125% (such as, e.g., 80% to 120%, 85% to 115%, 90% to 110%, 95% to 105%) of 0.13. In some embodiments, the mole ratio of fluoride to silicon in the composition ranges from 75% to 125% (such as, e.g., 80% to 120%, 85% to 115%, 90% to 110%, 95% to 105%) of 0.25.

In some embodiments, the mole ratio of the at least one organic structure directing agent to silicon in the composition is greater than 0 and less than or equal to 0.25. In some embodiments, the mole ratio of the at least one organic structure directing agent to silicon in the composition is greater than 0 and less than or equal to 0.2. In some embodiments, the mole ratio of the at least one organic structure directing agent to silicon in the composition is greater than 0 and less than or equal to 0.15. In some embodiments, the mole ratio of the at least one organic structure directing agent to silicon in the composition ranges from 0.03 to 0.12.

In some embodiments, the mole ratio of the at least one organic structure directing agent to silicon in the composition ranges from 0.1 to 0.25. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.12. In some embodiments, the mole ratio of the at least one organic structure directing agent to silicon in the composition ranges from 75% to 125% (such as, e.g., 80% to 120%, 85% to 115%, 90% to 110%, 95% to 105%) of 0.2.

In some embodiments, the composition further comprises at least one copper source.

In some embodiments, the at least one copper source is chosen from copper salts and copper complexes. In some embodiments, the at least one copper source is copper-tetraethylenepentamine.

In some embodiments, the mole ratio of copper to silicon (Cu/Si) in the composition is less than 0.1. In some embodiments, the mole ratio of copper to silicon (Cu/Si) in the composition is less than 0.075. In some embodiments, the mole ratio of copper to silicon (Cu/Si) in the composition is less than 0.05. In some embodiments, the mole ratio of copper to silicon in the composition is 0.03.

In some embodiments, the methods comprise subjecting a composition to a thermal treatment at a pH of at least 8.5, wherein:

the composition comprises at least one aluminum source chosen from aluminum isopropoxide and aluminum hydroxide, at least one silica source chosen from Ludox AS-40 and sodium silicate, at least one fluoride source chosen from sodium fluoride and trimethylammonium fluoride, and at least one organic structure directing agent comprising trimethyl adamantammonium, wherein:

the mole ratio of fluoride to silicon in the composition is greater than 0 and less than or equal to 1; and
the mole ratio of the at least one organic structure directing agent to silicon in the composition is greater than 0 and less than or equal to 0.5; and

the small-pore zeolite is characterized by a fluoride content from 40 ppm to 1000 ppm and an average crystallite size of less than 2 $\mu$m.

In some embodiments, the pH ranges from 10.5 to 13.5.
In some embodiments, the pH is at least 9.0. In some embodiments, the pH is at least 9.5. In some embodiments, the pH is at least 10.0. In some embodiments, the pH is at least 10.5. In some embodiments, the pH is at least 11.0. In some embodiments, the pH is at least 11.5. In some embodiments, the pH is at least 12.0. In some embodiments, the pH is at least 12.5. In some embodiments, the pH is at least 13.0.

In some embodiments, the composition further comprises at least one copper source.

In some embodiments, the at least one copper source is chosen from copper salts and copper complexes. In some embodiments, the at least one copper source is copper-tetraethylenepentamine.

In some embodiments, the mole ratio of copper to silicon (Cu/Si) in the composition is less than 0.1. In some embodiments, the mole ratio of copper to silicon (Cu/Si) in the composition is less than 0.075. In some embodiments, the mole ratio of copper to silicon (Cu/Si) in the composition is less than 0.05. In some embodiments, the mole ratio of copper to silicon in the composition is 0.03.

**Small-Pore Zeolites:**

Some embodiments of the present disclosure relate to small-pore zeolites prepared according to the methods described above.

Some embodiments of the present disclosure relate to small-pore zeolites comprising aluminum, silicon, and fluoride, wherein the small-pore zeolites are characterized by an average crystallite size of less than 3 $\mu$m.

In some embodiments, the small-pore zeolites are characterized by an average crystallite size of less than 2 $\mu$m. In some embodiments, the small-pore zeolites are characterized by an average crystallite size of less than 1 $\mu$m.

Average crystallite size may be determined by routine techniques in the art, such as, e.g., electron microscopy.

In some embodiments, the small-pore zeolites further comprise at least one organic structure directing agent.

In some embodiments, the at least one organic structure directing agent is chosen from ionic molecules comprising an adamantammonium group. In some embodiments, the at least one organic structure directing agent is trimethyl adamantammonium.

In some embodiments, the small-pore zeolites are substantially in the form of faceted crystallites. An average and/or typical crystallite may have one or more facets.

In some embodiments, the small-pore zeolites are substantially in the form of faceted crystallites and characterized by an average crystallite size of less than 3 $\mu$m. In some embodiments, the small-pore zeolites are substantially in the form of faceted crystallites and characterized by an average crystallite size of less than 2 $\mu$m. In some embodiments, the small-pore zeolites are substantially in the form of faceted crystallites and characterized by an average crystallite size of less than 1 $\mu$m.

In some embodiments, the small-pore zeolites are characterized by a degree of crystallinity greater than 50%. In some embodiments, the small-pore zeolites are characterized by a degree of crystallinity greater than 55%. In some embodiments, the small-pore zeolites are characterized by a degree of crystallinity greater than 60%. In some embodiments, the small-pore zeolites are characterized by a degree of crystallinity greater than 65%. In some embodiments, the small-pore zeolites are characterized by a degree of crystallinity greater than 70%. In some embodiments, the small-pore zeolites are characterized by a degree of crystallinity greater than 75%. In some embodiments, the small-pore zeolites are characterized by a degree of crystallinity greater than 80%. In some embodiments, the small-pore zeolites are characterized by a degree of crystallinity greater than 85%. In some embodiments, the small-pore zeolites are present disclosure are characterized by a degree of crystallinity greater than 90%.

The degree of crystallinity of a zeolite may be determined by routine techniques in the art, such as, e.g., x-ray diffraction.

In some embodiments, the small-pore zeolites are characterized by a fluoride content greater than 0 ppm and less than or equal to 2000 ppm. In some embodiments, the small-pore zeolites are characterized by a fluoride content greater than 0 ppm and less than or equal to 1000 ppm. In some embodiments, the small-pore zeolites are characterized by a fluoride content ranging from 1 ppm to 1000 ppm. In some embodiments, the small-pore zeolites are characterized by a fluoride content ranging from 10 ppm to 2000 ppm. In some embodiments, the small-pore zeolites are characterized by a fluoride content ranging from 10 ppm to 1000 ppm. In some embodiments, the small-pore zeolites are characterized by a fluoride content ranging from 40 ppm to 1000 ppm. In some embodiments, the small-pore zeolites are characterized by a fluoride content ranging from 40 ppm to 225 ppm.

In some embodiments, the small-pore zeolites are characterized by a fluoride content ranging from 10 ppm to 2000 ppm and an average crystallite size of less than 3 $\mu$m. In some embodiments, the small-pore zeolites are characterized by a fluoride content ranging from 10 ppm to 2000 ppm and an average crystallite size of less than 2 $\mu$m. In some embodiments, the small-pore zeolites are characterized by a fluoride content ranging from 10 ppm to 2000 ppm and an average crystallite size of less than 1 $\mu$m.

In some embodiments, the small-pore zeolites are characterized by a mole ratio of $SiO_2$ to $Al_2O_3$ ranging from 10 to 40. In some embodiments, the small-pore zeolites are characterized by a mole ratio of $SiO_2$ to $Al_2O_3$ ranging from 14 to 31.

In some embodiments, the small-pore zeolites are characterized by a mole ratio of $SiO_2$ to $Al_2O_3$ of less than 32.5. In some embodiments, the small-pore zeolites are characterized by a mole ratio of $SiO_2$ to $Al_2O_3$ of less than 30. In some embodiments, the small-pore zeolites are characterized by a mole ratio of $SiO_2$ to $Al_2O_3$ of less than 27.5. In some embodiments, the small-pore zeolites are characterized by a mole ratio of $SiO_2$ to $Al_2O_3$ of less than 22.5. In some embodiments, the small-pore zeolites are characterized by a mole ratio of $SiO_2$ to $Al_2O_3$ of less than 20. In some embodiments, the small-pore zeolites are characterized by a mole ratio of $SiO_2$ to $Al_2O_3$ of less than 17.5.

In some embodiments, the small-pore zeolites are characterized by a fluoride content ranging from 10 ppm to 2000 ppm and a mole ratio of $SiO_2$ to $Al_2O_3$ ranging from 10 to 40. In some embodiments, the small-pore zeolites are characterized by a fluoride content ranging from 40 ppm to 1000 ppm and a mole ratio of $SiO_2$ to $Al_2O_3$ ranging from 14 to 31.

In some embodiments, the small-pore zeolites are characterized by a caged structure. In some embodiments, the small-pore zeolites are characterized by a chabazite structure.

In some embodiments, the small-pore zeolites are characterized by a mole ratio of $SiO_2$ to $Al_2O_3$ ranging from 16 to 31. In some embodiments, the small-pore zeolites are characterized by a fluoride content ranging from 395 ppm to 680 ppm. In some embodiments, the small-pore zeolites are characterized by a mole ratio of $SiO_2$ to $Al_2O_3$ ranging from 16 to 31 and a fluoride content ranging from 395 ppm to 680 ppm.

In some embodiments, the small-pore zeolites are characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 16.9 and a fluoride content ranging from 50% to 150% (such as, e.g., 50% to 150%, 75% to 125%, 80% to 120%, 85% to 115%, 90% to 110%, or 95% to 105%) of 678 ppm. In some embodiments, the small-pore zeolites are characterized by a mole ratio of $SiO_2$ to $Al_2O_3$ ranging from 75% to 125% of 16.9 and a fluoride content ranging from 75% to 125% of 678 ppm. In some embodiments, the small-pore zeolites are characterized by a mole ratio of $SiO_2$ to $Al_2O_3$ ranging from 80% to 120% of 16.9 and a fluoride content ranging from 80% to 120% of 678 ppm. In some embodiments, the small-pore zeolites are characterized by a mole ratio of $SiO_2$ to $Al_2O_3$ ranging from 85% to 115% of 16.9 and a fluoride content ranging from 85% to 115% of 678 ppm. In some embodiments, the small-pore zeolites are characterized by a mole ratio of $SiO_2$ to $Al_2O_3$ ranging from 90% to 110% of 16.9 and a fluoride content ranging from 90% to 110% of 678 ppm. In some embodiments, the small-pore zeolites are characterized by a mole ratio of $SiO_2$ to $Al_2O_3$ ranging from 95% to 105% of 16.9 and a fluoride content ranging from 95% to 105% of 678 ppm.

In some embodiments, the small-pore zeolites are characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 30.8 and a fluoride content ranging from 50% to 150% (such as, e.g., 50% to 150%, 75% to 125%, 80% to 120%, 85% to 115%, 90% to 110%, or 95% to 105%) of 399 ppm. In some embodiments, the small-pore zeolites are characterized by a mole ratio of $SiO_2$ to $Al_2O_3$ ranging from 75% to 125% of 30.8 and a fluoride content ranging from 75% to 125% of 399 ppm. In some embodiments, the small-pore zeolites are characterized by a mole ratio of $SiO_2$ to $Al_2O_3$ ranging from 80% to 120% of 30.8 and a fluoride content ranging from 80% to 120% of 399 ppm. In some embodiments, the small-pore zeolites are characterized by a mole ratio of $SiO_2$ to $Al_2O_3$ ranging from 85% to 115% of 30.8 and a fluoride content ranging from 85% to 115% of 399 ppm. In some embodiments, the small-pore zeolites are characterized by a mole ratio of $SiO_2$ to $Al_2O_3$ ranging from 90% to 110% of 30.8 and a fluoride content ranging from 90% to 110% of 399 ppm. In some embodiments, the small-pore zeolites are characterized by a mole ratio of $SiO_2$ to $Al_2O_3$ ranging from 95% to 105% of 30.8 and a fluoride content ranging from 95% to 105% of 399 ppm.

In some embodiments, the small-pore zeolites are H-form zeolites.

In some embodiments, the small-pore zeolites are H-form zeolites characterized by a mole ratio of $SiO_2$ to $Al_2O_3$ ranging from 14 to 21. In some embodiments, the small-pore zeolites are H-form zeolites characterized by a fluoride content ranging from 65 ppm to 920 ppm. In some embodiments, the small-pore zeolites are H-form zeolites characterized by a mole ratio of $SiO_2$ to $Al_2O_3$ ranging from 14 to 21 and a fluoride content ranging from 65 ppm to 920 ppm.

In some embodiments, the small-pore zeolites are H-form zeolites characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 17.5 and a fluoride content ranging from 50% to 150% (such as, e.g., 50% to 150%, 75% to 125%, 80% to 120%, 85% to 115%, 90% to 110%, or 95% to 105%) of 917 ppm. In some embodiments, the small-pore zeolites are H-form zeolites characterized by a mole ratio of $SiO_2$ to $Al_2O_3$ ranging from 75% to 125% of 17.5 and a fluoride content ranging from 75% to 125% of 917 ppm. In some embodiments, the small-pore zeolites are H-form zeolites characterized by a mole ratio of $SiO_2$ to $Al_2O_3$ ranging from 80% to 120% of 17.5 and a fluoride content ranging from 80% to 120% of 917 ppm. In some embodiments, the small-pore zeolites are H-form zeolites characterized by a mole ratio of $SiO_2$ to $Al_2O_3$ ranging from 85% to 115% of 17.5 and a fluoride content ranging from 85% to 115% of 917 ppm. In some embodiments, the small-pore zeolites are H-form zeolites characterized by a mole ratio of $SiO_2$ to $Al_2O_3$ ranging from 90% to 110% of 17.5 and a fluoride content ranging from 90% to 110% of 917 ppm. In some embodiments, the small-pore zeolites are H-form zeolites characterized by a mole ratio of $SiO_2$ to $Al_2O_3$ ranging from 95% to 105% of 17.5 and a fluoride content ranging from 95% to 105% of 917 ppm.

In some embodiments, the small-pore zeolites are H-form zeolites characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 20.2 and a fluoride content ranging from 50% to 150% (such as, e.g., 50% to 150%, 75% to 125%, 80% to 120%, 85% to 115%, 90% to 110%, or 95% to 105%) of 269 ppm. In some embodiments, the small-pore zeolites are H-form zeolites characterized by a mole ratio of $SiO_2$ to $Al_2O_3$ ranging from 75% to 125% of 20.2 and a fluoride content ranging from 75% to 125% of 269 ppm. In some embodiments, the small-pore zeolites are H-form zeolites characterized by a mole ratio of $SiO_2$ to $Al_2O_3$ ranging from 80% to 120% of 20.2 and a fluoride content ranging from 80% to 120% of 269 ppm. In some embodiments, the small-pore zeolites are H-form zeolites characterized by a mole ratio of $SiO_2$ to $Al_2O_3$ ranging from 85% to 115% of 20.2 and a fluoride content ranging from 85% to 115% of 269 ppm. In some embodiments, the small-pore zeolites are H-form zeolites characterized by a mole ratio of $SiO_2$ to $Al_2O_3$ ranging from 90% to 110% of 20.2 and a fluoride content ranging from 90% to 110% of 269 ppm. In some embodiments, the small-pore zeolites are H-form zeolites characterized by a mole ratio of $SiO_2$ to $Al_2O_3$ ranging from 95% to 105% of 20.2 and a fluoride content ranging from 95% to 105% of 269 ppm.

In some embodiments, the small-pore zeolites are H-form zeolites characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 14.1 and a fluoride content ranging from 50% to 150% (such as, e.g., 50% to 150%, 75% to 125%, 80% to 120%, 85% to 115%, 90% to 110%, or 95% to 105%) of 68 ppm. In some embodiments, the small-pore zeolites are H-form zeolites characterized by a mole ratio of $SiO_2$ to $Al_2O_3$ ranging from 75% to 125% of 14.1 and a fluoride content ranging from 75% to 125% of 68 ppm. In some embodiments, the small-pore zeolites are H-form zeolites characterized by a mole ratio of $SiO_2$ to $Al_2O_3$ ranging from 80% to 120% of 14.1 and a fluoride content ranging from 80% to 120% of 68 ppm. In some embodiments, the small-pore zeolites are H-form zeolites characterized by a mole ratio of $SiO_2$ to $Al_2O_3$ ranging from 85% to 115% of 14.1 and a fluoride content ranging from 85% to 115% of 68 ppm. In some embodiments, the small-pore zeolites are H-form zeolites characterized by a mole ratio of $SiO_2$ to $Al_2O_3$ ranging from 90% to 110% of 14.1 and a fluoride content ranging from 90% to 110% of 68 ppm. In some embodiments, the small-pore zeolites are H-form zeolites characterized by a mole ratio of $SiO_2$ to $Al_2O_3$ ranging from 95% to 105% of 14.1 and a fluoride content ranging from 95% to 105% of 68 ppm.

In some embodiments, the small-pore zeolites are Na-form zeolites.

In some embodiments, the small-pore zeolites are Na-form zeolites characterized by a mole ratio of $SiO_2$ to $Al_2O_3$ ranging from 19 to 31. In some embodiments, the small-pore zeolites are Na-form zeolites characterized by a fluoride content ranging from 70 ppm to 500 ppm. In some embodiments, the small-pore zeolites are Na-form zeolites characterized by a mole ratio of $SiO_2$ to $Al_2O_3$ ranging from 19 to 31 and a fluoride content ranging from 70 ppm to 500 ppm.

In some embodiments, the small-pore zeolites are Na-form zeolites characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 19.7 and a fluoride content ranging from 50% to 150% (such as, e.g., 50% to 150%, 75% to 125%, 80% to 120%, 85% to 115%, 90% to 110%, or 95% to 105%) of 72 ppm. In some embodiments, the small-pore zeolites are Na-form zeolites characterized by a mole ratio of $SiO_2$ to $Al_2O_3$ ranging from 75% to 125% of 19.7 and a fluoride content ranging from 75% to 125% of 72 ppm. In some embodiments, the small-pore zeolites are Na-form zeolites characterized by a mole ratio of $SiO_2$ to $Al_2O_3$ ranging from 80% to 120% of 19.7 and a fluoride content ranging from 80% to 120% of 72 ppm. In some embodiments, the small-pore zeolites are Na-form zeolites characterized by a mole ratio of $SiO_2$ to $Al_2O_3$ ranging from 85% to 115% of 19.7 and a fluoride content ranging from 85% to 115% of 72 ppm. In some embodiments, the small-pore zeolites are Na-form zeolites characterized by a mole ratio of $SiO_2$ to $Al_2O_3$ ranging from 90% to 110% of 19.7 and a fluoride content ranging from 90% to 110% of 72 ppm. In some embodiments, the small-pore zeolites are Na-form zeolites characterized by a mole ratio of $SiO_2$ to $Al_2O_3$ ranging from 95% to 105% of 19.7 and a fluoride content ranging from 95% to 105% of 72 ppm.

In some embodiments, the small-pore zeolites are Na-form zeolites characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 20.2 and a fluoride content ranging from 50% to 150% (such as, e.g., 50% to 150%, 75% to 125%, 80% to 120%, 85% to 115%, 90% to 110%, or 95% to 105%) of 484 ppm. In some embodiments, the small-pore zeolites are Na-form zeolites characterized by a mole ratio of $SiO_2$ to $Al_2O_3$ ranging from 75% to 125% of 20.2 and a fluoride content ranging from 75% to 125% of 484 ppm. In some embodiments, the small-pore zeolites are Na-form zeolites characterized by a mole ratio of $SiO_2$ to $Al_2O_3$ ranging from 80% to 120% of 20.2 and a fluoride content ranging from 80% to 120% of 484 ppm. In some embodiments, the small-pore zeolites are Na-form zeolites characterized by a mole ratio of $SiO_2$ to $Al_2O_3$ ranging from 85% to 115% of 20.2 and a fluoride content ranging from 85% to 115% of 484 ppm. In some embodiments, the small-pore zeolites are Na-form zeolites characterized by a mole ratio of $SiO_2$ to $Al_2O_3$ ranging from 90% to 110% of 20.2 and a fluoride content ranging from 90% to 110% of 484 ppm. In some embodiments, the small-pore zeolites are Na-form zeolites characterized by a mole ratio of $SiO_2$ to $Al_2O_3$ ranging from 95% to 105% of 20.2 and a fluoride content ranging from 95% to 105% of 484 ppm.

In some embodiments, the small-pore zeolites are Na-form zeolites characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 30.8 and a fluoride content ranging from 50% to 150% (such as, e.g., 50% to 150%, 75% to 125%, 80% to 120%, 85% to 115%, 90% to 110%, or 95% to 105%) of 277 ppm. In some embodiments, the small-pore zeolites are Na-form zeolites characterized by a mole ratio of $SiO_2$ to $Al_2O_3$ ranging from 75% to 125% of 30.8 and a fluoride content ranging from 75% to 125% of 277 ppm. In some embodiments, the small-pore zeolites are Na-form zeolites characterized by a mole ratio of $SiO_2$ to $Al_2O_3$ ranging from 80% to 120% of 30.8 and a fluoride content ranging from 80% to 120% of 277 ppm. In some embodiments, the small-pore zeolites are Na-form zeolites characterized by a mole ratio of $SiO_2$ to $Al_2O_3$ ranging from 85% to 115% of 30.8 and a fluoride content ranging from 85% to 115% of 277 ppm. In some embodiments, the small-pore zeolites are Na-form zeolites characterized by a mole ratio of $SiO_2$ to $Al_2O_3$ ranging from 90% to 110% of 30.8 and a fluoride content ranging from 90% to 110% of 277 ppm. In some embodiments, the small-pore zeolites are Na-form zeolites characterized by a mole ratio of $SiO_2$ to $Al_2O_3$ ranging from 95% to 105% of 30.8 and a fluoride content ranging from 95% to 105% of 277 ppm.

In some embodiments, the small-pore zeolites further comprise copper.

In some embodiments, the small-pore zeolites further comprise copper and are characterized by a mole ratio of $SiO_2$ to $Al_2O_3$ ranging from 16 to 21. In some embodiments, the small-pore zeolites further comprise copper and are characterized by a fluoride content ranging from 40 ppm to 210 ppm.

In some embodiments, the small-pore zeolites further comprise copper and are characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 16.9 and a fluoride content ranging from 50% to 150% (such as, e.g., 50% to 150%, 75% to 125%, 80% to 120%, 85% to 115%, 90% to 110%, or 95% to 105%) of 41 ppm. In some embodiments, the small-pore zeolites further comprise copper and are characterized by a mole ratio of $SiO_2$ to $Al_2O_3$ ranging from 75% to 125% of 16.9 and a fluoride content ranging from 75% to 125% of 41 ppm. In some embodiments, the small-pore zeolites further comprise copper and are characterized by a mole ratio of $SiO_2$ to $Al_2O_3$ ranging from 80% to 120% of 16.9 and a fluoride content ranging from 80% to 120% of 41 ppm. In some embodiments, the small-pore zeolites further comprise copper and are characterized by a mole ratio of $SiO_2$ to $Al_2O_3$ ranging from 85% to 115% of 16.9 and a fluoride content ranging from 85% to 115% of 41 ppm. In some embodiments, the small-pore zeolites further comprise copper and are characterized by a mole ratio of $SiO_2$ to $Al_2O_3$ ranging from 90% to 110% of 16.9 and a fluoride content ranging from 90% to 110% of 41 ppm. In some embodiments, the small-pore zeolites further comprise copper and are characterized by a mole ratio of $SiO_2$ to $Al_2O_3$ ranging from 95% to 105% of 16.9 and a fluoride content ranging from 95% to 105% of 41 ppm.

In some embodiments, the small-pore zeolites further comprise copper and are characterized by a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 20.2 and a fluoride content ranging from 50% to 150% (such as, e.g., 50% to 150%, 75% to 125%, 80% to 120%, 85% to 115%, 90% to 110%, or 95% to 105%) of 208 ppm. In some embodiments, the small-pore zeolites further comprise copper and are characterized by a mole ratio of $SiO_2$ to $Al_2O_3$ ranging from 75% to 125% of 20.2 and a fluoride content ranging from 75% to 125% of 208 ppm. In some embodiments, the small-pore zeolites further comprise copper and are characterized by a mole ratio of $SiO_2$ to $Al_2O_3$ ranging from 80% to 120% of 20.2 and a fluoride content ranging from 80% to 120% of 208 ppm. In some embodiments, the small-pore zeolites further comprise copper and are characterized by a mole ratio of $SiO_2$ to $Al_2O_3$ ranging from 85% to 115% of 20.2 and a fluoride content ranging from 85% to 115% of 208 ppm. In some embodiments, the small-pore zeolites further comprise copper and are characterized by a mole ratio of $SiO_2$ to $Al_2O_3$ ranging from 90% to 110% of 20.2 and a fluoride content ranging from 90% to 110% of 208 ppm. In some embodiments, the small-pore zeolites further comprise copper and are characterized by a mole ratio of $SiO_2$ to $Al_2O_3$ ranging from 95% to 105% of 20.2 and a fluoride content ranging from 95% to 105% of 208 ppm.

In some embodiments, the small-pore zeolites are characterized by a CuO content ranging from 1 wt% to 5 wt%. In some embodiments, the small-pore zeolites are characterized by a CuO content ranging from 1 wt% to 4 wt%.

In some embodiments, the small-pore zeolites are characterized by a CuO content ranging from 50% to 150% (such as, e.g., 50% to 150%, 75% to 125%, 80% to 120%, 85% to 115%, 90% to 110%, or 95% to 105%) of 1.05 wt% and a mole ratio of Cu to Al of 50% to 150% (such as, e.g., 50% to 150%, 75% to 125%, 80% to 120%, 85% to 115%, 90% to 110%, or 95% to 105%) of 0.09.

In some embodiments, the small-pore zeolites are characterized by a CuO content ranging from 50% to 150% (such as, e.g., 50% to 150%, 75% to 125%, 80% to 120%, 85% to 115%, 90% to 110%, or 95% to 105%) of 2.13 wt% and a mole ratio of Cu to Al of 50% to 150% (such as, e.g., 50% to 150%, 75% to 125%, 80% to 120%, 85% to 115%, 90% to 110%, or 95% to 105%) of 0.18.

In some embodiments, the small-pore zeolites are characterized by a CuO content ranging from 50% to 150% (such as, e.g., 50% to 150%, 75% to 125%, 80% to 120%, 85% to 115%, 90% to 110%, or 95% to 105%) of 3.78 wt% and a mole ratio of Cu to Al of 50% to 150% (such as, e.g., 50% to 150%, 75% to 125%, 80% to 120%, 85% to 115%, 90% to 110%, or 95% to 105%) of 0.32.

In some embodiments, the small-pore zeolites are characterized by a CuO content ranging from 50% to 150% (such as, e.g., 50% to 150%, 75% to 125%, 80% to 120%, 85% to 115%, 90% to 110%, or 95% to 105%) of 1.05 wt%, a mole ratio of Cu to Al of 50% to 150% (such as, e.g., 50% to 150%, 75% to 125%, 80% to 120%, 85% to 115%, 90% to 110%, or 95% to 105%) of 0.09, and a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 20.2.

In some embodiments, the small-pore zeolites are characterized by a CuO content ranging from 50% to 150% (such as, e.g., 50% to 150%, 75% to 125%, 80% to 120%, 85% to 115%, 90% to 110%, or 95% to 105%) of 2.13 wt%, a mole ratio of Cu to Al of 50% to 150% (such as, e.g., 50% to 150%, 75% to 125%, 80% to 120%, 85% to 115%, 90% to 110%, or 95% to 105%) of 0.18, and a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 20.2.

In some embodiments, the small-pore zeolites are characterized by a CuO content ranging from 50% to 150% (such as, e.g., 50% to 150%, 75% to 125%, 80% to 120%, 85% to 115%, 90% to 110%, or 95% to 105%) of 3.78 wt%, a mole ratio of Cu to Al of 50% to 150% (such as, e.g., 50% to 150%, 75% to 125%, 80% to 120%, 85% to 115%, 90% to 110%, or 95% to 105%) of 0.32, and a mole ratio of $SiO_2$ to $Al_2O_3$ ranging from 50% to 150% (such as, e.g., 50% to 150%, 75% to 125%, 80% to 120%, 85% to 115%, 90% to 110%, or 95% to 105%) of 20.2.

In some embodiments, the small-pore zeolites are characterized by a CuO content ranging from 50% to 150% (such as, e.g., 50% to 150%, 75% to 125%, 80% to 120%, 85% to 115%, 90% to 110%, or 95% to 105%) of 1.05 wt%, a mole ratio of Cu to Al of 50% to 150% (such as, e.g., 50% to 150%, 75% to 125%, 80% to 120%, 85% to 115%, 90% to 110%, or 95% to 105%) of 0.09, and a fluoride content ranging from 50% to 150% (such as, e.g., 50% to 150%, 75% to 125%, 80% to 120%, 85% to 115%, 90% to 110%, or 95% to 105%) of 208 ppm.

In some embodiments, the small-pore zeolites are characterized by a CuO content ranging from 50% to 150% (such as, e.g., 50% to 150%, 75% to 125%, 80% to 120%, 85% to 115%, 90% to 110%, or 95% to 105%) of 2.13 wt%, a mole ratio of Cu to Al of 50% to 150% (such as, e.g., 50% to 150%, 75% to 125%, 80% to 120%, 85% to 115%, 90% to 110%, or 95% to 105%) of 0.18, and a fluoride content ranging from 50% to 150% (such as, e.g., 50% to 150%, 75% to 125%, 80% to 120%, 85% to 115%, 90% to 110%, or 95% to 105%) of 208 ppm.

In some embodiments, the small-pore zeolites are characterized by a CuO content ranging from 50% to 150% (such as, e.g., 50% to 150%, 75% to 125%, 80% to 120%, 85% to 115%, 90% to 110%, or 95% to 105%) of 3.78 wt%, a mole ratio of Cu to Al of 50% to 150% (such as, e.g., 50% to 150%, 75% to 125%, 80% to 120%, 85% to 115%, 90% to 110%, or 95% to 105%) of 0.32, and a fluoride content ranging from 50% to 150% (such as, e.g., 50% to 150%, 75% to 125%, 80% to 120%, 85% to 115%, 90% to 110%, or 95% to 105%) of 208 pp. In some embodiments, the small-pore zeolites are characterized by a zeolite surface area greater than or equal to 500 $m^2$/g. In some embodiments, the small-pore zeolites are characterized by a zeolite surface area ranging from 500 $m^2$/g to 600 $m^2$/g.

In some embodiments, the small-pore zeolites are characterized by a matrix surface area greater than or equal to 1 $m^2$/g. In some embodiments, the small-pore zeolites are characterized by a matrix surface area greater than or equal to 5 $m^2$/g. In some embodiments, the small-pore zeolites are characterized by a matrix surface area from 5 $m^2$/g to 50 $m^2$/g.

In some embodiments, the small-pore zeolites are characterized by a matrix surface area from 1 $m^2$/g to 50 $m^2$/g. In some embodiments, the small-pore zeolites are characterized by a matrix surface area from 7 $m^2$/g to 49 $m^2$/g. In some embodiments, the small-pore zeolites are characterized by a matrix surface area from 24 $m^2$/g to 43 $m^2$/g. In some embodiments, the small-pore zeolites are characterized by a matrix surface area from 20 $m^2$/g to 45 $m^2$/g. In some embodiments, the small-pore zeolites are characterized by a matrix surface area from 20 $m^2$/g to 35 $m^2$/g.

Zeolite surface area and/or matrix surface area may be determined by routine techniques in the art, such as, e.g., gas adsorption and Brunauer-Emmett-Teller (BET) analysis.

Some embodiments of the present disclosure relate to small-pore zeolites comprising aluminum, silicon, and fluoride, wherein the small-pore zeolites are characterized by a fluoride content greater than 0 ppm and less than or equal to 2000 ppm.

In some embodiments, the small-pore zeolites are characterized by a fluoride content greater than 0 ppm and less than or equal to 1000 ppm. In some embodiments, the small-pore zeolites are characterized by a fluoride content ranging from 1 ppm to 1000 ppm. In some embodiments, the small-pore zeolites are characterized by a fluoride content ranging from 10 ppm to 2000 ppm. In some embodiments, the small-pore zeolites are characterized by a fluoride content ranging from 10 ppm to 1000 ppm. In some embodiments, the small-pore zeolites are characterized by a fluoride content ranging from 40 ppm to 1000 ppm.

In some embodiments, the small-pore zeolites are characterized by an average crystallite size of less than 3 $\mu$m. In some embodiments, the small-pore zeolites are characterized by an average crystallite size of less than 2 $\mu$m. In some embodiments, the small-pore zeolites are characterized by an average crystallite size of less than 1 $\mu$m.

In some embodiments, the small-pore zeolites further comprise at least one organic structure directing agent.

In some embodiments, the at least one organic structure directing agent is chosen from ionic molecules comprising an adamantammonium group. In some embodiments, the at least one organic structure directing agent is trimethyl adamantammonium.

In some embodiments, the small-pore zeolites are characterized by a fluoride content ranging from 10 ppm to 2000 ppm and an average crystallite size of less than 3 $\mu$m. In some embodiments, the small-pore zeolites are characterized by a fluoride content ranging from 10 ppm to 2000 ppm and an average crystallite size of less than 2 $\mu$m. In some embodiments, the small-pore zeolites are characterized by a fluoride content ranging from 10 ppm to 2000 ppm and an average crystallite size of less than 1 $\mu$m.

In some embodiments, the small-pore zeolites are substantially in the form of faceted crystallites. An average and/or typical crystallite may have one or more facets.

In some embodiments, the small-pore zeolites are substantially in the form of faceted crystallites and characterized by an average crystallite size of less than 3 $\mu$m. In some embodiments, the small-pore zeolites are substantially in the form of faceted crystallites and characterized by an average crystallite size of less than 2 $\mu$m. In some embodiments, the small-pore zeolites are substantially in the form of faceted crystallites and characterized by an average crystallite size of less than 1 $\mu$m.

In some embodiments, the small-pore zeolites are characterized by a degree of crystallinity greater than 50%. In some embodiments, the small-pore zeolites are characterized by a degree of crystallinity greater than 55%. In some embodiments, the small-pore zeolites are characterized by a degree of crystallinity greater than 60%. In some embodiments, the small-pore zeolites are characterized by a degree of crystallinity greater than 65%. In some embodiments, the small-pore zeolites are characterized by a degree of crystallinity greater than 70%. In some embodiments, the small-pore zeolites are characterized by a degree of crystallinity greater than 75%. In some embodiments, the small-pore zeolites are characterized by a degree of crystallinity greater than 80%. In some embodiments, the small-pore zeolites are characterized by a degree of crystallinity greater than 85%. In some embodiments, the small-pore zeolites are present disclosure are characterized by a degree of crystallinity greater than 90%.

In some embodiments, the small-pore zeolites are characterized by a mole ratio of $SiO_2$ to $Al_2O_3$ of less than 32.5. In some embodiments, the small-pore zeolites are characterized by a mole ratio of $SiO_2$ to $Al_2O_3$ of less than 30. In some embodiments, the small-pore zeolites are characterized by a mole ratio of $SiO_2$ to $Al_2O_3$ of less than 27.5. In some embodiments, the small-pore zeolites are characterized by a mole ratio of $SiO_2$ to $Al_2O_3$ of less than 22.5. In some embodiments, the small-pore zeolites are characterized by a mole ratio of $SiO_2$ to $Al_2O_3$ of less than 20. In some embodiments, the small-pore zeolites are characterized by a mole ratio of $SiO_2$ to $Al_2O_3$ of less than 17.5.

In some embodiments, the small-pore zeolites are characterized by a mole ratio of $SiO_2$ to $Al_2O_3$ ranging from 10 to 40. In some embodiments, the small-pore zeolites are characterized by a mole ratio of $SiO_2$ to $Al_2O_3$ ranging from 14 to 31.

In some embodiments, the small-pore zeolites are characterized by a fluoride content ranging from 10 ppm to 2000 ppm and a mole ratio of $SiO_2$ to $Al_2O_3$ ranging from 10 to 40. In some embodiments, the small-pore zeolites are characterized by a fluoride content ranging from 40 ppm to 1000 ppm and a mole ratio of $SiO_2$ to $Al_2O_3$ ranging from 14 to 31.

In some embodiments, the small-pore zeolites are characterized by a small-pore structure. In some embodiments, the small-pore zeolites are characterized by a small-pore caged structure. In some embodiments, the small-pore zeolites are characterized by a chabazite structure.

In some embodiments, the small-pore zeolites are H-form zeolites.

In some embodiments, the small-pore zeolites are Na-form zeolites.

In some embodiments, the small-pore zeolites further comprise copper.

In some embodiments, the small-pore zeolites are characterized by a zeolite surface area greater than or equal to 500 m$^2$/g. In some embodiments, the small-pore zeolites are characterized by a zeolite surface area ranging from 500 m$^2$/g to 600 m$^2$/g.

In some embodiments, the small-pore zeolites are characterized by a matrix surface area greater than or equal to 1 m$^2$/g. In some embodiments, the small-pore zeolites are characterized by a matrix surface area greater than or equal to 5 m$^2$/g. In some embodiments, the small-pore zeolites are characterized by a matrix surface area from 5 m$^2$/g to 50 m$^2$/g.

In some embodiments, the small-pore zeolites are characterized by a matrix surface area from 1 m$^2$/g to 50 m$^2$/g. In some embodiments, the small-pore zeolites are characterized by a matrix surface area from 7 m$^2$/g to 49 m$^2$/g. In some embodiments, the small-pore zeolites are characterized by a matrix surface area from 24 m$^2$/g to 43 m$^2$/g. In some embodiments, the small-pore zeolites are characterized by a matrix surface area from 20 m$^2$/g to 45 m$^2$/g. In some embodiments, the small-pore zeolites are characterized by a matrix surface area from 20 m$^2$/g to 35 m$^2$/g.

In some embodiments, the small-pore zeolites are capable of reducing $NO_x$. In some embodiments, the small-pore zeolites are capable of reducing $NO_x$ with ammonia or an ammonia precursor (such as, e.g., urea). In some embodiments, the small-pore zeolites are capable of reducing $NO_x$ when exposed to a gas mixture of 500 ppm NO, 525 ppm $NH_3$, 10% $O_2$, 10% $H_2O$, and a balance of $N_2$ at a temperature ranging from 200 °C to 600 °C. In some embodiments, the small-pore zeolites are capable of reducing $NO_x$ when exposed to a gas mixture of 500 ppm NO, 525 ppm $NH_3$, 10% $O_2$, 10% $H_2O$, and a balance of $N_2$ at a temperature ranging from 200 °C to 550 °C.

In some embodiments, the small-pore zeolites are characterized by an average crystallite size of less than 3 $\mu$m, a fluoride content ranging from 10 ppm to 2000 ppm, and a degree of crystallinity greater than 80%.

In some embodiments, the small-pore zeolites are characterized by an average crystallite size of less than 3 $\mu$m, a fluoride content ranging from 10 ppm to 2000 ppm, and a degree of crystallinity greater than 90%.

In some embodiments, the small-pore zeolites are characterized by an average crystallite size of less than 3 $\mu$m, a fluoride content ranging from 40 ppm to 1000 ppm, and a degree of crystallinity greater than 90%.

In some embodiments, the small-pore zeolites are characterized by an average crystallite size of less than 2 $\mu$m, a fluoride content ranging from 10 ppm to 2000 ppm, and a degree of crystallinity greater than 90%.

In some embodiments, the small-pore zeolites are characterized by an average crystallite size of less than 2 $\mu$m, a fluoride content ranging from 40 ppm to 1000 ppm, and a degree of crystallinity greater than 90%.

In some embodiments, the small-pore zeolites are characterized by an average crystallite size of less than 1 $\mu$m, a fluoride content ranging from 40 ppm to 1000 ppm, and a degree of crystallinity greater than 90%.

In some embodiments, the small-pore zeolites are characterized by a CuO content ranging from 1 wt% to 5 wt%, an average crystallite size of less than 3 $\mu$m, a fluoride content ranging from 10 ppm to 2000 ppm, and a degree of crystallinity greater than 80%.

In some embodiments, the small-pore zeolites are characterized by a CuO content ranging from 1 wt% to 5 wt%, an average crystallite size of less than 3 $\mu$m, a fluoride content ranging from 10 ppm to 2000 ppm, and a degree of crystallinity greater than 90%.

In some embodiments, the small-pore zeolites are characterized by a CuO content ranging from 1 wt% to 5 wt%, an average crystallite size of less than 3 $\mu$m, a fluoride content ranging from 40 ppm to 1000 ppm, and a degree of crystallinity greater than 90%.

In some embodiments, the small-pore zeolites are characterized by a CuO content ranging from 1 wt% to 5 wt%, an average crystallite size of less than 2 $\mu$m, a fluoride content ranging from 10 ppm to 2000 ppm, and a degree of crystallinity greater than 90%.

In some embodiments, the small-pore zeolites are characterized by a CuO content ranging from 1 wt% to 5 wt%, an average crystallite size of less than 2 $\mu$m, a fluoride content ranging from 40 ppm to 1000 ppm, and a degree of crystallinity greater than 90%.

In some embodiments, the small-pore zeolites are characterized by a CuO content ranging from 1 wt% to 5 wt%, an average crystallite size of less than 1 $\mu$m, a fluoride content ranging from 40 ppm to 1000 ppm, and a degree of crystallinity greater than 90%.

In some embodiments, the small-pore zeolites are characterized by an average crystallite size of less than 3 $\mu$m, a fluoride content ranging from 10 ppm to 2000 ppm, a mole ratio of Cu to Al ranging from 0.05 to 0.5, and a degree of crystallinity greater than 80%.

In some embodiments, the small-pore zeolites are characterized by an average crystallite size of less than 3 $\mu$m, a fluoride content ranging from 10 ppm to 2000 ppm, a mole ratio of Cu to Al ranging from 0.05 to 0.5, and a degree of crystallinity greater than 90%.

In some embodiments, the small-pore zeolites are characterized by an average crystallite size of less than 3 $\mu$m, a fluoride content ranging from 40 ppm to 1000 ppm, a mole ratio of Cu to Al ranging from 0.05 to 0.5, and a degree of crystallinity greater than 90%.

In some embodiments, the small-pore zeolites are characterized by an average crystallite size of less than 2 $\mu$m, a fluoride content ranging from 10 ppm to 2000 ppm, a mole ratio of Cu to Al ranging from 0.05 to 0.5, and a degree of crystallinity greater than 90%.

In some embodiments, the small-pore zeolites are characterized by an average crystallite size of less than 2 $\mu$m, a fluoride content ranging from 40 ppm to 1000 ppm, a mole ratio of Cu to Al ranging from 0.05 to 0.5, and a degree of crystallinity greater than 90%.

In some embodiments, the small-pore zeolites are characterized by an average crystallite size of less than 1 $\mu$m, a fluoride content ranging from 40 ppm to 1000 ppm, a mole ratio of Cu to Al ranging from 0.05 to 0.5, and a degree of crystallinity greater than 90%.

**Catalyst-Presenting Substrates:**

Small-pore zeolites of the present disclosure may be deposited on a substrate. The substrate may be any material typically used for preparing catalysts, such as, e.g., a substrate with a ceramic or a metal honeycomb structure. Any suitable substrate may be employed, such as, e.g., a monolithic substrate having fine, parallel gas flow passages extending therethrough from an inlet or an outlet face of the substrate, such that passages are open to fluid flow therethrough (referred to as honeycomb flow through substrates). The passages, which may be essentially straight paths from their fluid inlet to their fluid outlet, can be defined by walls on which the small-pore zeolites deposited as a washcoat so that gases flowing through the passages contact the small-pore zeolites. The flow passages of the monolithic substrate may be thin-walled channels, which can be of any suitable cross-sectional shape and size, such as, e.g., trapezoidal, rectangular, square, sinusoidal, hexagonal, oval, or circular cross-sections. Such structures may contain from 60 to 400 or more gas inlet openings (i.e., cells) per square inch of cross-section.

The substrate can also be a wall-flow filter substrate, where the channels are alternately blocked, allowing a gaseous stream entering the channels from one direction (inlet direction), to flow through the channel walls and exit from the channels from the other direction (outlet direction). Small-pore zeolites of the present disclosure can be coated on the flow through or wall-flow filter. If a wall flow substrate is utilized, the resulting system may be able to remove particulate matter along with gaseous pollutants such as, e.g., nitrogen oxides. The wall-flow filter substrate can be made from materials commonly known in the art, such as, e.g., cordierite, aluminum titanate, or silicon carbide. It will be understood that the loading of small-pore zeolites on a wall flow substrate will depend on substrate properties such as porosity and wall thickness, and typically will be lower than loading on a flow through substrate.

A ceramic substrate may be made of any suitable refractory material, such as, e.g., cordierite, cordierite-alumina, silicon nitride, zircon mullite, spodumene, alumina-silica magnesia, zircon silicate, sillimanite, a magnesium silicate, zircon, petalite, alpha-alumina, or an aluminosilicate.

Substrates useful for small-pore zeolites of the present disclosure may also be metallic in nature and be composed of one or more metals or metal alloys. The metallic substrates may be employed in various shapes, such as, e.g., corrugated sheet or monolithic form. Suitable metallic supports include the heat resistant metals and metal alloys, such as, e.g., titanium and stainless steel as well as other alloys in which iron is a substantial or major component. Such alloys may contain one or more of nickel, chromium, and/or aluminum, and the total amount of these metals may advantageously comprise at least 15 wt. % of the alloy, e.g., 10-25 wt. % of chromium, 3-8 wt. % of aluminum and up to 20 wt. % of nickel. The alloys may also contain small or trace amounts of one or more other metals, such as, e.g., manganese, copper, vanadium, or titanium. The surface or the metal substrates may be oxidized at high temperatures, such as, e.g., 1000 °C. and higher, to improve corrosion resistance by forming an oxide layer on the substrates' surface. High temperature-induced oxidation may enhance the adherence of the refractory metal oxide support and catalytically promoting metal components to the substrate.

**Methods of Reducing Nitrogen Oxides:**

Further disclosed herein are methods of reducing nitrogen oxides ($NO_x$) comprising contacting a gaseous stream containing nitrogen oxides with at least one small-pore zeolite of the present disclosure. In some embodiments, the methods comprise selectively reducing $NO_x$ using ammonia or an ammonia precursor at a temperature ranging from 200 °C to 550 °C.

In some embodiments, the overall conversion of $NO_x$ at 200 °C is greater than 60%. In some embodiments, the overall conversion of $NO_x$ at 200 °C is greater than 65%.

In some embodiments, the overall conversion of $NO_x$ at 300 °C is greater than 90%. In some embodiments, the overall conversion of $NO_x$ at 300 °C is greater than 95%.

In some embodiments, the overall conversion of $NO_x$ at 400 °C is greater than 90%. In some embodiments, the overall conversion of $NO_x$ at 400 °C is greater than 95%.

In some embodiments, the overall conversion of $NO_x$ at 550 °C is greater than 75%.

In some embodiments, the overall conversion of $NO_x$ at 200 °C is greater than 65% and the overall conversion of $NO_x$ at 550 °C is greater than 75%.

Claims or descriptions that include "or" or "and/or" between at least one members of a group are considered satisfied if one, more than one, or all of the group members are present in, employed in, or otherwise relevant to a given product or process unless indicated to the contrary or otherwise evident from the context. The disclosure includes embodiments in which exactly one member of the group is present in, employed in, or otherwise relevant to a given product or process. The disclosure includes embodiments in which more than one, or all the group members are present in, employed in, or otherwise relevant to a given product or process.

Furthermore, the disclosure encompasses all variations, combinations, and permutations in which at least one limitation, element, clause, and descriptive term from at least one of the listed claims is introduced into another claim. For example, any claim that is dependent on another claim can be modified to include at least one limitation found in any other claim that is dependent on the same base claim. Where elements are presented as lists, such as, e.g., in Markush group format, each subgroup of the elements is also disclosed, and any element(s) can be removed from the group. It should be understood that, in general, where the disclosure, or aspects of the disclosure, is/are referred to as comprising particular elements and/or features, embodiments of the disclosure or aspects of the disclosure consist, or consist essentially of, such elements and/or features. For purposes of simplicity, those embodiments have not been specifically set forth in haec verba herein. Where ranges are given, endpoints are included. Furthermore, unless otherwise indicated or otherwise evident from the context and understanding of one of ordinary skill in the art, values that are expressed as ranges can assume any specific value or sub range within the stated ranges in different embodiments of the disclosure, unless the context clearly dictates otherwise.

Those of ordinary skill in the art will recognize or be able to ascertain using no more than routine experimentation, many equivalents to the specific embodiments of the disclosure described herein. Such equivalents are intended to be encompassed by the following claims.

**EXAMPLES**

The following examples are intended to be illustrative and are not meant in any way to limit the scope of the disclosure.

**Abbreviations**

%          percent

AH aluminum hydroxide
AIP aluminum isopropoxide
BET Brunauer-Emmett-Teller
CuT copper-tetraethylenepentamine complex
h hour(s)
MSA matrix surface area
NaF sodium fluoride
NaY sodium form Zeolite Y
$NO_x$ nitrogen oxides
R1 trimethyl adamantammonium
R1F trimethyl adamantammonium fluoride
R2 reagent two
SAR silica-to-alumina ratio
SCR selective catalytic reduction
XRD x-ray diffraction
ZSA zeolite surface area

Fluoride-containing small-pore zeolites, as well as comparator zeolites without fluoride, were prepared according to methods described herein, except that comparator zeolites were prepared from compositions without a fluoride source. Table 1 provides the mole ratios of various components in the example compositions. The compositions of samples A through L each included trimethyl adamantammonium hydroxide. Trimethyl adamantammonium, referred to as R1 in Table 1, is an organic structure directing agent. The silica source was Ludox® AS-40 for samples A through H and K through L. The silica source for samples I and J was sodium silicate. The composition of sample C comprised sodium sulfate and trimethyl adamantammonium sulfate in an amount equivalent to the amount of sodium fluoride and trimethyl adamantammonium fluoride comprised by sample H.

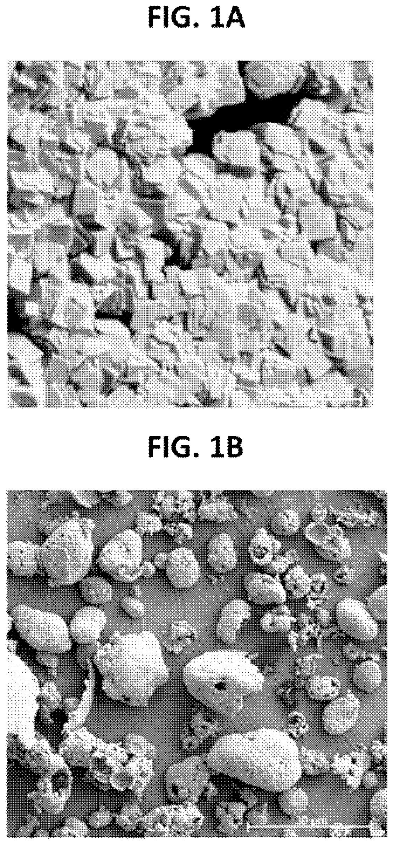

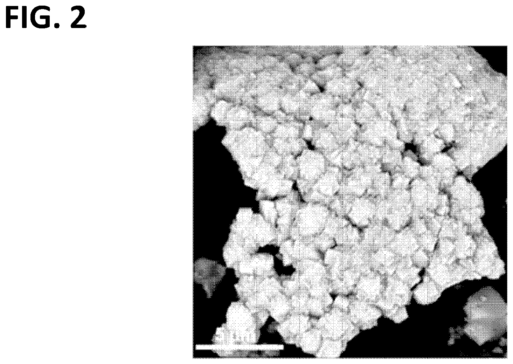

The compositions of Table 1 were subjected to thermal treatments at a pH ranging from 10.5 to 13.5 until zeolite crystals formed. Sample C did not form crystals upon thermal treatment under the conditions recited in Table 1. Samples A, B, and D through L formed crystals that were determined to be chabazite zeolites with degrees of crystallinity greater than or equal to 90% by x-ray diffraction analysis. FIGs. 1 and 2 depict scanning electron microscopy (SEM) images of samples F and G, respectively.

The fluoride content of certain zeolite samples and their ion-exchanged counterparts was measured. The average results of two measurements per sample are reported in Table 2.

Some dissolved aluminum was left in the mother liquor following thermal treatment when fluoride was used for zeolite synthesis at an alkaline pH ranging from 10.5 to 13.5. For example, samples F and G were found to have dissolved aluminum in the mother liquor post-crystallization at 161 ppm $Al_2O_3$ and 178 ppm $Al_2O_3$, respectively. Accordingly, the product silica-to-alumina ratio (SAR) for zeolites of the present disclosure can be above or below the SAR of the composition. By contrast, there was no detectable aluminum in the mother liquor of samples A and B. Therefore, a unique crystallization mechanism may occur when fluoride is employed for zeolite preparation at an alkaline pH. This crystallization mechanism may be due to charge-balancing interactions between negatively-charged fluoride anions and a positively-charged organic structure directing agent and/or inorganic cations during the formation of the small-pore zeolite.

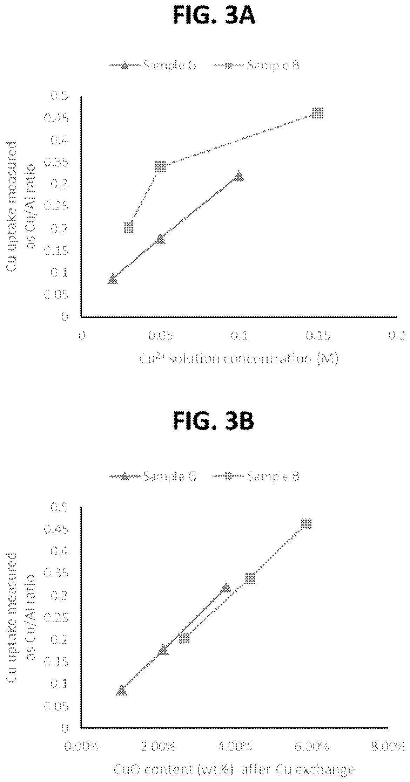

Copper uptake behavior was examined as a proxy for aluminum distribution in the example zeolites. FIG. 3 depicts a comparison of the copper uptake of samples G and B, with data labels next to each data point representing the CuO content (in wt% based on the total weight of the zeolite) of the corresponding materials after copper ion exchange. Copper uptake was measured as the ratio of copper to aluminum in the zeolites at various $Cu^{2+}$ solution concentrations. The difference in the copper uptake of samples G and B may be due to a difference in the aluminum distribution of the respective zeolites.

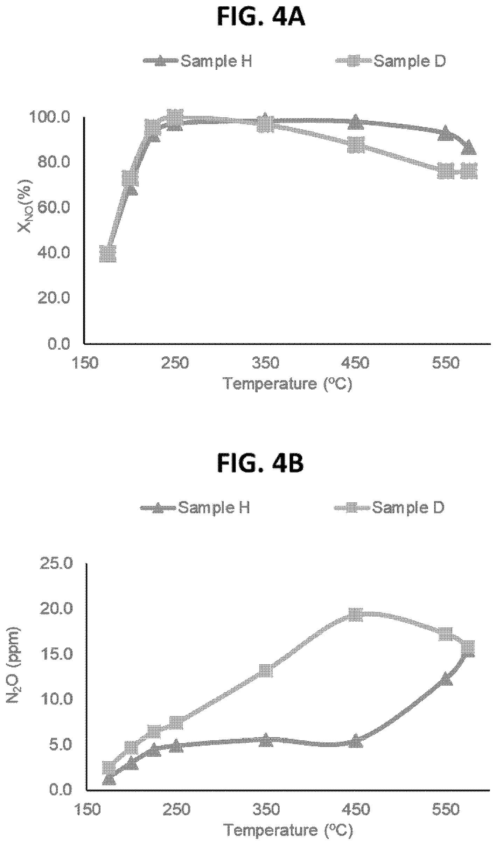

The selective catalytic reduction (SCR) of $NO_x$ by samples D and H was tested according to the following procedure. Samples were tested as 120 mg of copper-chabazite zeolite per reactor and diluted with corundum of the same sieve fraction to 1 mL of bed volume. A first degreening run was run at 200 °C, 400 °C, and 575 °C followed by a second test run at 175 °C, 200 °C, 225 °C, 250 °C, 500 °C, 550 °C, and 575 °C. The test conditions included a gas hourly volume-based space velocity of 80,000 h-1 and a gas composition of 500 ppm NO, 500 ppm $NH_3$, 5% $H_2O$, 10% $O_2$, and a balance of $N_2$. Results of this test are shown in FIG. 4, with $X_{NO}$ (%) denoting the overall mole percent conversion of $NO_x$.

**Table 1**: Zeolite syntheses and properties

| | | Sample: | A | B | C | D | E | F | G | H | I | J | K | L |
|---|---|---|---|---|---|---|---|---|---|---|---|---|---|---|
| Composition Properties | | Al source* | AIP | AIP | AIP | AH | AH | AIP | AIP | AH | NaY | NaY | AH | AH |
| | | R2* | -- | CuT | CuT | -- | -- | -- | CuT | -- | -- | -- | -- | -- |
| | | Fluoride source(s) | -- | -- | -- | -- | -- | NaF | NaF | NaF, R1F | NaF | R1F | NaF | NaF |
| | | $SiO_2/Al_2O_3$ | 20 | 19.8 | 19.8 | 19.9 | 30 | 19.9 | 19.8 | 19.9 | 35.3 | 34.4 | 39.9 | 30.0 |
| | | Na/Si | 0.13 | 0.13 | 0.20 | 0.35 | 0.25 | 0.35 | 0.20 | 0.35 | 0.84 | 0.79 | 0.25 | 0.25 |
| | | R1#/Si | 0.07 | 0.12 | 0.12 | 0.20 | 0.20 | 0.20 | 0.12 | 0.20 | 0.09 | 0.03 | 0.20 | 0.20 |
| | | R2/Si | -- | 0.03 | 0.03 | -- | -- | -- | 0.03 | -- | -- | -- | -- | -- |
| | | OH/Si | 0.20 | 0.21 | 0.15 | 0.30 | 0.20 | 0.18 | 0.15 | 0.30 | 0.52 | 0.65 | 0.35 | 0.20 |
| | | F/Si | -- | -- | -- | -- | -- | 0.37 | 0.13 | 0.25 | 0.13 | 0.03 | 0.10 | 0.25 |
| | | $H_2O/Si$ | 10.6 | 10.7 | 10.9 | 14.8 | 44.1 | 14.5 | 10.9 | 14.8 | 16.6 | 33.3 | 44.1 | 44.1 |
| Thermal Treatment | | Time (h) | 30 | 30 | 30 | 72 | 72 | 72 | 30 | 72 | 72 | 72 | 72 | 72 |
| | | Temperature (ºC) | 170 | 170 | 170 | 170 | 170 | 170 | 170 | 170 | 140 | 140 | 170 | 170 |
| Properties | | ZSA ($m^2$/g) | 512 | 548 | N.A. | 543 | 590 | 552 | 549 | 529 | 569 | 540 | 539 | 592 |
| | | MSA ($m^2$/g) | 43 | 28 | N.A. | 37 | 36 | 37 | 24 | 43 | 19 | 7 | 49 | 32 |

*AIP:    Aluminum    isopropoxide,    AH:    Aluminum    hydroxide,    CuT:
Copper-tetraethylenepentamine complex

#: R1 was Trimethyl adamantammonium for all materials; N.A. = Not Applicable

**Table 2**: Zeolite fluoride content

| | | Fluoride content (ppm) of | | | |
|---|---|---|---|---|---|
| Sample | $SiO_2/Al_2O_3$ | As-made zeolite | Na-form zeolite | H-form zeolite | Final catalyst |
| A | 19.4 | N.A. | N.A. | N.A. | N.A. |
| B | 20.1 | N.A. | N.A. | N.A. | N.A. |
| C | N.A. | N.A. | N.A. | N.A. | N.A. |

(continued)

| | | Fluoride content (ppm) of | | | |
|---|---|---|---|---|---|
| Sample | SiO$_2$/Al$_2$O$_3$ | As-made zeolite | Na-form zeolite | H-form zeolite | Final catalyst |
| D | 16.4 | N.A. | N.A. | N.A. | N.A. |
| E | 28.4 | N.A. | N.A. | N.A. | N.A. |
| F | 17.5 | - | - | 917 | - |
| G | 20.2 | - | 484 | 269 | 208 |
| H | 16.9 | 678 | - | - | 41 |
| I | 19.7 | - | 72 | - | - |
| J | 14.1 | - | - | 68 | - |
| K | 30.8 | 399 | 277 | - | - |
| L | 26.6 | - | - | - | - |

N.A. = Not Applicable; "--" denotes no data.

*averaged results from 2 measurements Na-forms of zeolites of the disclosure were obtained by calcination of as-made zeolites at 540 °C for 6 h in an atmosphere of air.

H-forms of zeolites were obtained as follows. First, a Na-form zeolite was added to a 27 wt% solution of ammonium nitrate and stirred for 1 h at 80 °C. The ratio of the weight of ammonium nitrate solution to the weight of zeolite powder added was 8:1. Second, the mixture was allowed to cool and then filtered. Third, the filter cake was washed with deionized water until the conductivity of the wash water was less than 200 $\mu$S and was then dried at 90 °C overnight. Fourth, Na$_2$O content was analyzed by inductively coupled plasma mass spectrometry analysis. If Na$_2$O content was not less than 500 ppm, the first through fourth steps of the above procedure were repeated. Fifth, the dried powder was calcined in the presence of air at 450 °C for 6 h.

Samples B and G were tested for SCR activity on cores according to the following procedure. First, a copper ion-exchanged zeolite was prepared by an in-situ ion exchange (ISIE) from the H-form of a zeolite having the chabazite (CHA) framework and a silica-to-alumina ratio (SAR) of 18. The H-form CHA zeolite (90.73 g) was slurried with 4.28 g of CuO and 16.67 g of a zirconium acetate aqueous solution containing 30% zirconium oxide. The mixture was milled to a target d$_{90}$ for particle size ranging from 4 $\mu$m to 10 $\mu$m, and the slurry was mixed for 24 h at room temperature to allow copper ion exchange into the zeolite framework. The copper loading was 4.5% measured as CuO and based on the total weight of the zeolite. Second, the slurry was coated onto a cordierite substrate (cellular ceramic monolith having a cell density of 400 cpsi and a wall thickness of 6 mil), followed by drying at 130 °C and calcination at 550 °C for 1 h. Third, the samples were hydrothermally aged at 800 °C for 16 h (800 °C/16 h) in the presence of 10% steam before testing. Fourth, NO$_x$ conversions and N$_2$O selectivity were measured at a gas hourly volume-based space velocity of 80,000 h$^{-1}$ under pseudo-steady state conditions in a gas mixture of 500 ppm NO, 525 ppm NH$_3$, 10% O$_2$, 10% H$_2$O, balance N$_2$ in a temperature range from 200 °C to 600 °C.

NO$_x$ conversion was reported as mole percent and measured as NO and NO$_2$. N$_2$O selectivity was reported by mole percent and calculated as:

$$\text{N}_2\text{O Selectivity (\%)} = \frac{\text{N}_2\text{O} \div 2 \times 100\%}{(\text{NO} + \text{NO}_2 + \text{NH}_3)_{\text{inlet}} - (\text{NO} + \text{NO}_2 - \text{NH}_3 + \text{N}_2\text{O} \div 2)_{\text{outlet}}}$$

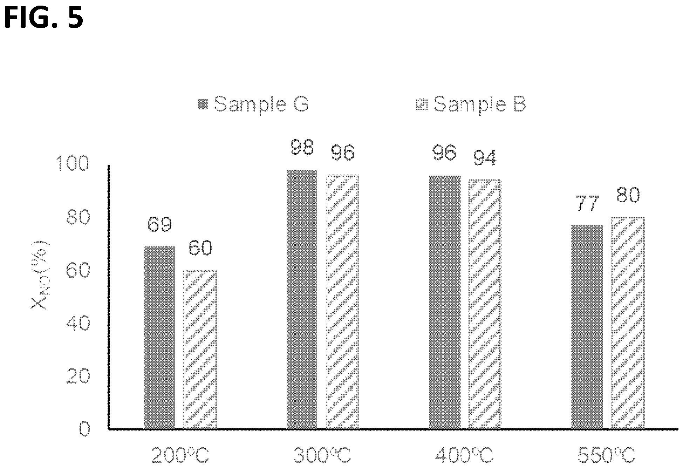

Test results are reported in FIG. 5. Sample G demonstrated better performance than sample B at lower temperatures under the test conditions.

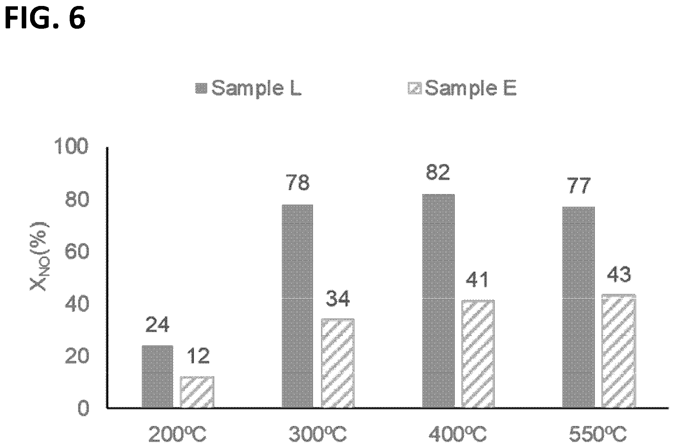

Samples E and L were tested according to the same procedure used for samples B and G, except the CuO loading was at a Cu/Al ratio of 0.45 for both sample E and sample L, and the aging conditions for samples E and L were 850 °C/16 h instead of 800 °C/16 h (as used for samples B and G). FIG. 6 depicts the test results for samples E and L.

**Claims**

1. A method of preparing a small-pore zeolite comprising subjecting a composition to a thermal treatment at a pH of at least 8.5, wherein the composition comprises at least one aluminum source, at least one silica source, at least one fluoride source, and at least one organic structure directing agent.

2. A method of preparing a small-pore zeolite comprising subjecting a composition to a thermal treatment, wherein the composition comprises at least one aluminum source, at least one silica source, at least one fluoride source, and at least one organic structure directing agent, and further wherein the mole ratio of OH to Si in the composition is at least 0.1.

3. The method of claim 2, wherein the thermal treatment is performed at a pH of at least 8.5.

4. The method of claim 1 or 3, wherein the pH ranges from 10.5 to 13.5.

5. The method of any one of claims 1 to 4, wherein the mole ratio of OH to Si in the composition ranges from 0.1 to 0.35.

6. The method of any one of claims 1 to 5, wherein the mole ratio of F to Si in the composition ranges from 0.1 to 0.3.

7. The method of any one of claims 1 to 6, wherein the composition further comprises at least one copper source.

8. The method of claim 7, wherein the small-pore zeolite comprises copper.

9. The method of any one of claims 1 to 8, wherein the small-pore zeolite is **characterized by** a chabazite structure.

10. A small-pore zeolite comprising aluminum, silicon, and fluoride, wherein the small-pore zeolite is **characterized by** an average crystallite size of less than 3 $\mu$m.

11. A small-pore zeolite comprising aluminum, silicon, and fluoride, wherein the small-pore zeolite is **characterized by** a fluoride content ranging from 40 ppm to 225 ppm.

12. The small-pore zeolite of claim 10 or 11, wherein the small-pore zeolite is further **characterized by** a mole ratio of $SiO_2$ to $Al_2O_3$ of less than 22.5.

13. The small-pore zeolite of any one of claims 10 to 12, wherein the small-pore zeolite is further **characterized by** a matrix surface area less than 35 m$^2$/g.

14. The small-pore zeolite of any one of claims 10 to 13, wherein the small-pore zeolite is further **characterized by** a chabazite structure.

15. The small-pore zeolite of any one of claims 10 to 14, wherein the small-pore zeolite further comprises copper.

16. A method of reducing nitrogen oxides (NOx) comprising contacting a gaseous stream containing nitrogen oxides with at least one zeolite of claim 15 at a temperature ranging from 200 °C to 550 °C.

# FIG. 1A

# FIG. 1B

**FIG. 2**

# FIG. 3A

# FIG. 3B

# FIG. 4A

# FIG. 4B

**FIG. 5**

## FIG. 6

Europäisches
Patentamt
European
Patent Office
Office européen
des brevets

# EUROPEAN SEARCH REPORT

Application Number

EP 20 21 7455

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/271596 A1 (MARIN MANUEL MOLINER [ES] ET AL) 22 September 2016 (2016-09-22) * paragraphs [0015] - [0029]; claims; figures; examples 8,9; tables * | 1-16 | INV.<br>B01J23/72<br>B01J27/12<br>B01J29/76<br>B01J35/00 |
| X | WANG XIAOHUA ET AL: "Strategy on Effective Synthesis of SSZ-13 Zeolite Aiming at Outstanding Performances for NH-SCR Process", CATALYSIS SURVEYS FROM ASIA, SPRINGER US, BOSTON, vol. 24, no. 2, 10 March 2020 (2020-03-10), pages 143-155, XP037111688, ISSN: 1571-1013, DOI: 10.1007/S10563-020-09300-W [retrieved on 2020-03-10] * 2 experimental section, 3 results and discussion; figures; tables * | 1-16 | B01J37/00<br>B01J37/03<br>B01J37/10 |
| X | DANG LONG V ET AL: "Hydrothermal synthesis of alkali-free chabazite zeolites", JOURNAL OF POROUS MATERIALS, SPRINGER, DORDRECHT, NL, vol. 27, no. 5, 19 June 2020 (2020-06-19), pages 1481-1489, XP037223992, ISSN: 1380-2224, DOI: 10.1007/S10934-020-00923-Y [retrieved on 2020-06-19] * 2 experimental methods, 3 results and discussion; figures; tables * | 1-6, 10-14 | TECHNICAL FIELDS SEARCHED (IPC)<br><br>B01J |

The present search report has been drawn up for all claims

| Place of search | Date of completion of the search | Examiner |
|---|---|---|
| Munich | 1 June 2021 | de Cauwer, Robby |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 21 7455

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2021

| Patent document cited in search report | | | Publication date | Patent family member(s) | | | Publication date |
|---|---|---|---|---|---|---|---|
| US 2016271596 | A1 | | 22-09-2016 | BR | 112015013822 | A2 | 11-07-2017 |
| | | | | CA | 2887542 | A1 | 19-06-2014 |
| | | | | CL | 2015001570 | A1 | 09-10-2015 |
| | | | | CN | 104812469 | A | 29-07-2015 |
| | | | | EP | 2931406 | A1 | 21-10-2015 |
| | | | | ES | 2739650 | T3 | 03-02-2020 |
| | | | | JP | 6239001 | B2 | 29-11-2017 |
| | | | | JP | 2016506353 | A | 03-03-2016 |
| | | | | KR | 20150093664 | A | 18-08-2015 |
| | | | | PL | 2931406 | T3 | 31-03-2020 |
| | | | | RU | 2015127895 | A | 18-01-2017 |
| | | | | US | 2016271596 | A1 | 22-09-2016 |
| | | | | WO | 2014090698 | A1 | 19-06-2014 |
| | | | | ZA | 201503125 | B | 25-09-2019 |

EPO FORM P0459

For more details about this annex : see Official Journal of the European Patent Office, No. 12/82